(19) Europäisches Patentamt
European Patent Office
Office européen des brevets

(11) **EP 4 385 328 A1**

(12) **EUROPEAN PATENT APPLICATION**

(43) Date of publication:
**19.06.2024 Bulletin 2024/25**

(21) Application number: **22213898.4**

(22) Date of filing: **15.12.2022**

(51) International Patent Classification (IPC):
***A01N 35/02*** *(2006.01)* ***A01N 35/04*** *(2006.01)*
***A01N 39/00*** *(2006.01)* ***A01N 31/16*** *(2006.01)*
***A01N 35/08*** *(2006.01)* ***A01N 31/04*** *(2006.01)*
***A01N 43/66*** *(2006.01)* ***A01N 37/10*** *(2006.01)*
***A01N 37/06*** *(2006.01)* ***A01N 47/12*** *(2006.01)*
***A01N 43/40*** *(2006.01)* ***A01N 37/34*** *(2006.01)*
***A01N 33/04*** *(2006.01)* ***A01N 57/20*** *(2006.01)*
***A01N 37/08*** *(2006.01)* ***A01P 1/00*** *(2006.01)*
***A01P 3/00*** *(2006.01)*

(52) Cooperative Patent Classification (CPC):
(C-Sets available)
**A01N 35/02; A01N 35/04; A01P 1/00; A01P 3/00**

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BASF SE**
**67056 Ludwigshafen am Rhein (DE)**

(72) Inventors:
- **ROHWER, Hauke**
  **79639 Grenzach-Whylen (DE)**
- **WIETHAN, Juergen**
  **79639 Grenzach-Whylen (DE)**

(74) Representative: **Meissner Bolte Partnerschaft mbB**
**Widenmayerstraße 47**
**80538 München (DE)**

(54) **ALPHA-HYDROXYKETONES FOR ENHANCING THE ACTIVITY OF ANTIMICROBIAL AGENTS**

(57) The present invention relates to the use of an α-hydroxyketone of the formula (I)

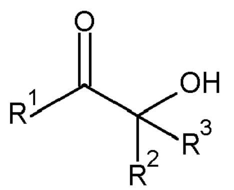

(I)

where the variables are as defined in the claims and the description, for enhancing the antimicrobial activity of an antimicrobial agent as defined in the claims and the description and to a method for enhancing the antimicrobial activity of said antimicrobial agent comprising using the antimicrobial agent in combination with said α-hydroxyketone (I); to the use of a mixture containing said α-hydroxyketone (I) and said antimicrobial agent for combating microbes, and to certain compositions and mixtures comprising said antimicrobial agent and said α-hydroxyketone (I).

EP 4 385 328 A1

(52) Cooperative Patent Classification (CPC): (Cont.)

C-Sets
**A01N 35/02, A01N 31/04, A01N 31/16,
A01N 33/04, A01N 35/08, A01N 37/06,
A01N 37/08, A01N 37/10, A01N 37/34,
A01N 39/00, A01N 43/40, A01N 43/66,
A01N 47/12, A01N 57/20;
A01N 35/04, A01N 31/04, A01N 31/16,
A01N 33/04, A01N 35/08, A01N 37/06,
A01N 37/08, A01N 37/10, A01N 37/34,
A01N 39/00, A01N 43/40, A01N 43/66,
A01N 47/12, A01N 57/20**

## Description

The present invention relates to the use of an α-hydroxyketone of the formula (I) as defined below for enhancing the antimicrobial activity of an antimicrobial agent as defined below and to a method for enhancing the antimicrobial activity of said antimicrobial agent comprising using the antimicrobial agent in combination with said α-hydroxyketone (I); to the use of a mixture containing said α-hydroxyketone (I) and said antimicrobial agent for combating microbes, and to certain compositions and mixtures comprising said antimicrobial agent and said α-hydroxyketone (I).

TECHNICAL BACKGROUND

Antimicrobial agents, like those listed below, are well established preservatives or biocides in a vast range of application areas. A number of products and materials is susceptible to microbial attack or degradation, which attack not only reduces the economic value of such products or materials, but may even pose a health hazard for the user. Microbial degradation in aqueous systems can become manifest in many forms, such as loss of viscosity, emulsion breaking, change of pH, color change, unpleasant odor, fouling, gas formation, slime formation, to name just a few and easily identifiable indicators. Some of these manifestation also occur in non-aqueous systems, e.g. fouling in fuels, heating oils, crude oils and the like. Antimicrobial agents are either incorporated into susceptible products or materials to preserve them, or are used as such or in suitable formulations to treat infected products or materials. Examples for products, materials and formulations containing antimicrobial agents are homecare compositions and articles, compositions and articles for cleaning or disinfecting on an industrial scale, personal care compositions and articles, process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide, leather, textiles, lumber, or paper or the precursor materials thereof during papermaking processes; crop protection compositions; pharmaceutical compositions; paints, glues, adhesives, sealants, dyes, pigments and dispersions thereof, inks and the like.

However, some established antimicrobial agents have been found to cause health risks. For instance, formaldehyde-releasing antimicrobials have lost acceptance because formaldehyde is classified as carcinogenic, mutagenic and as having reproductive toxicity. Halogenated organic antimicrobials, too, have lost ground because they exhibit a certain level of toxic effects, especially when combined with certain other ingredients usually present in the compositions which they are to preserve.

The remaining antimicrobials which are not or at least less hazardous, like 2-phenoxyethanol, are often not very effective and need to be used in rather high concentrations to achieve an acceptable antimicrobial effect. In many applications, high concentrations are however not acceptable; for instance because of formulation issues or malodour or because beyond a certain concentration these products become hazardous, too. Moreover, under certain circumstances even high concentrations fail to give the desired effect.

Therefore, at least in certain applications it is not yet possible to renounce completely more hazardous, but very effective antimicrobials. It is however desired to reduce their amount to a minimum.

Altogether it is desirable to reduce the amount of antimicrobials, since intrinsically all of them pose a certain, albeit small, health or environmental risk (otherwise they wouldn't have an antimicrobial effect), but at the same time the desired antimicrobial effect should not be compromised.

Accordingly, there is a need to improve the effect of antimicrobials. Specifically, in case of non- or less hazardous, but less effective antimicrobials, it is desired to boost their effect so that they can be applied in low or at least reasonable concentrations. In the specific case of more hazardous, but efficacious antimicrobials, it is desired to boost their effect so that their concentrations can be minimized to an extent which makes their application acceptable.

EP-A-2473152 relates to hair dyeing compositions comprising a hydrophobic dye and a ketone which can be inter alia an α-hydroxyketone. Some example compositions contain, alongside one or more dyes, acetoine or benzoine as ketone compounds and moreover benzyl alcohol.

WO 2018/017390 relates to hair straightening or hair styling compositions containing at least one lactone optionally in combination with a hydroxy ketone; two specific hybrid graft polymers, a base and a carrier. One of the example compositions, which is a hair straightening formulation, comprises inter alia hydroxyacetone and phenoxyethanol.

WO 2017/096015 relates to hair straightening or hair styling compositions containing at least one lactone, a base, a diol, polyol or sugar, and a carrier. One of the example compositions, which is a hair straightening formulation, comprises inter alia hydroxyacetone and phenoxyethanol.

WO 2017/096005 relates to hair straightening or hair styling compositions containing at least one hydroxy ketone or dihydroxy ketone, a base, and a carrier. Some of the example compositions, which are hair straightening or styling formulations, comprise inter alia hydroxyacetone or 1-hydroxy-2-butanone and phenoxyethanol.

FR 2949339, FR 2949335, FR 2949334 and FR 2949333 relate to hair dyeing compositions containing inter

alia a hydrophobic direct dye and a ketone. Some of the example hair dyeing compositions comprise inter alia benzyl alcohol and benzoine or acetoine.

Such compositions are not encompassed in the present applicatiion. Moreover, an effect of the respective α-hydroxyketones on the disinfectant or preserving activity of phenoxyethanol or benzyl alcohol is not mentioned.

SUMMARY OF THE INVENTION

The object of the present invention was to improve the effect of certain antimicrobials, in particular their preservative and/or biocidal effect.

The inventors of the present invention found that α-hydroxyketones of the formula (I) as defined below improve the preservative and/or biocidal effect of certain antimicrobials.

The present invention therefore relates to the use of an α-hydroxyketone of the formula (I)

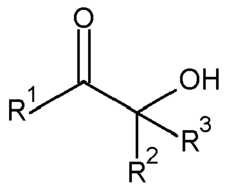

(I)

wherein

$R^1$ is $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy; and

$R^2$ and $R^3$, independently of each other, are hydrogen, $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy;

for enhancing the antimicrobial, preferably the preserving, activity of an antimicrobial agent selected from the group consisting of 2-phenoxyethanol, phenoxyisopropanol, 4,4'-dichloro 2'-hydroxydiphenylether, 2-bromo-2-nitropropane-1,3-diol, glutaraldehyde, 2,4-dichlorobenzylalcohol, 1,3,5-tris-(2-hydroxyethyl)-1,3,5-hexahydrotriazine, formic acid and salts thereof, benzoic acid and salts thereof, sorbic acid and salts thereof, lactic acid and salts thereof, isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT), and 2-butyl-benzo[d]isothiazol-3-one (BBIT); 3-iodo-2-propynylbutylcarbamate (IPBC), benzyl alcohol, pyridine-2-thiol 1-oxide and salts thereof; 2,2-dibromo-2-cyanoacetamide (DBNPA), N-(3-aminopropyl)-N-dodecylpropane-1,3-diamine (Diamine), tetrakis(hydroxymethyl)phosphonium sulphate(2:1) (THPS), 2,2-dithiobis[N-methylbenzamide] (DTBMA), 2-bromo-2-(bromomethyl)pentanedinitril (DBDCB); and mixtures thereof.

The invention relates also to a method for enhancing the antimicrobial, in particular the preserving, activity of the antimicrobial agent as defined above or below, comprising using said antimicrobial agent in combination with the α-hydroxyketone (I).

The invention relates moreover to the use of a mixture comprising

(a) at least one (generally 1, 2 or 3, preferably 1 or 2, specifically 1) antimicrobial agent selected from the group consisting of 2-phenoxyethanol, phenoxyisopropanol, 4,4'-dichloro 2'-hydroxydiphenylether, 2-bromo-2-nitropropane-1,3-diol, glutaraldehyde, 2,4-dichlorobenzylalcohol, 1,3,5-tris-(2-hydroxyethyl)-1,3,5-hexahydrotriazine, formic acid and salts thereof, benzoic acid and salts thereof, sorbic acid and salts thereof, lactic acid and salts thereof, isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT), and 2-butyl-benzo[d]isothiazol-3-one (BBIT); 3-iodo-2-propynylbutylcarbamate (IPBC), benzyl alcohol, pyridine-2-thiol 1-oxide and salts thereof; 2,2-dibromo-2-cyanoacetamide (DBNPA), N-(3-aminopropyl)-N-dodecylpropane-1,3-diamine (Diamine), tetrakis(hydroxymethyl)phosphonium sulphate(2:1) (THPS), 2,2-dithiobis[N-methylbenzamide] (DTBMA), 2-bromo-2-(bromomethyl)pentanedinitril (DBDCB); and mixtures thereof; and

(b) at least one (generally 1, 2 or 3, preferably 1 or 2, specifically 1) α-hydroxyketone of the formula (I)

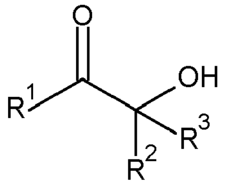

(I)

wherein

| | |
|---|---|
| $R^1$ | is $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy; and |
| $R^2$ and $R^3$, | independently of each other, are hydrogen, $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy; |

for combating microbes; preferably as a preservative.

The invention relates also to a method for combating microbes, comprising applying said antimicrobial agent in combination with the α-hydroxyketone (I) to a composition, surface, area or space in or on which microbes are to be combated.

The invention relates furthermore to a composition A comprising

(a) at least one (generally 1, 2 or 3, preferably 1 or 2, specifically 1) antimicrobial agent as defined above or below; and
(b) at least one (generally 1, 2 or 3, preferably 1 or 2, specifically 1) α-hydroxyketone of the formula (I) as defined above or below;

except for hair dyeing, hair straightening and hair styling compositions which comprise 2-phenoxyethanol and hydroxyacetone; or 2-phenoxyethanol and 1-hydroxy-2-butanone; or benzyl alcohol and acetoine; or benzyl alcohol and benzoine; in particular except for compositions (in general) which comprise 2-phenoxyethanol and hydroxyacetone; or which comprise 2-phenoxyethanol and 1-hydroxy-2-butanone; or which comprise benzyl alcohol and acetoine; or which comprise benzyl alcohol and benzoine.

The invention relates also to a composition B which is a homecare composition or a composition for cleaning or disinfecting on an industrial scale (I&I composition) comprising

(a) 0.001 to 7% by weight, relative to the total weight of the composition, of at least one (generally 1, 2 or 3, preferably 1 or 2, specifically 1) antimicrobial agent as defined above or below;
(b) 0.001 to 10% by weight, relative to the total weight of the composition, of at least one (generally 1, 2 or 3, preferably 1 or 2, specifically 1) α-hydroxyketone of the formula (I) or a mixture of different α-hydroxyketone of the formula (I) as defined above or below;
(c) 0.1 to 40% by weight, relative to the total weight of the composition, of at least one surfactant;
(d) 0 to 15% by weight, relative to the total weight of the composition, of at least one (generally 1, 2 or 3, preferably 1 or 2, specifically 1) organic solvent;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of at least one further additive; and
(i) 10 to 99.998% by weight, relative to the total weight of the composition, of water;

where components (a) to (i) add to 100% by weight.

The invention relates also to a mixture consisting of

(a) at least one (generally 1, 2 or 3, preferably 1 or 2, specifically 1) antimicrobial agent as defined above or below;
(b) at least one (generally 1, 2 or 3, preferably 1 or 2, specifically 1) α-hydroxyketone of the formula (I) as defined above or below; and
(c) optionally at least one (generally 1, 2 or 3, preferably 1 or 2, specifically 1) solvent.

DETAILED DESCRIPTION OF THE INVENTION

Definitions

An antimicrobial agent or short antimicrobial is an agent that combats or controls microbes. Unless specified otherwise, in terms of the present invention, the expressions "microbicide" and "biocide" are used as synonyms for antimicrobials.

Microbes in the terms of the present invention are undesired harmful microorganisms and comprise bacteria, fungi (including yeasts and molds), microscopic algae, protozoans and, despite the fact that they are generally not considered as living beings, also viruses.

An antimicrobial effect encompasses a preservative as well as a biocidal effect. Preservative or preserving effect in terms of the present invention means that the material or product as such comprising an antimicrobial agent is protected against deterioration by microbial attack. As a consequence, the thusly protected material or product has for example a longer storage stability. Just by way of example, an antimicrobial is used in a laundry detergent composition as a preservative to keep the composition storage-stable by avoiding or reducing the proliferation or growth of microbes present therein and thus avoiding or reducing the deterioration of the properties of the composition, such as the formation of malodours, a change in viscosity or pH, a phase separation etc. Biocidal effect in terms of the present invention means that the composition comprising an antimicrobial agent exerts its antimicrobial effect on a product or material treated with and different from this composition. To stay with the example of a laundry detergent composition containing an antimicrobial, this composition exerts a biocidal effect in terms of the present invention if microorganisms on or in laundry treated therewith are killed or hampered in their proliferation or growth by the application of said composition. Another example of a biocidal application is a disinfectant or sanitizer composition which exerts its biocidal effect on materials or products treated therewith. The biocidal effect has to be fast, since microbes on or in the treated materials or products have to be eliminated or reduced within seconds or minutes, whereas the preservative effect is a long-term effect, since it has to prevail throughout the shelf-life of the product, which can be years. Many antimicrobials have both a preservative and a biocidal effect, the prevalence depending mainly on the concentration of the antimicrobial in the composition.

Phenoxyisopropanol is 1-phenoxy-propan-2-ol. Commercially available phenoxyisopropanol may however also contain minor amounts (i.e. up to 5% by weight) of the isomeric 2-phenoxy-propan-2-ol; such mixtures also fall under the term "phenoxyisopropanol" as used in context of the present invention. Phenoxyisopropanol contains a stereogenic center and can thus be present in form of the essentially pure S enantiomer, the essentially pure R enantiomer and mixtures of the two enantiomers, including racemic mixtures. The present invention encompasses both the use of the essentially pure enantiomers and of mixtures of the two enantiomers, including racemic mixtures. Generally, however, the racemate is used, since this is the commercially most common form thereof.

Hydroxyacetone is 1-hydroxypropan-2-one (compound (I) wherein $R^1$ is methyl; $R^2$ and $R^3$ are hydrogen).

Acetoin is 3-hydroxy-butan-2-one (compound (I) wherein $R^1$ and $R^2$ are methyl, $R^3$ is hydrogen).

Propioin is 4-hydroxyhexan-3-one (compound (I) wherein $R^1$ and $R^2$ are ethyl, $R^3$ is hydrogen).

2-Hydroxyacetophenone is 2-hydroxy-1-phenylethan-1-one (compound (I) wherein $R^1$ is phenyl; $R^2$ and $R^3$ are hydrogen). This must not be confounded with 2'-hydroxyacetophenone, where the hydroxyl group is bound on the phenyl ring. Benzoin is 2-hydroxy-1,2-diphenylethanone (compound (I) wherein $R^1$ and $R^2$ are phenyl, $R^3$ is hydrogen).

The term "halogen" denotes in each case fluorine, bromine, chlorine or iodine, in particular fluorine, chlorine or bromine.

The term "alkyl" refers to saturated straight-chain (linear) or branched hydrocarbon radicals having x to y ("$C_x$-$C_y$-alkyl") carbon atoms. $C_1$-$C_2$-Alkyl denotes a saturated linear or branched aliphatic radical with 1 or 2 carbon atoms. Examples are methyl and ethyl. $C_1$-$C_4$-Alkyl denotes a saturated linear or branched aliphatic radical with 1 to 4 carbon atoms. Examples are methyl, ethyl, n-propyl, isopropyl, n-butyl, sec-butyl, isobutyl and tert-butyl.

The term "$C_1$-$C_4$-haloalkyl" as used herein denotes in each case a straight-chain or branched alkyl group having usually from 1 to 4 carbon atoms, more frequently 1 or 2 carbon atoms (= $C_1$-$C_2$-haloalkyl), as defined above, wherein the hydrogen atoms of this group are partially or totally replaced with halogen atoms. Examples for $C_1$-$C_2$-haloalkyl are fluoromethyl, difluoromethyl, trifluoromethyl, chloromethyl, dichloromethyl, trichloromethyl, chlorofluoromethyl, dichlorofluoromethyl, chlorodifluoromethyl, bromomethyl, 1-fluoroethyl, 2-fluoroethyl, 2,2-difluoroethyl, 2,2,2-trifluoroethyl, pentafluoroethyl, 1-chloroethyl, 2-chloroethyl, 2,2,-dichloroethyl, 2,2,2-trichloroethyl, 2-chloro-2-fluoroethyl, 2-chloro-2,2-difluoroethyl, 2,2-dichloro-2-fluoroethyl, 1-bromoethyl, and the like. Examples for $C_1$-$C_4$-haloalkyl are, in addition to those mentioned for $C_1$-$C_2$-haloalkyl, 1-fluoropropyl, 2-fluoropropyl, 3-fluoropropyl, 3,3-difluoropropyl, 3,3,3-trifluoropropyl, heptafluoropropyl, 1,1,1-trifluoroprop-2-yl, 3-chloropropyl, and the like.

The term "$C_1$-$C_4$-alkoxy" refers to a $C_1$-$C_4$-alkyl group, as defined above, attached via an oxygen atom to the remainder of the molecule. Examples are methoxy, ethoxy, n-propoxy, 1-methylethoxy (isopropoxy), n-butoxy, 1-methylpropoxy (sec-butoxy), 2-methylpropoxy (isobutoxy) or 1,1-dimethylethoxy (tert-butoxy).

The term "$C_1$-$C_4$-haloalkoxy" as used herein denotes in each case a straight-chain or branched alkoxy group,

as defined above, having from 1 to 4 carbon atoms, wherein the hydrogen atoms of this group are partially or totally replaced with halogen atoms, in particular fluorine atoms. $C_1$-$C_4$-Haloalkoxy is, for example, $OCH_2F$, $OCHF_2$, $OCF_3$, $OCH_2Cl$, $OCHCl_2$, $OCCl_3$, chlorofluoromethoxy, dichlorofluoromethoxy, chlorodifluoromethoxy, 2-fluoroethoxy, 2-chloroethoxy, 2-bromoethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, $OC_2F_5$, 2-fluoropropoxy, 3-fluoropropoxy, 2,2-difluoropropoxy, 2,3-difluoropropoxy, 2-chloropropoxy, 3-chloropropoxy, 2,3-dichloropropoxy, 2-bromopropoxy, 3-bromopropoxy, 3,3,3-trifluoropropoxy, 3,3,3-trichloropropoxy, $OCH_2$-$C_2F_5$, $OCF_2$-$C_2F_5$, 1-($CH_2F$)-2-fluoroethoxy, 1-($CH_2Cl$)-2-chloroethoxy, 1-($CH_2Br$)-2-bromoethoxy, 4-fluorobutoxy, 4-chlorobutoxy, 4-bromobutoxy or nonafluorobutoxy.

Embodiments (E.x) of the invention

General and preferred embodiments E.x are summarized in the following, non-exhaustive list. Further preferred embodiments become apparent from the paragraphs following this list.

E.1. The use of an $\alpha$-hydroxyketone of the formula (I)

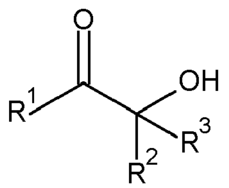

(I)

wherein

- $R^1$ is $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy; and
- $R^2$ and $R^3$, independently of each other, are hydrogen, $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy;

for enhancing the antimicrobial, preferably the preserving, activity of an antimicrobial agent selected from the group consisting of 2-phenoxyethanol, phenoxyisopropanol, 4,4'-dichloro 2'-hydroxydiphenylether, 2-bromo-2-nitropropane-1,3-diol, glutaraldehyde, 2,4-dichlorobenzylalcohol, 1,3,5-tris-(2-hydroxyethyl)-1,3,5-hexahydrotriazine, formic acid and salts thereof, benzoic acid and salts thereof, sorbic acid and salts thereof, lactic acid and salts thereof, isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT), and 2-butyl-benzo[d]isothiazol-3-one (BBIT); 3-iodo-2-propynylbutylcarbamate (IPBC), benzyl alcohol, pyridine-2-thiol 1-oxide and salts thereof; 2,2-dibromo-2-cyanoacetamide (DBNPA), N-(3-aminopropyl)-N-dodecylpropane-1,3-diamine (Diamine), tetrakis(hydroxymethyl)phosphonium sulphate(2:1) (THPS), 2,2-dithiobis[N-methylbenzamide] (DTBMA), 2-bromo-2-(bromomethyl)pentanedinitril (DBDCB); and mixtures thereof.

E.2. The use according to embodiment E.1, for enhancing the preserving activity of the antimicrobial agent.

E.3. The use of a mixture comprising

(a) at least one antimicrobial agent selected from the group consisting of 2-phenoxyethanol, phenoxyisopropanol, 4,4'-dichloro 2'-hydroxydiphenylether, 2-bromo-2-nitropropane-1,3-diol, glutaraldehyde, 2,4-dichlorobenzylalcohol, 1,3,5-tris-(2-hydroxyethyl)-1,3,5-hexahydrotriazine, formic acid and salts thereof, benzoic acid and salts thereof, sorbic acid and salts thereof, lactic acid and salts thereof, isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT), and 2-butylbenzo[d]isothiazol-3-one (BBIT); 3-iodo-2-propynylbutylcarbamate (IPBC), benzyl alcohol, pyridine-2-thiol 1-oxide and salts thereof; 2,2-dibromo-2-cyanoacetamide (DBNPA), N-(3-aminopropyl)-N-dodecylpropane-1,3-diamine (Diamine), tetrakis(hydroxymethyl)phosphonium sulphate(2:1) (THPS), 2,2-dithiobis[N-methylbenzamide] (DTBMA), 2-bromo-2-(bromomethyl)pentanedinitril (DBDCB); and mixtures thereof; and

(b) at least one $\alpha$-hydroxyketone of the formula (I)

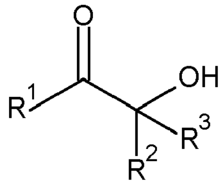

(I)

wherein

$R^1$ is $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy; and

$R^2$ and $R^3$, independently of each other, are hydrogen, $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy;

for combating microbes.

E.4. The use of the mixture according to embodiment E.3, as a preservative.

E.5. The use according to any of the preceding embodiments, where the antimicrobial agent is selected from the group consisting of 2-phenoxyethanol, phenoxyisopropanol, 4,4'-dichloro 2'-hydroxydiphenylether, 2-bromo-2-nitropropane-1,3-diol and isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT) and 2-butyl-benzo[d]isothiazol-3-one (BBIT).

E.6. The use according to embodiment E.5, where the antimicrobial agent is selected from the group consisting of 2-phenoxyethanol, phenoxyisopropanol, 4,4'-dichloro 2'-hydroxydiphenylether, 2-bromo-2-nitropropane-1 ,3-diol and 1,2-benzisothiazol-3(2H)one (BIT).

E.7. The use according to embodiment E.6, where the antimicrobial agent is selected from the group consisting of 2-phenoxyethanol, 4,4'-dichloro 2'-hydroxydiphenylether and 1,2-benzisothiazol-3(2H)one (BIT).

E.8. The use according to embodiment E.7, where the antimicrobial agent is 2-phenoxyethanol.

E.9. The use according to any of the preceding embodiments, where in the $\alpha$-hydroxyketone of the formula (I)

$R^1$ is $C_1$-$C_4$-alkyl or phenyl;
$R^2$ is hydrogen, $C_1$-$C_4$-alkyl or phenyl; and
$R^3$ is hydrogen or $C_1$-$C_4$-alkyl.

E.10. The use according to embodiment E.9, where in the $\alpha$-hydroxyketone of the formula (I)

$R^1$ is $C_1$-$C_4$-alkyl or phenyl;
$R^2$ is hydrogen or $C_1$-$C_4$-alkyl; and
$R^3$ is hydrogen or $C_1$-$C_4$-alkyl.

E.11. The use according to embodiment E.10, where in the $\alpha$-hydroxyketone of the formula (I)

$R^1$ is $C_1$-$C_2$-alkyl or phenyl;
$R^2$ is hydrogen or $C_1$-$C_2$-alkyl; and
$R^3$ is hydrogen or $C_1$-$C_2$-alkyl.

E.12. The use according to embodiment E.11, where

$R^1$ is $C_1$-$C_2$-alkyl or phenyl;
$R^2$ is hydrogen or $C_1$-$C_2$-alkyl; and
$R^3$ is hydrogen;

E.13. The use according to embodiment E.12, where

$R^1$ is $C_1$-$C_2$-alkyl or phenyl;
$R^2$ is hydrogen or ethyl; and
$R^3$ is hydrogen.

E.14. The use according to any of the preceding embodiments, where the antimicrobial agent is 2-phenoxyethanol and the α-hydroxyketone of the formula (I) is selected from the group consisting of 1-hydroxypropan-2-one (hydroxyacetone; $R^1$ is methyl; $R^2$ and $R^3$ are hydrogen), 1-hydroxy-butan-2-one ($R^1$ is ethyl; $R^2$ and $R^3$ are hydrogen), 4-hydroxyhexan-3-one (propioin; $R^1$ and $R^2$ are ethyl, $R^3$ is hydrogen), 2-hydroxy-1-phenylethan-1-one ($R^1$ is phenyl; $R^2$ and $R^3$ are hydrogen) and mixtures thereof.

E.15. The use according to embodiment E.14, where the α-hydroxyketone of the formula (I) is selected from the group consisting of 1-hydroxypropan-2-one (hydroxyacetone; $R^1$ is methyl; $R^2$ and $R^3$ are hydrogen), 2-hydroxy-1-phenylethan-1-one ($R^1$ is phenyl; $R^2$ and $R^3$ are hydrogen) and mixtures thereof.

E.16. The use according to any of the preceding embodiments, where the antimicrobial agent and the α-hydroxyketone of the formula (I) are used in an overall weight ratio of from 50:1 to 1:50.

E.17. The use according to embodiment E.16, where the antimicrobial agent and the α-hydroxyketone of the formula (I) are used in an overall weight ratio of from 20:1 to 1:20.

E.18. The use according to embodiment E.17, where the antimicrobial agent and the α-hydroxyketone of the formula (I) are used in an overall weight ratio of from 10:1 to 1:10.

E.19. The use according to embodiment E.18, where the antimicrobial agent and the α-hydroxyketone of the formula (I) are used in an overall weight ratio of from 5:1 to 1:10.

E.20. The use according to embodiment E.19, where the antimicrobial agent and the α-hydroxyketone of the formula (I) are used in an overall weight ratio of from 4:1 to 1:8.

E.21. The use according to embodiment E.20, where the antimicrobial agent and the α-hydroxyketone of the formula (I) are used in an overall weight ratio of from 3:1 to 1:7.

E.22. The use according to embodiment E.21, where the antimicrobial agent and the α-hydroxyketone of the formula (I) are used in an overall weight ratio of from 2:1 to 1:6.

E.23. The use according to any of the preceding embodiments, in a composition selected from the group consisting of antimicrobial concentrates, homecare compositions, compositions for cleaning or disinfecting on an industrial scale, personal care compositions, process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide; compositions for treating leather; compositions for treating textiles during the manufacturing process thereof; compositions for treating lumber; compositions for treating paper or the precursor material during papermaking processes; crop protection compositions; paints, glues, adhesives, sealants, dyes, pigments and dispersions thereof, inks, and wet wipes, or as a preservative for said composition.

E.24. A composition comprising

(a) at least one antimicrobial agent as defined in any of embodiments E.1 and E.5 to E.8; and
(b) at least one α-hydroxyketone of the formula (I) as defined in any of embodiments E.1 and E.9 to E.15;

except for hair dyeing, hair straightening and hair styling compositions which comprise 2-phenoxyethanol and hydroxyacetone; or which comprise 2-phenoxyethanol and 1-hydroxy-2-butanone; or which comprise benzyl alcohol and acetoine; or which comprise benzyl alcohol and benzoine.

E.25. The composition according to embodiment E.24, except for compositions (in general) which comprise 2-phenoxyethanol and hydroxyacetone; or which comprise 2-phenoxyethanol and 1-hydroxy-2-butanone; or which comprise benzyl alcohol and acetoine; or which comprise benzyl alcohol and benzoine.

E.26. The composition according to any of embodiments E.24 and E.25, where the antimicrobial agent and the α-hydroxyketone of the formula (I) are present in an overall weight ratio of from 50:1 to 1:50.

E.27. The composition according to embodiment E.26, where the antimicrobial agent and the α-hydroxyketone of the formula (I) are present in an overall weight ratio of from 20:1 to 1:20.

E.28. The composition according to embodiment E.27, where the antimicrobial agent and the α-hydroxyketone of the formula (I) are present in an overall weight ratio of from 10:1 to 1:10.

E.29. The composition according to embodiment E.28, where the antimicrobial agent and the α-hydroxyketone of the formula (I) are present in an overall weight ratio of from 5:1 to 1:10.

E.30. The composition according to embodiment E.29, where the antimicrobial agent and the α-hydroxyketone of the formula (I) are present in an overall weight ratio of from 4:1 to 1:8.

E.31. The composition according to embodiment E.30, where the antimicrobial agent and the α-hydroxyketone of the formula (I) are present in an overall weight ratio of from 3:1 to 1:7.

E.32. The composition according to embodiment E.31, where the antimicrobial agent and the α-hydroxyketone of the formula (I) are present in an overall weight ratio of from 2:1 to 1:6.

E.33. The composition according to any of embodiments E.24 and E.26 to E.32, where component (a) is 2-phenoxyethanol and component (b) is an α-hydroxyketone of the formula (I) selected from the group consisting of 1-hydroxypropan-2-one (hydroxyacetone; $R^1$ is methyl; $R^2$ and $R^3$ are hydrogen), 1-hydroxy-butan-2-one ($R^1$ is ethyl; $R^2$ and $R^3$ are hydrogen), 4-hydroxyhexan-3-one (propioin; $R^1$ and $R^2$ are ethyl, $R^3$ is hydrogen), 2-hydroxy-1-phenylethan-1-one ($R^1$ is phenyl; $R^2$ and $R^3$ are hydrogen) and mixtures thereof.

E.34. The composition according to embodiment E.33, where the α-hydroxyketone of the formula (I) is selected from the group consisting of 1-hydroxypropan-2-one (hydroxyacetone; $R^1$ is methyl; $R^2$ and $R^3$ are hydrogen), 2-hydroxy-1-phenylethan-1-one ($R^1$ is phenyl; $R^2$ and $R^3$ are hydrogen) and mixtures thereof.

E.35. The composition according to any of embodiments E.24 to E.34, which is selected from the group consisting of antimicrobial concentrates, homecare compositions, compositions for cleaning or disinfecting on an industrial scale, personal care compositions, process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide; compositions for treating leather; compositions for treating textiles during the manufacturing process thereof; compositions for treating lumber; compositions for treating paper or the precursor material during papermaking processes; crop protection compositions; paints, glues, adhesives, sealants, dyes, pigments and dispersions thereof, inks, and wet wipes.

E.36. The composition according to embodiment E.35, where the composition is an antimicrobial concentrate, comprising

(a) 0.1 to 99.9% by weight, relative to the total weight of the composition, of at least one antimicrobial agent as defined in any of embodiments E.1 and E.5 to E.8;
(b) 0.1 to 99.9% by weight, relative to the total weight of the composition, of at least one α-hydroxyketone of the formula (I) or a mixture of different α-hydroxyketones of the formula (I) as defined in any of embodiments E.1 and E.9 to E.15;
(c) 0 to 20% by weight, relative to the total weight of the composition, of at least one further additive;
(d) 0 to 99.8% by weight, relative to the total weight of the composition, of one or more organic solvents; and
(e) 0 to 99.8% by weight, relative to the total weight of the composition, of water;

where components (a) to (e) add to 100% by weight.

E.37. The composition according to embodiment E.36, where the composition is a homecare composition.

E.38. The composition according to embodiment E.37, where the composition is selected from the group consisting of dishwashing compositions, laundry compositions, surface cleaning compositions, non-cosmetic deodorants, disinfectants, surface protecting and/or polishing compositions, and rug shampoos; and in particular selected from the group consisting of dishwashing compositions, laundry compositions, surface cleaning compositions, and rug shampoos.

E.39. The composition according to any of embodiments E.37 or E.38, where the homecare composition comprises

(a) 0.001 to 7% by weight, relative to the total weight of the composition, of at least one antimicrobial agent as defined in any of embodiments E.1 and E.5 to E.8;
(b) 0.001 to 10% by weight, relative to the total weight of the composition, of at least one α-hydroxyketone of the formula (I) or a mixture of different α-hydroxyketone of the formula (I) as defined in any of embodiments E.1 and E.9 to E.15;
(c) 0.1 to 40% by weight, relative to the total weight of the composition, of one or more surfactants;
(d) 0 to 15% by weight, relative to the total weight of the composition, of at least one organic solvent;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of at least one further additive; and
(i) 10 to 99.998% by weight, relative to the total weight of the composition, of water;

where components (a) to (i) add to 100% by weight.

E.40. A homecare composition or composition for cleaning or disinfecting on an industrial scale, comprising

(a) 0.001 to 7% by weight, relative to the total weight of the composition, of at least one antimicrobial agent as defined in any of embodiments E.1 and E.5 to E.8;
(b) 0.001 to 10% by weight, relative to the total weight of the composition, of at least one α-hydroxyketone of the formula (I) or a mixture of different α-hydroxyketone of the formula (I) as defined in any of embodiments E.1 and E.9 to E.15;
(c) 0.1 to 40% by weight, relative to the total weight of the composition, of one or more surfactants;
(d) 0 to 15% by weight, relative to the total weight of the composition, of at least one organic solvent;

(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of at least one further additive; and
(i) 10 to 99.998% by weight, relative to the total weight of the composition, of water;

where components (a) to (i) add to 100% by weight.

E.41. The composition according to embodiment E.40, where the automicrobial agent (component (a)) is 2-phenoxyethanol and the α-hydroxyketone of the formula (I) (component b)) is selected from the group consisting of 1-hydroxypropan-2-one (hydroxyacetone; $R^1$ is methyl; $R^2$ and $R^3$ are hydrogen), 1-hydroxy-butan-2-one ($R^1$ is ethyl; $R^2$ and $R^3$ are hydrogen), 4-hydroxyhexan-3-one (propioin; $R^1$ and $R^2$ are ethyl, $R^3$ is hydrogen), 2-hydroxy-1-phenylethan-1-one ($R^1$ is phenyl; $R^2$ and $R^3$ are hydrogen) and mixtures thereof.

E.42. The composition according to embodiment E.41, where the automicrobial agent (component (a)) is 2-phenoxyethanol and the α-hydroxyketone of the formula (I) (component b)) is selected from the group consisting of 1-hydroxypropan-2-one (hydroxyacetone; $R^1$ is methyl; $R^2$ and $R^3$ are hydrogen), 2-hydroxy-1-phenylethan-1-one ($R^1$ is phenyl; $R^2$ and $R^3$ are hydrogen) and mixtures thereof.

E.43. The composition according to any of embodiments E.40 to E.42, where the antimicrobial agent (component a)) and the α-hydroxyketone of the formula (I) (component b)) are present in an overall weight ratio of from 50:1 to 1:50.

E.44. The composition according to embodiment E.43, where the antimicrobial agent and the α-hydroxyketone of the formula (I) are present in an overall weight ratio of from 20:1 to 1:20.

E.45. The composition according to embodiment E.44, where the antimicrobial agent and the α-hydroxyketone of the formula (I) are present in an overall weight ratio of from 10:1 to 1:10.

E.46. The composition according to embodiment E.45, where the antimicrobial agent and the α-hydroxyketone of the formula (I) are present in an overall weight ratio of from 5:1 to 1:10.

E.47. The composition according to embodiment E.46, where the antimicrobial agent and the α-hydroxyketone of the formula (I) are present in an overall weight ratio of from 4:1 to 1:8.

E.48. The composition according to embodiment E.47, where the antimicrobial agent and the α-hydroxyketone of the formula (I) are present in an overall weight ratio of from 3:1 to 1:7.

E.49. The composition according to embodiment E.48, where the antimicrobial agent and the α-hydroxyketone of the formula (I) are present in an overall weight ratio of from 2:1 to 1:6.

E.50. A mixture consisting of

(a) at least one antimicrobial agent as defined in any of embodiments E.1 and E.5 to E.8;
(b) at least one α-hydroxyketone of the formula (I) as defined in any of embodiments E.1 and E.9 to E.15; and
(c) optionally a solvent.

E.51. The mixture according to embodiment E.50, where the automicrobial agent (component (a)) is 2-phenoxyethanol and the α-hydroxyketone of the formula (I) (component b)) is selected from the group consisting of 1-hydroxypropan-2-one (hydroxyacetone; $R^1$ is methyl; $R^2$ and $R^3$ are hydrogen), 1-hydroxy-butan-2-one ($R^1$ is ethyl; $R^2$ and $R^3$ are hydrogen), 4-hydroxyhexan-3-one (propioin; $R^1$ and $R^2$ are ethyl, $R^3$ is hydrogen), 2-hydroxy-1-phenylethan-1-one ($R^1$ is phenyl; $R^2$ and $R^3$ are hydrogen) and mixtures thereof.

E.52. The mixture according to embodiment E.51, where the automicrobial agent (component (a)) is 2-phenoxyethanol and the α-hydroxyketone of the formula (I) (component b)) is selected from the group consisting of 1-hydroxypropan-2-one (hydroxyacetone; $R^1$ is methyl; $R^2$ and $R^3$ are hydrogen), 2-hydroxy-1-phenylethan-1-one ($R^1$ is phenyl; $R^2$ and $R^3$ are hydrogen) and mixtures thereof.

E.53. The mixture according to any of embodiments E.50 to E.52, where the antimicrobial agent (component a)) and the α-hydroxyketone of the formula (I) (component b)) are present in an overall weight ratio of from 50:1 to 1:50.

E.54. The mixture according to embodiment E.53, where the antimicrobial agent and the α-hydroxyketone of the formula (I) are present in an overall weight ratio of from 20:1 to 1:20.

E.55. The mixture according to embodiment E.54, where the antimicrobial agent and the α-hydroxyketone of the formula (I) are present in an overall weight ratio of from 10:1 to 1:10.

E.56. The mixture according to embodiment E.55, where the antimicrobial agent and the α-hydroxyketone of the formula (I) are present in an overall weight ratio of from 5:1 to 1:10.

E.57. The mixture according to embodiment E.56, where the antimicrobial agent and the α-hydroxyketone of the formula (I) are present in an overall weight ratio of from 4:1 to 1:8.

E.58. The mixture according to embodiment E.57, where the antimicrobial agent and the α-hydroxyketone of the formula (I) are present in an overall weight ratio of from 3:1 to 1:7.

E.59. The mixture according to embodiment E.58, where the antimicrobial agent and the α-hydroxyketone of

the formula (I) are present in an overall weight ratio of from 2:1 to 1:6.

E.60. A method for enhancing the antimicrobial, in particular the preserving, activity of the antimicrobial agent as defined in any of embodiments E.1 and E.5 to E.8, comprising using the antimicrobial agent (a) in combination with the compound of the formula (I) as defined in any of embodiments E.1 and E.9 to E.15.

Unless specified otherwise, the below remarks to suitable and preferred antimicrobial agents, α-hydroxyketones (I), weight ratios in which these are used and compositions and mixtures in which these are used apply both to the uses of the inventions as well as to the methods of the invention and the compositions and mixtures of the inventions.

The α-hydroxyketone (I) is preferably used for enhancing the preserving activity of the antimicrobial agent.

The mixture comprising (a) the antimicrobial agent and (b) the α-hydroxyketone (I) is preferably used as a preservative.

The antimicrobial agent is inter alia selected from formic acid and salts thereof, benzoic acid and salts thereof, sorbic acid and salts thereof, lactic acid and salts thereof. Suitable salts of these acids are alkali metal salts, such as the lithium, sodium or potassium salts; earth alkaline metal salts, such as the magnesium and calcium salts, and ammonium salts, such as the salts containing an ammonium cation of the formula $[NR^aR^bR^cR^d]^+$, where $R^a$, $R^b$, $R^c$ and $R^d$, independently of each other, are selected from the group consisting of hydrogen, $C_1$-$C_4$-alkyl and $C_1$-$C_4$-alkoxy. Preferably, alkali metal salts, and in particular the sodium or potassium salts are used.

The antimicrobial agent is preferably selected from the group consisting of 2-phenoxyethanol, phenoxyisopropanol, 4,4'-dichloro 2'-hydroxydiphenylether, 2-bromo-2-nitropropane-1,3-diol and isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT) and 2-butylbenzo[d]isothiazol-3-one (BBIT); and preferably from the group consisting of 2-phenoxyethanol, phenoxyisopropanol, 4,4'-dichloro 2'-hydroxydiphenylether, 2-bromo-2-nitropropane-1,3-diol and 1,2-benzisothiazol-3(2H)one (BIT). More preferably, the antimicrobial agent is selected from the group consisting of 2-phenoxyethanol, 4,4'-dichloro 2'-hydroxydiphenylether and 1,2-benzisothiazol-3(2H)one (BIT). Even more preferably, the antimicrobial agent is 2-phenoxyethanol.

Preferably, in the α-hydroxyketone of the formula (I)

$R^1$ is $C_1$-$C_4$-alkyl or phenyl;
$R^2$ is hydrogen, $C_1$-$C_4$-alkyl or phenyl; and
$R^3$ is hydrogen or $C_1$-$C_4$-alkyl.

More preferably,

$R^1$ is $C_1$-$C_4$-alkyl or phenyl;

$R^2$ is hydrogen or $C_1$-$C_4$-alkyl; and
$R^3$ is hydrogen or $C_1$-$C_4$-alkyl.

Even more preferably,

$R^1$ is $C_1$-$C_2$-alkyl or phenyl;
$R^2$ is hydrogen or $C_1$-$C_2$-alkyl; and
$R^3$ is hydrogen or $C_1$-$C_2$-alkyl.

Particularly preferably,

$R^1$ is $C_1$-$C_2$-alkyl or phenyl;
$R^2$ is hydrogen or $C_1$-$C_2$-alkyl; and
$R^3$ is hydrogen.

In particular,

$R^1$ is $C_1$-$C_2$-alkyl or phenyl;
$R^2$ is hydrogen or ethyl; and
$R^3$ is hydrogen.

More particularly, the α-hydroxyketone of the formula (I) is selected from the group consisting of 1-hydroxypropan-2-one (hydroxyacetone; $R^1$ is methyl; $R^2$ and $R^3$ are hydrogen), 1-hydroxy-butan-2-one ($R^1$ is ethyl; $R^2$ and $R^3$ are hydrogen), 4-hydroxyhexan-3-one (propioin; $R^1$ and $R^2$ are ethyl, $R^3$ is hydrogen), 2-hydroxy-1-phenylethan-1-one ($R^1$

is phenyl; $R^2$ and $R^3$ are hydrogen) and mixtures thereof. Specifically, the α-hydroxyketone of the formula (I) is selected from the group consisting of 1-hydroxypropan-2-one (hydroxyacetone; $R^1$ is methyl; $R^2$ and $R^3$ are hydrogen), 2-hydroxy-1-phenylethan-1-one ($R^1$ is phenyl; $R^2$ and $R^3$ are hydrogen) and mixtures thereof.

The antimicrobial agent and the α-hydroxyketone of the formula (I) are preferably used or contained in an overall weight ratio of from 50:1 to 1:50, preferably from 20:1 to 1:20, more preferably from 10:1 to 1:10, even more preferably from 5:1 to 1:10, in particular from 4:1 to 1:8, more particularly from 3:1 to 1:7, specifically from 2:1 to 1:6.

In a preferred embodiment, in the uses and methods of the invention, the antimicrobial agent and the α-hydroxyketone (I) are used in combination with at least one organic solvent (different from α-hydroxyketones (I) and of course also from said antimicrobial agent). The organic solvent is preferably selected from the group consisting of $C_1$-$C_8$-alkanols, $C_2$-$C_8$-alkanediols, $C_1$-$C_8$-alkylmonoethers of $C_2$-$C_8$-alkanediols, polyetherpolyols, $C_1$-$C_8$-alkylmonoethers of polyetherpolyols, 5-, 6- or 7-membered lactones which may be substituted by one or more $C_1$-$C_{12}$-alkyl groups; 5-, 6- or 7-membered cyclic carbonates which may be substituted by one or more $C_1$-$C_{12}$-alkyl groups; aliphatic esters, carboxamides, lactams, aliphatic or alicyclic amine-N-oxides and mixtures of the afore-mentioned solvents

It has to be noticed that organic solvents in this context are not restricted to "typical" solvents, i.e. to organic compounds with solvating properties which are liquid at 25°C, but encompass compounds with solvating properties having a higher melting point of at most 50°C, and also compounds which exert their solvating properties only when mixed with water, such as the above-mentioned aliphatic, alicyclic or heterocyclic amine-N-oxides, which would more correctly be termed solubilizers.

$C_1$-$C_8$-alkanols are compounds R-OH, where R is linear or branched $C_1$-$C_8$-alkyl. Examples are methanol, ethanol, n-propanol, isopropanol, n-butanol, sec-butanol, isobutanol, tert-butanol, 1-pentanol, 1-hexanol, 1-heptanol, 1-octanol, 2-ethylhexanol and (other) structural isomers of the four last-mentioned 1-alkanols.

$C_2$-$C_8$-alkanediols are compounds HO-A-OH, where A is linear or branched $C_2$-$C_8$-alkanediyl (or $C_2$-$C_8$-alkylene), where the two OH groups are not geminally bound (i.e. are not bound to the same carbon atom). Examples are ethylene glycol (1,2-ethanediol), propylene glycol (1,2-propanediol), 1,3-propanediol, 1,2-butanediol, 1,4-butanediol, 1,2-pentanediol, 1,5-pentanediol, 1,2-hexanediol, 1,6-hexanediol, 1,2-heptanediol, 1,2-octanediol and the like.

$C_1$-$C_8$-Alkylmonoethers of $C_2$-$C_8$-alkanediols are compounds RO-A-OH, where A is as defined for the alkanediols above and R is $C_1$-$C_8$-alkyl. Examples are ethylene glycol monomethyl ether, ethylene glycol monoethyl ether, ethylene glycol mono-n-propyl ether, ethylene glycol monoisopropyl ether, ethylene glycol mono-n-butyl ether (butyl glycol), ethylene glycol mono-sec-butyl ether, ethylene glycol mono-isobutyl ether, ethylene glycol mono-tert-butyl ether, ethylene glycol monopentyl ether, ethylene glycol monohexyl ether, ethylene glycol monoheptyl ether, ethylene glycol monooctyl ether, propylene glycol monomethyl ether, propylene glycol monoethyl ether, propylene glycol mono-n-propyl ether, propylene glycol monoisopropyl ether, propylene glycol mono-n-butyl ether, propylene glycol mono-sec-butyl ether, propylene glycol mono-isobutyl ether, propylene glycol mono-tert-butyl ether, propylene glycol monopentyl ether, propylene glycol monohexyl ether, propylene glycol monoheptyl ether, propylene glycol monooctyl ether, 1,3-propanediol monomethyl ether, 1,3-propanediol monoethyl ether, 1,3-propanediol mono-n-propyl ether, 1,3-propanediol monoisopropyl ether, 1,3-propanediol mono-n-butyl ether, 1,3-propanediol mono-sec-butyl ether, 1,3-propanediol mono-isobutyl ether, 1,3-propanediol mono-tert-butyl ether, 1,3-propanediol monopentyl ether, 1,3-propanediol monohexyl ether, 1,3-propanediol monoheptyl ether, 1,3-propanediol monooctyl ether and the like.

Polyetherpolyols are formally the etherification products of alkanediols and thus compounds HO-A-[O-A]$_n$-OH, where each A is independently an alkylene group, generally a $C_2$-$C_3$-alkylene group, such as 1,2-ethylene, 1,2-propylene or 1,3-propylene, and n is from 1 to 100. Examples are polyethylene glycol, generally with a molecular weight of from 106 to ca. 4500, and polypropyleneglycol, generally with a molecular weight of from 134 to ca. 6000.

$C_1$-$C_8$-Alkylmonoethers of polyetherpolyols are compounds RO-A-[O-A]$_n$-OH, where A and n are as defined for the polyetherpolyols above and R is $C_1$-$C_8$-alkyl. Examples are polyethylene glycol monomethyl ether, polyethylene glycol monoethyl ether, polyethylene glycol mono-n-propyl ether, polyethylene glycol mono-n-butyl ether, and the like.

Examples for 5-, 6- or 7-membered lactones which may be substituted by one or more $C_1$-$C_{12}$-alkyl groups are γ-butyrolactone, γ-valerolactone, γ-octalactone, γ-nonalactone, δ-valerolactone, δ-decanolactone, δ-dodecanolactone and ε-caprolactone which may carry one or more $C_1$-$C_{12}$-alkyl substituents.

Examples for 5-, 6- or 7-membered cyclic carbonates which may be substituted by one or more $C_1$-$C_{12}$-alkyl groups are ethylene carbonate, propylene carbonate and butylene carbonate which may carry one or more $C_1$-$C_{12}$-alkyl substituents.

Examples for suitable aliphatic esters are ethyl acetate, propyl acetate, butyl acetate, methylpropionate and ethyl propionate.

Examples for suitable carboxamides are N,N-dimethylformamide, N,N-diethylformamide and N,N-dimethylacetamide.

Examples for suitable aliphatic, alicyclic or heterocyclic amine-N-oxides are N,N-dimethyl-N-ethylamine N-oxide, N,N,N-triethylamine N-oxide, N,N-dimethyl-N-cyclohexylamine N-oxide, N,N-dimethyl-N-ethanolamine N-oxide

(DMEAO) and N-methylmorpholine N-oxide.

More preferably, the solvent is selected from the group consisting of $C_1$-$C_8$-alkylmonoethers of $C_2$-$C_8$-alkanediols (among which preference is given to $C_1$-$C_4$-alkylmonoethers of a $C_2$-$C_3$-alkanediol, such as the $C_1$-$C_4$-alkylmonoethers of ethylene glycol or propylene glycol, specific examples being ethylene glycol mono-n-propyl ether, ethylene glycol mono-n-butyl ether (also termed butylglyol), propylene glycol mono-n-propyl ether (also termed 1-(n-propoxy)-2-propanol or 1,2-propanediol mono-n-propyl ether), propylene glycol mono-n-butyl ether (also termed 1-(n-butoxy)-2-propanol or 1,2-propanediol mono-n-butyl ether) and mixtures thereof. Specifically, ethylene glycol mono-n-butyl ether or propylene glycol mono-n-butyl ether is used.

In another preferred embodiment the solvent is a $C_2$-$C_8$-alkanediol, more preferably a $C_2$-$C_4$-alkanediol, in particular a $C_2$-$C_3$-alkanediol, such as ethylene glycol, 1,2-propanediol and 1,3-propanediol, and specifically 1,2-propanediol (propylene glycol).

In another preferred embodiment the solvent is a $C_1$-$C_8$-alkanol, more preferably a $C_1$-$C_4$-alkanol, in particular a $C_2$-$C_3$-alkanol, i.e. ethanol, n-propanol or isopropanol, and specifically n-propanol .

The $\alpha$-hydroxyketone (I) is preferably used for enhancing the antimicrobial, in particular the preservative, activity of the antimicrobial agent in a composition selected from the group consisting of antimicrobial concentrates, homecare compositions, compositions for cleaning or disinfecting on an industrial scale, personal care compositions, process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide; compositions for treating leather; compositions for treating textiles during the manufacturing process thereof; compositions for treating lumber; compositions for treating paper or the precursor material during papermaking processes; crop protection compositions; paints, glues, adhesives, sealants, dyes, pigments and dispersions thereof, inks, and wet wipes, or as a preservative for said composition.

Likewise, the mixture comprising the antimicrobial agent of component (a) and the $\alpha$-hydroxyketone (I) of component (b) is preferably used for combating microbes in a composition selected from the group consisting of antimicrobial concentrates, homecare compositions, compositions for cleaning or disinfecting on an industrial scale, personal care compositions, process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide; compositions for treating leather; compositions for treating textiles during the manufacturing process thereof; compositions for treating lumber; compositions for treating paper or the precursor material during papermaking processes; crop protection compositions; paints, glues, adhesives, sealants, dyes, pigments and dispersions thereof, inks, and wet wipes, or as a preservative for said composition. Preferably, the mixture comprising the antimicrobial agent of component (a) and the $\alpha$-hydroxyketone (I) of component (b) is preferably used as a preservative for said compositions.

Further details to the compositions are given below in context with the compositions of the invention.

## Compositions

The invention relates also to a composition (composition A) comprising

(a) at least one antimicrobial agent which has one of the above general or, in particular, one of the preferred meanings; and

(b) at least one $\alpha$-hydroxyketone which has one of the above general or, in particular, one of the preferred meanings;

except for hair dyeing, hair straightening and hair styling compositions which comprise 2-phenoxyethanol and 1-hydroxypropan-2-one (hydroxyacetone); or 2-phenoxyethanol and 1-hydroxy-2-butanone; or benzyl alcohol and acetoine; or benzyl alcohol and benzoine;

in particular except for any compositions which comprise 2-phenoxyethanol and 1-hydroxypropan-2-one (hydroxyacetone); or 2-phenoxyethanol and 1-hydroxy-2-butanone; or benzyl alcohol and acetoine; or benzyl alcohol and benzoine.

Compositions for hair dyeing contain a hair dye or colorant, such as described in EP-A-2473152, FR 2949339, FR 2949335, FR 2949334 and FR 2949333.

Compositions for hair straightening contain an agent wich allows or eases the breaking of disulfide bonds in hair which are responsible for curls and waves, and compositions for hair styling contain components which provide shape control, styling, aesthetic qualities such as body, shine, feel, conditioning and luster. Such components are described, for example, in WO 2018/017390, WO 2017/096015 and WO 2017/096005.

The invention relates moreover to a composition B which is a homecare composition or a composition for cleaning or disinfecting on an industrial scale (I&I composition), comprising

(a) 0.001 to 7% by weight, relative to the total weight of the composition, of at least one antimicrobial agent as defined above;

(b) 0.001 to 10% by weight, relative to the total weight of the composition, of at least one α-hydroxyketone of the formula (I) or a mixture of different α-hydroxyketone of the formula (I) as defined above;

(c) 0.1 to 40% by weight, relative to the total weight of the composition, of at least one surfactant;

(d) 0 to 15% by weight, relative to the total weight of the composition, of at least one organic solvent;

(e) 0 to 6% by weight, relative to the total weight of the composition, of at least one enzyme;

(f) 0 to 20% by weight, relative to the total weight of the composition, of at least one sequestrant;

(g) 0 to 8% by weight, relative to the total weight of the composition, of at least one defoamer and/or foam stabilizer;

(h) 0 to 50% by weight, relative to the total weight of the composition, of a further additive; and

(i) 10 to 99.998% by weight, relative to the total weight of the composition, of water;

where components (a) to (i) add to 100% by weight.

In context with composition B, the disclaimer of composition A does not apply.

As far as applicable, the below remarks apply both to compositions A and B, especially with respect to preferred components (a) and (b), concentrations and weight ratios thereof, and with respect to suitable and preferred components (c) to (i) (as far as they are suitable for homecare or I&I composition) and their concentrations.

Preferred antimicrobial agents and the α-hydroxyketone of the formula (I) correspond to those described above in context with the use and the method of the invention.

In context of the composition of the invention, too, the antimicrobial agent and the α-hydroxyketone of the formula (I) are present in an overall weight ratio of preferably from 50:1 to 1:50, more preferably from 20:1 to 1:20, even more preferably from 10:1 to 1:10, particularly preferably from 5:1 to 1:10, in particular from 4:1 to 1:8, more particularly from 3:1 to 1:7, specifically from 2:1 to 1:6.

In one embodiment, the composition preferably further comprises at least one organic solvent (different from α-hydroxyketones (I) and of course also from said antimicrobial agent). Like in the use and the method of the invention, the organic solvent is preferably selected from the group consisting of $C_1$-$C_8$-alkanols, $C_2$-$C_8$-alkanediols, $C_1$-$C_8$-alkylmonoethers of $C_2$-$C_8$-alkanediols, polyetherpolyols, $C_1$-$C_8$-alkylmonoethers of polyetherpolyols, 5-, 6- or 7-membered lactones which may be substituted by one or more $C_1$-$C_{12}$-alkyl groups; 5-, 6- or 7-membered cyclic carbonates which may be substituted by one or more $C_1$-$C_{12}$-alkyl groups; aliphatic esters, carboxamides, lactams, aliphatic or alicyclic amine-N-oxides and mixtures of the afore-mentioned solvents. Examples for such solvents have already been given above.

In this context, too, the solvent is more preferably selected from the group consisting of $C_1$-$C_8$-alkylmonoethers of $C_2$-$C_8$-alkanediols (among which preference is given to $C_1$-$C_4$-alkylmonoethers of a $C_2$-$C_3$-alkanediol, such as the $C_1$-$C_4$-alkylmonoethers of ethylene glycol or propylene glycol, specific examples being ethylene glycol mono-n-propyl ether, ethylene glycol mono-n-butyl ether (also termed butylglyol), propylene glycol mono-n-propyl ether, propylene glycol mono-n-butyl ether and mixtures thereof,

In another preferred embodiment the solvent is a $C_2$-$C_8$-alkanediol, more preferably a $C_2$-$C_4$-alkanediol, in particular a $C_2$-$C_3$-alkanediol, such as ethylene glycol, 1,2-propanediol and 1,3-propanediol, and specifically 1,2-propanediol (propylene glycol).

In another preferred embodiment the solvent is a $C_1$-$C_8$-alkanol, more preferably a $C_1$-$C_4$-alkanol, in particular a $C_2$-$C_3$-alkanol, i.e. ethanol, n-propanol or isopropanol, and specifically n-propanol.

In another preferred embodiment, the composition comprises water.

In a further preferred embodiment, the composition comprises both water and an organic solvent.

The optimum relative and absolute amounts of components (a) and (b), the presence, nature and amounts of optionally present further components (c) and the presence, nature and amounts of the optionally present solvents and water depend on the nature of the composition.

The compositions A and B of the invention can be a concentrate comprising the antimicrobial (a), the α-hydroxyketone (I) of component (b) and optionally a carrier, such as a diluent, e.g. an organic solvent and/or water (and in case of composition B mandatorily also at least one surfactant); or can be an intermediate composition, i.e. a composition which is not yet the ready-to-use composition for the end user, but already comprises a part of the other components (i.e. components different from of the antimicrobial (a), the α-hydroxyketone (I), the optional carrier and in case of composition B the surfactant(s)) of the final ready-to-use composition; or can be a ready-to-use-composition.

Antimicrobials find use in a vast field of application. In principle, any water-containing system or material devoid of intrinsic protection (intrinsic protection can for example be present in systems which contain a sufficiently high amount of alcohol and/or surfactant to hinder microbial infestation, etc.) is prone to microbial attack/infestation.

Examples for such systems, materials or products needing antimicrobial protection and/or exerting themselves an antimicrobial action are homecare compositions (such as laundry compositions, e.g. detergents or fabric softeners; dishwashing compositions; cleaning compositions etc.), compositions for cleaning or disinfecting on an industrial scale

(in contrast to home care carried out on a distinctly smaller scale), personal care compositions (including cosmetics), process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide; compositions for treating leather; compositions for treating textiles during the manufacturing process thereof; compositions for treating lumber; compositions for treating paper or the precursor material during papermaking processes; crop protection compositions; pharmaceutical compositions; paints, glues, adhesives, sealants, dyes, pigments and dispersions thereof, inks, wet wipes (for personal care, for homecare etc.) and the like.

The composition A of the invention is thus preferably selected from the group consisting of antimicrobial concentrates, homecare compositions, compositions for cleaning or disinfecting on an industrial scale, personal care compositions, process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide; compositions for treating leather; compositions for treating textiles during the manufacturing process thereof; compositions for treating lumber; compositions for treating paper or the precursor material during papermaking processes; crop protection compositions; paints, glues, adhesives, sealants, dyes, pigments and dispersions thereof, inks, and wet wipes.

Homecare compositions and compositions for cleaning or disinfecting on an industrial scale (also called industrial and institutional cleaning or I&I cleaning) overlap largely, only that I&I compositions are adapted to the use on a larger scale and are thus often more aggressive (e.g. by being more concentrated and/or by having a distinctly higher or lower pH than the respective homecare composition) and/or are less "pleasant", e.g. in the sense of odor or aspect or touch. Moreover, they are suitable for clean-in-place (CIP), which is a method of automated cleaning the interior surfaces of pipes, vessels, equipments, filters and associated fittings and the like without major disassembly.

Examples for homecare and I&I compositions are dishwashing compositions (in liquid or gel form), laundry compositions (in liquid or gel form; for example laundry detergents, fabric softeners, rinsing compositions, bleacher compositions, stain remover compositions and the like), surface cleaning compositions (also termed hard surface cleaners; for example glass, floor, counter, bath(room), toilet bowl, sink, kitchen, appliance and furniture cleaning compositions; all-purpose cleaners; sanitary cleaners), non-cosmetic deodorants (e.g. air and/or surface deodorants), disinfectants (for example spray air disinfectants, and spray, liquid and paste/gel surface disinfectants), surface protecting and/or polishing compositions, rug shampoos, descaling agents, and compositions for wet wipes (e.g. for cleaning the floor, furniture, bath room surfaces etc.).

Personal care compositions are used for cleaning, washing, disinfecting, nurturing, grooming, protecting or embellishing the human body (and thus also include cosmetics). Examples are creams, lotions, ointments, other o/w or w/o emulsions, liquid or gel-like soaps, shampoos, make-up and other decorative cosmetics, and compositions for wet wipes (e.g. for cleaning the nappy area). More specific examples are skin-washing and cleansing preparations in the form of soaps, syndets, washing gels, soapless detergents or washing pastes, bath preparations, e.g. foam baths, milks, oils, shower preparations; skin-care preparations, e.g. skin emulsions, multi-emulsions, powders, sprays or skin oils; cosmetic preparations, e.g. facial make-up in the form of day creams or powder creams, face powder (loose or pressed), rouge or cream make-up, eye-care preparations, e.g. eyeshadow preparations, mascara, eyeliner, eye creams or eye-fix creams; lip-care preparations, e.g. lipsticks, lip gloss, lip contour pencils, nail-care preparations, such as nail varnish, nail varnish removers, nail hardeners or cuticle removers; foot-care preparations, e.g. foot baths, foot powders, foot creams or foot balsams, special deodorants and antiperspirants or callus-removing preparations; light-protective preparations, such as sun milks, lotions, creams or oils, sunblocks or tropicals, pre-tanning preparations or after-sun preparations; skin-tanning preparations, e.g. self-tanning creams; depigmenting preparations, e.g. preparations for bleaching the skin or skin-lightening preparations; insect-repellents, e.g. insect-repellent oils, lotions, sprays or sticks; deodorants, such as deodorant sprays, deodorant aerosols, pump-action sprays, deodorant gels, sticks or roll-ons, also water-free deodorant aerosols or sticks; antiperspirants, e.g. antiperspirant sticks, creams or roll-ons; preparations for cleansing and caring for blemished skin, e.g. synthetic detergents (solid or liquid), peeling or scrub preparations or peeling masks; hair-removal preparations in chemical form (depilation), e.g. liquid hair-removing preparations, cream- or paste-form hair-removing preparations, hair-removing preparations in gel form or aerosol foams; shaving preparations, e.g. shaving soap, foaming shaving creams, non-foaming shaving creams, foams and gels, pre-shave preparations for dry shaving, aftershaves or aftershave lotions; fragrance preparations, e.g. fragrances (eau de Cologne, eau de toilette, eau de parfum, parfum de toilette, perfume), perfume oils or perfume creams; cosmetic hair-treatment preparations, e.g. hair-washing preparations in the form of shampoos and conditioners, hair-care preparations, e.g. pre-treatment preparations, hair tonics, styling creams, styling gels, pomades, hair rinses, treatment packs, intensive hair treatments, hair-structuring preparations, e.g. hair-waving preparations for permanent waves (hot wave, mild wave, cold wave), hair-straightening preparations, liquid hairsetting preparations, hair foams, hairsprays, bleaching preparations, e.g. hydrogen peroxide solutions, lightening shampoos, bleaching creams, bleaching powders, bleaching pastes or oils, temporary, semi-permanent or permanent hair colorants, preparations containing self-oxidising dyes, or natural hair colorants, such as henna or camomile; antidandruff preparations in the form of shampoos, conditioners, hair tonics, styling creams or gels or

treatments packs; oral care preparations such as (tooth) pastes, gels, mouth washes and sprays; disinfectants for mouth or skin.

Process water is for example process water used in food, feed, pharmaceutical or cosmetic industry (cooling and process water), or process water used in paper production, wood treatment, cooling water towers, air washers, air conditioners, printing fluids or oil production.

Crop protection compositions, which are often also termed plant protection compositions, are compositions which are effective against various harmful microorganisms, harmful invertebrate pests or undesired plants relevant for agriculture, e.g. harmful fungi, harmful invertebrate pests, such as harmful insects, arachnids, nematodes or molluscs, and weeds, which cause damage to agricultural plants, plant propagation materials, such as seeds, or harvested crops. Examples for crop protection compositions are fungicidal, insecticidal, acaricidal, nematicidal, moluscicidal or herbicidal compositions. The term encompasses also plant growth regulating compositions. Plant growth regulators are plant protection products used to influence plant growth and are used, for example, for increasing the stability of cereals by shortening the stalk length, thus reducing or preventing lodging, for improving the rooting of cuttings, reducing plant height in horticulture, preventing the germination of potatoes and the like. The term encompasses moreover compositions used in material protection for combating various harmful microorganisms and invertebrate pests, such as compositions for the treatment of lumber or the surroundings of lumber material against termites or compositions fo the treatment of mosquito nets against harmful insects, such as Anopheles mosquitoes, and the like.

Antimicrobial concentrate

In a preferred embodiment, the composition is an antimicrobial concentrate. Preferably, the antimicrobial concentrate comprises:

(a) 0.1 to 99.9% by weight, relative to the total weight of the composition, of at least one antimicrobial agent as defined above;
(b) 0.1 to 99.9% by weight, relative to the total weight of the composition, of at least one $\alpha$-hydroxyketone of the formula (I) or a mixture of different $\alpha$-hydroxyketones of the formula (I) as defined above;
(c) 0 to 20% by weight, relative to the total weight of the composition, of at least one further additive;
(d) 0 to 99.4% by weight, relative to the total weight of the composition, of one or more organic solvents [different from component (b) (and of course also from said antimicrobial agent)], preferably as defined above; and
(e) 0 to 99.8% by weight, relative to the total weight of the composition, of water;

where components (a) to (e) add to 100% by weight.

If the concentrate is a composition B, the concentrate mandatorily comprises at least one surfactant. This is generally present in an amount of 1 to 60% by weight, relative to the total weight of the concentrate.

The term "concentrate" is used in this context also for compositions in which components (a) and (b) do not constitute the major part (and thus do not form a concentrate in the proper sense). Nevertheless, it signals that components different from (a), (b) and the optional diluents (d) and (e), if at all present, do not predominate. Moreover, the term signals that (in case of composition A) the composition can consist of components (a) and (b) only. Preferably however, at least a diluent (d) or (e) or mixtures thereof are present to assure an easier handling.

Suitable and preferred components (a) and (b) and suitable and preferred weight ratios thereof are those mentioned above.

Further additives (c) are for example agents which stabilize the concentrate, such as emulsifiers and/or hydrotropic agents, activity enhancers different from component (b) and pH modifiers.

Any emulsifiers usual in such systems can be used. A few non-limiting examples are carboxylic acids and their salts, alkyl phosphates or phosphoric acid esters, ethoxylated and/or propoxylated fatty acids, ethoxylated and/or propoxylated polyethyleneglycols, ethoxylated and/or propoxylated fatty alcohols, fatty acid monoglycerides, fatty acid saccharose esters, fatty acid sorbitol esters, fatty acid sorbitan esters, fatty acid glucose esters, ethoxylated and/or propoxylated derivatives of the listed fatty acid polyol esters, fatty sulfates and sulfonates, ethoxylated amines, ethoxylated amides, polysiloxane/polyalkyl/polyether copolymers and derivatives, poly(oxyethylene)-poly(oxypropylene)-blockpolymers, zwitterionic surfactants that carry at least one quaternary ammonium group and at least one carboxylate and/or sulfonate group in the molecule.

Hydrotropic agents are compounds which solubilize hydrophobic compounds in aqueous solution by means other than micellar solubilization. Similar to surfactants, hydrotropes often (but not necessarily) consist of a hydrophilic part and a hydrophobic part, but in contrast to surfactants the hydrophobic part is generally too small to cause spontaneous self-aggregation. Examples are aromatic sulfonic acid salts, such as the alkali metal, earth alkaline metal or ammonium salts of p-toluenesulfonic acid (e.g. sodium, potassium, calcium or ammonium p-tosylate), of xylene sulfonic acids (e.g. the sodium, potassium, calcium or ammonium salts of o-, m- or p-xylene sulfonates) or of cumene sulfonic acids, generally

of p-cumene sulfonic acid (e.g. the sodium, potassium, calcium or ammonium salts of p-cumenesulfonate); adenosine triphosphate (ATP); and urea.

Examples for activity enhancers different from component (b) are ethylhexylglycerine (3-(2-ethylhexyloxy)propan-1,2-diol) and polyethyleneimines (PEI). Further details are given below in context with homecare compositions.

pH modifiers are acids, bases and also buffers.

The acids can be inorganic or organic. Suitable inorganic acids are for example sulfuric acid, hydrochloric acd and phosphoric acid, where sulfuric acid is generally preferred. Suitable organic acids are for example aliphatic, saturated non-substituted $C_1$-$C_6$-mono-, di- and tri-carboxylic acids such as formic acid, acetic acid, propanoic acid, oxalic acid, succinic acid and glutaric acid; aliphatic, saturated $C_1$-$C_6$-mono-, di- and tri-carboxylic acids carrying one or more OH groups, such as lactic acid, tartric acid and citric acid; aliphatic, unsaturated $C_1$-$C_6$-mono-, di- and tri-carboxylic acids such as sorbic acid; aromatic carboxylic acids, such as benzoic acid, salicylic acid and mandelic acid, and sulfonic acids, such as methanesulfonic acid or toluenesulfonic acid.

Suitable bases are in particular inorganic bases, such as the carbonates mentioned below in context with the sequestrant, e.g. sodium or potassium carbonate; further alkali metal and earth alkaline meal hydroxides, such as NaOH or KOH.

Suitable buffering agents are the typical systems, such as hydrogenphosphate/dihydrogenphosphate buffer, carbonate/hydrogencarbonate buffer, acetic acid/acetate buffer or Tris buffer. Moreover, most of the above acids which are weak and the anion of which is not a strong salt also have buffering capacity.

Suitable organic solvents (d) are those mentioned above. Preferred organic solvents are thus $C_1$-$C_8$-alkanols, $C_2$-$C_8$-alkanediols, $C_1$-$C_8$-alkylmonoethers of $C_2$-$C_8$-alkanediols, polyetherpolyols, $C_1$-$C_8$-alkylmonoethers of polyetherpolyols, 5-, 6- or 7-membered cyclic carbonates which may be substituted by one or more $C_1$-$C_{12}$-alkyl groups; aliphatic esters, carboxamides, aliphatic or alicyclic amine-N-oxides and mixtures of the afore-mentioned solvents. Examples for these solvent groups are mentioned above.

More preferably, the solvent (d) is selected from $C_1$-$C_8$-alkylmonoethers of $C_2$-$C_8$-alkanediols (among which preference is given to $C_1$-$C_4$-alkylmonoethers of a $C_2$-$C_3$-alkanediol, such as the $C_1$-$C_4$-alkylmonoethers of ethylene glycol or propylene glycol, specific examples being ethylene glycol mono-n-butyl ether, also termed butylglyol, and in particular propylene glycol mono-n-butyl ether).

In another more preferred embodiment, the solvent (d) is a $C_2$-$C_8$-alkanediol, even more preferably a $C_2$-$C_4$-alkanediol, in particular a $C_2$-$C_3$-alkanediol, such as ethylene glycol, 1,2-propanediol and 1,3-propanediol, and specifically 1,2-propanediol (propylene glycol).

In another preferred embodiment the solvent is a $C_1$-$C_8$-alkanol, more preferably a $C_1$-$C_4$-alkanol, in particular a $C_2$-$C_3$-alkanol, i.e. ethanol, n-propanol or isopropanol, and specifically n-propanol.

In a particular embodiment, the antimicrobial concentrate which, when a composition A, comprises:

(a) 5 to 90% by weight, relative to the total weight of the composition, of at least one antimicrobial agent as defined above;
(b) 10 to 95% by weight, relative to the total weight of the composition, of at least one $\alpha$-hydroxyketone of the formula (I) or a mixture of different $\alpha$-hydroxyketones of the formula (I) as defined above;
(c) 0 to 10% by weight, relative to the total weight of the composition, of at least one further additive;
(d) 0 to 85% by weight, relative to the total weight of the composition, of one or more organic solvents [different from component (b) (and of course also from said antimicrobial agent)], preferably as defined above; and
(e) 0 to 85% by weight, relative to the total weight of the composition, of water.

Homecare and I&I compositions

Examples for homecare and I&I compositions are listed above.

Among these, preference is given to dishwashing compositions, laundry compositions, surface cleaning compositions, non-cosmetic deodorants, disinfectants, surface protecting and/or polishing compositions, and rug shampoos, and more preference to dishwashing compositions, laundry compositions, surface cleaning compositions, and rug shampoos.

Thus, in another preferred embodiment, the composition (both composition A and composition B) of the invention is selected from the group consisting of dishwashing compositions, laundry compositions, surface cleaning compositions, and rug shampoos. Such compositions preferably comprise:

(a) 0.001 to 7% by weight, relative to the total weight of the composition, of at least one antimicrobial agent as defined above;
(b) 0.001 to 7% by weight, relative to the total weight of the composition, of at least one $\alpha$-hydroxyketone of the formula (I) or a mixture of different $\alpha$-hydroxyketones of the formula (I) as defined above;

(c) 0.1 to 40% by weight, relative to the total weight of the composition, of one or more surfactants;
(d) 0 to 15% by weight, relative to the total weight of the composition, of at least one organic solvent [different from component (b) (and of course also from said antimicrobial agent)], preferably as defined above;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of a further additive; and
(i) 10 to 94.998% by weight, relative to the total weight of the composition, of water;

where components (a) to (i) add to 100% by weight.

Suitable and preferred components (a) and (b) and suitable and preferred weight ratios thereof are those mentioned above.

Surfactants (or surface-active compounds) of component (c) can be anionic, cationic, non-ionic or amphoteric (zwitterionic).

Anionic surfactants are, for example, of the sulfate, sulfonate or carboxylate type or mixed forms thereof. Examples are alkylbenzenesulfonates, alkyl sulfates, alkyl ether sulfates, olefin sulfonates, fatty acid salts, alkyl and alkenyl ether carboxylates or to an alpha-sulfonic fatty acid salt or an ester thereof.

More specific examples are alkylbenzenesulfonates having from 10 to 20 carbon atoms in the alkyl radical (e.g. sodium dodecylbenzene sulfonate), alkyl sulfates having from 8 to 18 carbon atoms in the alkyl radical (e.g. sodium lauryl sulfate), alkyl ether sulfates having from 8 to 18 carbon atoms in the alkyl radical (e.g. sodium laureth sulfate; SLES), and fatty acid salts derived from oils or fats, e.g. from palm oil or tallow and having from 8 to 18 carbon atoms in the alkyl moiety (thus containing, inter alia, sodium oleate, linolate, palmitate, myristate, stearate etc.). The counter-cation is preferably an alkali metal cation, especially sodium or potassium, specifically sodium. Preferred carboxylates are alkali metal sarcosinates of formula $R\text{-}CON(R')CH_2COO^-M^+$ wherein R' is $C_9$-$C_{17}$-alkyl or $C_9$-$C_{17}$-alkenyl, R' is $C_1$-$C_4$-alkyl and $M^+$ is an alkali metal cation, especially $Na^+$.

Cationic surfactants are, for example, ammonium salts such as $C_8$-$C_{16}$-dialkyldimethylammonium halides, dialkoxydimethylammonium halides or imidazolinium salts with a long-chain alkyl radical.

Non-ionic surfactants are, for example, a primary or secondary alcohol ethoxylate, especially a $C_8$-$C_{20}$ aliphatic alcohol ethoxylated with an average of from 1 to 20 mol of ethylene oxide per alcohol group. Preference is given to primary and secondary $C_{10}$-$C_{15}$ aliphatic alcohols ethoxylated with an average of from 1 to 10 mol of ethylene oxide per alcohol group. Non-ethoxylated non-ionic surfactants, for example alkylpolyglycosides, glycerol monoethers and polyhydroxyamides (glucamide), may likewise be used.

Amphoteric surfactants are, for example, derivatives of secondary or tertiary amines, for example $C_6$-$C_{18}$-alkyl betaines (e.g. cocoamidopropyl betaine; disodium cocoamphodiacetate (DSCADA)) or $C_6$-$C_{15}$-alkyl sulfobetaines, or amine oxides such as alkyldimethylamine oxides.

Suitable organic solvents (d) are those mentioned above. Preferred organic solvents are thus $C_1$-$C_8$-alkanols, $C_2$-$C_8$-alkanediols, $C_1$-$C_8$-alkylmonoethers of $C_2$-$C_8$-alkanediols, polyetherpolyols, $C_1$-$C_8$-alkylmonoethers of polyetherpolyols, 5-, 6- or 7-membered lactones which may be substituted by one or more $C_1$-$C_{12}$-alkyl groups; 5-, 6- or 7-membered cyclic carbonates which may be substituted by one or more $C_1$-$C_{12}$-alkyl groups; aliphatic esters, carboxamides, aliphatic or alicyclic amine-N-oxides and mixtures of the afore-mentioned solvents. Examples for these solvent groups are mentioned above.

More preferably, the solvent is selected from $C_1$-$C_8$-alkylmonoethers of $C_2$-$C_8$-alkanediols (among which preference is given to $C_1$-$C_4$-alkylmonoethers of a $C_2$-$C_3$-alkanediol, such as the $C_1$-$C_4$-alkylmonoethers of ethylene glycol or propylene glycol, specific examples being ethylene glycol mono-n-butyl ether, also termed butylglyol, and in particular propylene glycol mono-n-butyl ether).

In another more preferred embodiment, the solvent (d) is a $C_2$-$C_8$-alkanediol, even more preferably a $C_2$-$C_4$-alkanediol and in particular a $C_2$-$C_3$-alkanediol, such as ethylene glycol, 1,2-propanediol and 1,3-propanediol, and specifically 1,2-propanediol (propylene glycol).

In another more preferred embodiment, the solvent (d) is a $C_1$-$C_8$-alkanol, even more preferably a $C_1$-$C_4$-alkanol, and in particular a $C_2$-$C_3$-alkanol, such as ethanol, n-propanol or isopropanol.

Examples for enzymes of component (e) are those typically used in laundry, dishwashing or cleaning compositions.

Enzyme herein means catalytically active proteins which are characterized by an amino acid sequence. Variants of an enzyme may be described by a certain sequence identity of an amino acid sequence of the variant when compared to a respective starting sequence. For calculation of sequence identities, in a first step a pairwise global sequence alignment has to be produced, meaning that two sequences have to be aligned over their complete length typically by using the algorithm of Needleman and Wunsch (J. Mol. Biol. (1979) 48, p. 443-453). Preferably, the program "NEEDLE" (The European Molecular Biology Open Software Suite (EMBOSS)) is used for the purposes of the current invention,

with using the programs default parameter (gap open=10.0, gap extend=0.5 and matrix=EBLOSUM62). In a second step, % identity is calculated: %-identity = (identical residues / length of the alignment region which is showing the respective sequence of this invention over its complete length) *100.

The enzymes are preferably selected from hydrolases, such as proteases, esterases, glucosidases, lipases, DNAses, amylases, cellulases, mannanases, other glycosylhydrolases and mixtures of the aforementioned enzymes. All these hydrolases contribute to dissolution and removal of soil from protein-, grease- or starch-containing stains/residues. For bleaching, it is also possible to use oxidoreductases. Particularly suitable are active enzymatic ingredients obtained from bacterial strains or fungi, such as Bacillus subtilis, Bacillus licheniformis, Streptomyceus griseus and Humicola insolens.

Preferred hydrolases are selected from the group of enzymes acting on ester bonds (esterases) (E.C. 3.1), glycosylases (E.C. 3.2), and peptidases (E.C. 3.4). Enzymes acting on ester bonds (E.C. 3.1), are for example lipases and DNAses. Glycosylases (E.C. 3.2) are for example amylases, cellulases, and mannanases. Peptidases are for example proteases.

Suitable hydrolases are, for example, $\alpha$-glucosidases (EC number 3.2.1.20), proteases (e.g. Ovozyme® (from Novozymes); EC number 3.2.1.20), amylases [e.g. Purastar® (from Genencor), Termamyl® (from Novozymes), Stainzyme® (from Novozymes), Duramyl® (from Novozymes)], mannanases [e.g. Purabrite® (from Genencor), Mannastar® (from Genencor), Mannaway® (from Novozymes)] and cellulases [e.g. Carezyme® (from Novozymes), Celluzyme® (from Novozymes), endolase, Puradax® (from Genencor)]. The suitable amylases include especially $\alpha$-amylases (EC number 3.2.1.1), iso-amylases, pullulanases and pectinases. The cellulases used are preferably cellobiohydrolases, endoglucanases and $\beta$-glucosidases, which are also referred to as cellobiases, or mixtures thereof. Since different cellulase types differ by their CMCase and Avicelase activities, it is possible to establish the desired activities by means of controlled mixtures of the cellulases.

Suitable lipases are for example Lipex and Lipolase. Examples of lipolytically active enzymes are the known cutinases.

Peroxidases or oxidases have also been found to be suitable in some cases.

In one aspect, the enzymes comprise at least one protease (EC 3.4). In a preferred embodiment, at least one protease is selected from serine proteases (EC 3.4.21), more preferably from subtilisins (EC 3.4.21.62). At least one subtilisin may have SEQ ID NO:22 as described in EP 1921147 (which may be called BLAP WT herein), or is a variant thereof which is at least 80% identical SEQ ID NO:22 as described in EP 1921147 and has proteolytic activity. In one embodiment, a subtilisin is at least 80% identical to SEQ ID NO:22 as described in EP 1921147 and is characterized by having amino acid glutamic acid (E), or aspartic acid (D), or asparagine (N), or glutamine (Q), or alanine (A), or glycine (G), or serine (S) at position 101 (according to BPN' numbering), preferably R101E.

In one embodiment, at least one subtilisin is at least 80% identical to SEQ ID NO:22 as described in EP 1921147 having the mutations (according to BPN' numbering) S3T + V4I + V205I. In one embodiment, at least one subtilisin is at least 80% identical to SEQ ID NO:22 as described in EP 1921147 having the mutations (according to BPN' numbering) S3T + V4I + R101E + V205I. In one embodiment, at least one subtilisin is at least 80% identical to SEQ ID NO:22 as described in EP 1921147 having the mutation (according to BPN' numbering) S3T + V4I + V199M + V205I + L217D. In one embodiment, at least one subtilisin has an amino acid sequence being at least 80% identical with SEQ ID NO:22 as described in EP 1921147 having the mutations S3T + V4I + S9R + A15T + V68A + D99S + R101S + A103S + I104V + N218D (according to the BPN' numbering). at least one subtilisin has an amino acid sequence at least 80% identical to SEQ ID NO:22 as described in EP 1921147 and having the mutation R101E together with one or more substitutions selected from the group consisting of S156D, L262E, Q137H, S3T, R45E,D,Q, P55N, T58W,Y,L, Q59D,M,N,T, G61 D,R, S87E, G97S, A98D,E,R, S106A,W, N117E, H120V,D,K,N, S125M, P129D, E136Q, S144W, S161T, S163A,G, Y171 L, A172S, N185Q, V199M, Y209W, M222Q, N238H, V244T, N261T,D and L262N,Q,D (as described in WO 2016/096711 and according to the BPN' numbering).

In one aspect, the enzymes comprise at least one amylase, preferably at least one alpha-amylase (EC 3.2.1.1). Preferably, the enzymes comprise at least one alpha-amylase selected from hybrid amylases. In one embodiment, the enzymes comprise at least one hybrid amylase at least 95% identical to SEQ ID NO: 23 of WO 2014/183920. In one embodiment, the enzymes comprise at least one hybrid amylase 95% identical to SEQ ID NO:30 of WO 2014/183921.

In one aspect, detergent formulations comprise at least one lipase, preferably at least one triacylglycerol lipase (EC 3.1.1.3).

Preferably, the enzymes comprise at least one at least one *Thermomyces lanuginosus* triacylglycerol lipase. In one embodiment, said lipase at least 80% identical to amino acids 1-269 of SEQ ID NO:2 of US5869438. In one embodiment, said lipase comprises at least the amino acid substitutions T231R and N233R. In one embodiment, the enzymes comprise at least one lipase comprising T231R and N233R and one or more of the following amino acid exchanges when compared to amino acids 1-269 of SEQ ID NO:2 of US5869438: Q4V, V60S, A150G, L227G, P256K.

In one embodiment, the enzymes comprise at least one lipase at least 95% identical to the full length polypeptide sequence of amino acids 1-269 of SEQ ID NO:1 of WO 2015/01009, preferably comprising at least the amino acid

substitutions N11K/A18K/G23K/K24A/V77I/D130A/V154I/V187T/T89Q or N11K/A18K/G23K/K24A/L75R/V77I/D130A/V154IA/187T/T189Q.

In one aspect, the enzymes comprise at least one cellulase, preferably at least one beta-1,4-glucanase (EC 3.2.1.4), also called endoglucanase herein. In one embodiment, the enzymes comprise at least one *Humicola insolens* DSM 1800 endoglucanase at least 80% identical to the amino acid sequence disclosed in Fig. 14A-E of WO 91/17244, preferably to the sequence according to amino acids 20-434. Preferably said endoglucanase having one or more substitutions at positions selected from 182, 223, and 231, most preferably selected from P182S, A223V, and A231V. In one embodiment, the enzymes comprise at least one endoglucanase at least 80% identical to a polypeptide according to SEQ ID NO: 2 of WO 95/02675. In one embodiment, the enzymes comprise at least one *Bacillus sp.* endoglucanase which is at least 80% identical to the amino acid sequence of position 1 to position 773 of SEQ ID NO: 2 of WO 2004/053039. In one embodiment, the enzymes comprise at least one *Thielavia terrestris* endoglucanase which is at least 80% identical to the amino acid sequence of position 1 to position 299 of SEQ ID NO:4 of WO 2004/053039.

In one aspect, the enzymes comprise at least one mannanase, preferably at least one beta-mannanase (EC 3.2.1.78). In one embodiment, the enzymes comprise at least one beta-mannanase selected from GH5 family mannanase. In one embodiment, the enzymes comprise at least one beta-mannanase at least 90% identical to SEQ ID NO:12 of WO 2018/184767. In one embodiment, the enzymes comprise at least one beta-mannanase at least 90% identical to SEQ ID NO:16 of WO 2018/184767. In one embodiment, the enzymes comprise at least one beta-mannanase at least 90% identical to SEQ ID NO:20 of WO 2018/184767. Preferably, the enzymes comprise at least one mannanase 95% identical to a polypeptide sequence of SEQ ID NO:20 of WO 2018/184767 having at least one substitution selected from A101V, E405G, and Y459F. In one embodiment, the enzymes comprise at least one beta-mannanase originating from *Trichoderma* organisms, such as those disclosed in WO 93/24622. Preferably, at least one beta-mannanase is 80% identical to SEQ ID NO:1 of WO 2008/009673. More preferably, the beta-mannanase according to SEQ ID NO:1 of WO 2008/009673 comprises at least one substitution selected from S3R, S66P, N113Y, V181H, L207F, A215T and F274L.

In one aspect, detergent formulations comprise at least one DNAse. In one embodiment, the enzymes comprise at least one DNAse at least 80% identical to SEQ ID NO: 1-24 and SEQ ID NO: 27-28 of WO 2019/081724 and WO 2019/081721. Preferably, the enzymes comprise at least one DNAse comprising one or both motifs selected from SEQ ID NO:25 and SEQ ID NO:26 of WO 2019/081724. In one embodiment, the enzymes comprise at least one DNAse comprising one or more motifs selected from SEQ ID NO:73, SEQ ID NO:74 and SEQ ID NO:75 of WO 2017/060493.

In case the composition is a dishwashing composition, this comprises preferably at least one protease and/or amylase. More preferably, it comprises an enzyme mixture. Preference is given, for example, to enzyme mixtures which comprise or consist of the following enzymes:

- protease and amylase,
- protease and lipase (or lipolytically active enzymes),
- protease and cellulase,
- protease and mannanase,
- amylase, cellulase and lipase (or lipolytically active enzymes),
- protease, amylase and lipase (or lipolytically active enzymes),
- protease, lipase (or lipolytically active enzymes) and cellulase,
- protease, lipase (or lipolytically active enzymes) and mannanase,
- protease, amylase, lipase (or lipolytically active enzymes) and mannanase.

Liquid automated dishwashing formulations usually comprise at least one subtilisin protease as disclosed herein in amounts of about 0.10% to 0.25% by weight, more preferably about 0.12% to 0.21% by weight, all relative to the total weight of the detergent formulation.

Liquid automated dishwashing formulations usually comprise at least one alpha-amylase as disclosed herein in amounts of about 0.002% to 0.015%by weight, more preferably 0.004 to 0.01% by weight, all relative to the total weight of the detergent formulation.

Liquid manual dishwashing formulations usually comprise at least one subtilisin protease as disclosed herein in amounts of about 0.005% to 0.15% by weight, more preferably about 0.01% to 0.1% by weight, all relative to the total weight of the detergent formulation.

Liquid manual dishwashing formulations usually comprise at least one alpha-amylase as disclosed herein in amounts of about 0.001% to 0.015% by weight, more preferably 0.002% to 0.015% by weight, all relative to the total weight of the detergent formulation. Liquid manual dishwashing formulations usually comprise at least one triacylglycerol lipase as disclosed herein in amounts of about 0.001% to 0.005% by weight, more preferably 0.001% to 0.002% by weight, all relative to the total weight of the detergent formulation.

Liquid manual dishwashing formulations usually comprise at least one endoglucanase as disclosed herein in

amounts of about 0.001% to 0.01% by weight, more preferably 0.002% to 0.009% by weight, all relative to the total weight of the detergent formulation. Liquid manual dishwashing formulations usually comprise at least one beta-mannanase as disclosed herein in amounts of about 0.0005% to 0.005% by weight, more preferably 0.0005% to 0.002% by weight, all relative to the total weight of the detergent formulation.

In case of surface cleaning compositions, similar preferences apply.

In case the composition is a laundry composition, this comprises preferably at least one of amylases, lipases, proteases and cellulases. More preferably, it comprises an enzyme mixture. A few exemplary mixtures are:

- protease and amylase,
- protease and cellulase,
- cellulase and amylase,
- amylase, cellulase and lipase (or lipolytically active enzymes),
- protease, amylase and lipase (or lipolytically active enzymes),
- protease, lipase (or lipolytically active enzymes) and cellulase,
- protease, lipase (or lipolytically active enzymes) and mannanase,
- protease, amylase, lipase (or lipolytically active enzymes) and mannanase.

Liquid laundry formulations usually comprise at least one subtilisin protease as disclosed herein in amounts of about 0.005% to 0.15% by weight, more preferably about 0.01% to 0.1 % by weight, all relative to the total weight of the detergent formulation. Liquid laundry formulations usually comprise at least one alpha-amylase as disclosed herein in amounts of about 0.001% to 0.015% by weight, more preferably 0.002% to 0.015% by weight, all relative to the total weight of the detergent formulation.

Liquid laundry formulations usually comprise at least one triacylglycerol lipase as disclosed herein in amounts of about 0.001 % to 0.005% by weight, more preferably 0.001 % to 0.002% by weight, all relative to the total weight of the detergent formulation. Liquid laundry formulations usually comprise at least one endoglucanase as disclosed herein in amounts of about 0.001 % to 0.01 % by weight, more preferably 0.002% to 0.009% by weight, all relative to the total weight of the detergent formulation.

Liquid laundry formulations usually comprise at least one beta-mannanase as disclosed herein in amounts of about 0.0005% to 0.005% by weight, more preferably 0.0005% to 0.002% by weight, all relative to the total weight of the detergent formulation.

The enzymes may be adsorbed onto carriers in order to protect them from premature decomposition.

If the composition comprises one or more enzymes, it may also comprise enzyme stabilizers (for more details see component (h)).

Enzymes or enzyme packages suitable for such compositions are commercially available. Examples are the Lavergy® brands from BASF.

Sequestrants (f), also termed builders, structural substances, framework substances, complexing agents, chelators, chelating agents or softeners, bind alkaline earth metals and other water-soluble metal salts without precipitating. They help to break up soil, disperse soil components, help to detach soil and in some cases themselves have a washing effect. Many of the sequenstrants listed below are multi-functional, meaning that the substances have additional functions, such as a dispersing activity or anti-greying properties.

Suitable sequestrants may be either organic or inorganic in nature. Examples are aluminosilicates, carbonates, phosphates and polyphosphates, polycarboxylic acids, polycarboxylates, hydroxycarboxylic acids, phosphonic acids, e.g. hydroxyalkylphosphonic acids, phosphonates, aminopolycarboxylic acids and salts thereof, and polymeric compounds containing carboxylic acid groups and salts thereof.

Suitable inorganic sequestrants are, for example, crystalline or amorphous aluminosilicates with ion-exchanging properties, such as zeolites. Crystalline silicates suitable as sequestrants are, for example, disilicates or sheet silicates, e.g. 5-$Na_2Si_2O_5$ or B-$Na_2Si_2O_5$ (SKS 6 or SKS 7). Suitable inorganic sequestrant substances based on carbonate are carbonates and hydrogencarbonates. These can be used in the form of their alkali metal, alkaline earth metal or ammonium salts. Customary phosphates used as inorganic sequestrants are alkali metal orthophosphates and/or polyphosphates, for example pentasodium triphosphate.

Suitable organic sequestrants are, for example, $C_4$-$C_{30}$-di-, -tri- and -tetracarboxylic acids, for example succinic acid, propanetricarboxylic acid, butanetetracarboxylic acid, cyclopentanetetracarboxylic acid, and alkyl- and alkenylsuccinic acids with $C_2$-$C_{20}$-alkyl or -alkenyl radicals. Suitable organic sequestrants are also hydroxycarboxylic acids and polyhydroxycarboxylic acids (sugar acids). These include $C_4$-$C_{20}$-hydroxycarboxylic acids, for example malic acid, tartaric acid, glutonic acid, mucic acid, lactic acid, glutaric acid, citric acid, tartronic acid, glucoheptonic acid, lactobionic acid, and sucrose-mono-, -di- and -tricarboxylic acid. Among these, preference is given to citric acid and salts thereof. Suitable organic sequestrants are also phosphonic acids, for example hydroxyalkylphosphonic acids or aminophosphonic acids, and the salts thereof. These include, for example, phosphonobutanetricarboxylic acid (2-phosphinobutane-1,2,4-tricarboxylic acid; PBTC), aminotris-methylenephosphonic acid ($N[CH_2PO(OH)_2]_3$), aminotris(methylenephosphonate), sodium salt (ATMP; $N[CH_2PO(ONa)_2]_3$), ethylenediaminetetra(methylenephosphonic acid) (EDTMPA), hexamethylenediamine(tetramethylenephosphonic acid), hexamethylenediamine(tetramethylenephosphonate), potassium salt ($C_{10}H_{(28-x)}N_2K_xO_{12}P_4$ (x=6)), bis(hexamethylene)triamine(pentamethylenephosphonic acid) ($(HO_2)POCH_2N[(CH_2)_2N[CH_2PO(OH)_2]_2]_2$), diethylenetriamine-penta-(methylenephosphonic acid) (DTPMP; $(HO)_2POCH_2N[CH_2CH_2N[CH_2PO(OH)_2]_2]_2$), diethylenetriaminepenta(methylenephosphonate), sodium salt ($C_9H_{(28-x)}N_3Na_xO_{15}P_5$ (x=7)); tetramethylene-triamine-pentaphosphonic acid, hydroxyethylamine diphosphonic acid, 2-hydroxyethyliminobis(methylenephosphonic acid) ($HOCH_2CH_2N[CH_2PO(OH)_2]_2$), morpholinomethanediphosphonic acid, 1-hydroxy-$C_1$- to $C_{10}$-alkyl-1,1-diphosphonic acids such as 1-hydroxyethane-1,1-diphosphonic acid (HEDP; $CH_2C(OH)[PO(OH)_2]_2$). Suitable organic sequestrants are moreover polyasparatic acids. Polyaspartic acid include salts of polyaspartic acids. Salt forming cations may be monovalent or multivalent, examples being sodium, potassium, magnesium, calcium, ammonium, and the ammonium salt of mono-, di- and triethanolamine. Such polymers may be co-polymers, in particular of (a) L- or D-aspartic acid (preferably L-aspartic acid), (b) a carboxylic acid and (c) a diamone or an amino alcohol. Such co-polymers generally comprise 70-95 mol% of (a), 5-30 mol% of (b) and 2-20 mol% of (c). The molar ratio of the carboxyl-containing compound (b) to the diamine or amino alcohol (c) is preferably between 5:1 and 1:1.5 or between 3:1 and 1:1.2, and more preferably between 3:1 and 1:1 or 2:1 and 1:1. Suitable organic sequestrants are additionally aminopolycarboxylic acids, such as nitrilotriacetic acid (NTA), nitrilomonoacetic dipropionic acid, nitrilotripropionic acid, β-alaninediacetic acid (β-ADA), ethylenediaminetetraacetic acid (EDTA), diethylenetriaminepentaacetic acid, 1,3-propylenediaminetetraacetic acid, 1,2-propylenediaminetetraacetic acid, N-(alkyl)ethylenediaminetriacetic acid, N-(hydroxyalkyl)ethylenediaminetriacetic acid, ethylenediaminetriacetic acid, cyclohexylene-1,2-diaminetetraacetic acid, iminodisuccinic acid, ethylenediaminedisuccinic acid, serinediacetic acid, isoserinediacetic acid, L-asparaginediacetic acid, L-glutaminediacetic acid, methylglycinediacetic acid (MGDA), and the salts of the aforementioned aminopolycarboxylic acids. Suitable organic sequestrants are additionally polymeric compounds containing carboxylic acid groups, such as acrylic acid homopolymers. The term "acrylic acid homopolymer" also comprises polymers in which some or all of the carboxylic acid groups are present in neutralized form. Suitable polymeric compounds containing carboxylic acid groups are also oligomaleic acids. Suitable polymeric compounds containing carboxylic acid groups are also terpolymers of unsaturated $C_4$-$C_8$-dicarboxylic acids. Suitable unsaturated $C_4$-$C_8$-dicarboxylic acids in this context are, for example, maleic acid (or maleic anhydride), fumaric acid, itaconic acid, aconitic acid, mesaconic acid, methylenemalonic acid and citraconic acid. Suitable polymeric compounds containing carboxylic acid groups are also homopolymers of the monoethylenically unsaturated $C_3$-$C_8$-monocarboxylic acids, for example acrylic acid, methacrylic acid, crotonic acid, 2-ethylacrylic acid, 2-phenylacrylic acid, cinnamic acid, vinylacetic acid and sorbic acid, copolymers of dicarboxylic acids, for example of maleic acid and acrylic acid; terpolymers of maleic acid, acrylic acid and a vinyl ester of a $C_1$-$C_3$-carboxylic acid; and copolymers of maleic acid with $C_2$-$C_8$-olefins.

Defoamer and/or foam stabilizer (g) are for example soaps, paraffins and silicone oils.

Further additives (h) are for example hydrotropic agents, acids, bases, buffering agents, enzyme stabilizers, bleaching agents, corrosion inhibitors, dyes, fragrances, thickeners, activity enhancers different from component (b) and inorganic salts.

Hydrotropic agents are compounds which solubilizes hydrophobic compounds in aqueous solution by means other than micellar solubilization. Similar to surfactants, hydrotropes often (but not necessarily) consist of a hydrophilic part and a hydrophobic part, but in contrast to surfactants the hydrophobic part is generally too small to cause spontaneous self-aggregation. Examples are aromatic sulfonic acid salts, such as the alkali metal, earth alkaline metal or ammonium salts of p-toluenesulfonic acid (e.g. sodium, potassium, calcium or ammonium p-tosylate), of xylene sulfonic acids (e.g. the sodium, potassium, calcium or ammonium salts of o-, m- or p-xylene sulfonates) or of cumene sulfonic acids, generally of p-cumene sulfonic acid (e.g. the sodium, potassium, calcium or ammonium salts of p-cumenesulfonate); adenosine triphosphate (ATP); and urea.

The acids can be inorganic or organic. Suitable inorganic acids are for example sulfuric acid, hydrochloric acd and phosphoric acid, where sulfuric acid is generally preferred. Suitable organic acids are for example aliphatic, saturated non-substituted $C_1$-$C_6$-mono-, di- and tri-carboxylic acids such as formic acid, acetic acid, propanoic acid, oxalic acid, succinic acid and glutaric acid; aliphatic, saturated $C_1$-$C_6$-mono-, di- and tri-carboxylic acids carrying one or more OH groups, such as lactic acid, tartric acid and citric acid; aliphatic, unsaturated $C_1$-$C_6$-mono-, di- and tri-carboxylic acids such as sorbic acid; aromatic carboxylic acids, such as benzoic acid, salicylic acid and mandelic acid; and sulfonic acids, such as methanesulfonic acid or toluenesulfonic acid. The organic acids mainly serve for adapting the pH of the composition, but some of them, e.g. the di-and tricarboxylic acids, can also act as sequestrants.

Suitable bases are in particular inorganic bases, such as the carbonates mentioned in context with the sequestrant, e.g. sodium or potassium carbonate; further alkali metal and earth alkaline meal hydroxides, such as NaOH or KOH.

Suitable buffering agents are the typical systems, such as hydrogenphosphate/dihydrogenphosphate buffer, carbonate/hydrogencarbonate buffer, acetic acid/acetate buffer or Tris buffer. Moreover, most of the above acids which are weak and the anion of which is not a strong salt also have buffering capacity.

If the composition comprises one or more enzymes, it may also comprise enzyme stabilizers, for example calcium propionate, sodium formate, boric acid or salts thereof, boronic acids and salts thereof, polyols, peptide aldehydes, and/or antioxidants.

Suitable boronic acids are for examples aromatic and heteroaromatic boronic acids, such as benzene boronic acid (BBA; also termed phenylboronic acid (PBA)), 4-formylphenylboronic acid (4-FPBA), 2-FPBA, 3-FPBA, 4-carboxyphenylboronic acid (4-CPBA), 4-(hydroxymethyl)-phenylboronic acid (4-HMPBA), p-tolylboronic acid (p-TBA), (2-acetamidophenyl)-boronic acid, 2-bromophenylboronic acid, 3-bromophenylboronic acid, 4-bromophenylboronic acid, 2-chlorophenylboronic acid, 3-chlorophenylboronic acid, 4-chlorophenylboronic acid, 2,4-dichlorophenylboronic acid, 3,5-dichlorophenylboronic acid, 4-fluorophenylboronic acid, 3-chloro-4-fluorophenylboronic acid, 1,3,5-trimethylphenylboronic acid, 3,5-bis-(trifluoromethyl)-phenylboronic acid, 4-methoxyphenylboronic acid, 4-(methylthio)-phenylboronic acid, 3-aminophenylboronic acid, 4-(trimethylsilyl)-phenylboronic acid, 4,4-biphenyl-diboronic acid, 1-naphthylboronic acid, 2-naphthylboronic acid, 6-hydroxy-2-naphthaleneboronic acid, 9-anthraceneboronic acid, 2-furanylboronic acid, 3-furanylboronic acid, 2-thienylboronic acid, 3-thienylboronic acid, 5-chlorothiopheneboronic acid, 3-bromothiopheneboronic acid, 5-bromothiopheneboronic acid, 5-methyl-2-thienylboronic acid, 4-methylthiopheneboronic acid, dimethylthiopheneboronic acid, 3-methoxy-2-thiopheneboronic acid, 2-benzofuranylboronic acid, 4-dibenzofuranboronic acid, 1-benzothiophene-2-boronic acid, dibenzothiophene boronic acid, 1-thianthrenylboronic acid and 2-thianthrenylboronic acid. Further examples are p-methyl-phenylethylboronic acid, diphenyl boronic acid anhydride and octyl boronic acid. Suitable are also mixtures of two or more different boronic acids. Suitable salts of the above-mentioned boronic acids are for example the alkali metal salts, such as the sodium or potassium salts, the earth alkaline metal salts, such as the magnesium and calcium salts, and ammonium salts.

Suitable polyols are for example polyols containing from 2 to 6 hydroxyl groups, such as ethylene glycol, propylene glycol, 1,2-propanediol, 1,2-butanediol, 1,2-pentanediol, hexyleneglycol, glycerol, sorbitol, mannitol, erythriol, glucose, fructose, and lactose.

Peptide aldehydes are oligopeptides with reduced C-terminus (i.e. in which the C(O)OH group is reduced to an aldehyde [CH(O)] group) Suitable peptide aldehydes are for example di-, tri- or tetrapeptide aldehydes and aldehyde analogues (either of the form $B^1$-BO-R wherein, R is H, $CH_3$, $CX_3$, $CHX_2$, or $CH_2X$ (where X = halogen), BO is a single amino acid residue including such with an optionally substituted aliphatic or aromatic side chain; and $B^1$ stands for one or more (e.g. 1, 2 or 3) amino acid(s), optionally comprising an N-terminal protection group, or is a protease inhibitor of the protein type such as RASI, BASI, WASI (bifunctional alpha-amylase/ subtilisin inhibitors of rice, barley and wheat) or $CI_2$ or SSI.

A suitable bleaching agent is hydrogen peroxide.

Moreover, as mentioned above, some enzymes have bleaching properties.

Dyes can be added to obtain a specific aesthetic appearance, but also be used as shading dyes for reducing or avoiding (auto-)oxidation of components of the composition, especially of unsaturated organic compounds, triggered by UV or visible light (e.g. if the container in which the composition is kept allows transmission of UV or visible light) and/or transition metal ion catalysis (if present). If used as shading dyes, these impart generally a violet or blue color. Shading dyes are particularly useful in laundry compositions, such as laundry detergents or textile softening compositions, where they can help avoiding yellowing of the textiles.

Examples for shading dyes are direct dyes (also known as substantive dyes; water soluble dyes with an affinity for fibres and which are taken up directly; generally azo dyes), e.g. violet 7, direct violet 9, direct violet 11, direct violet 26, direct violet 31, direct violet 35, direct violet 40, direct violet 41, direct violet 51, and direct violet 99; moreover direct violet 66; acid dyes, such as azine dyes, e.g. acid blue 98, acid violet 50, and acid blue 59, more preferably acid violet 50 and acid blue 98; or non-azine dyes, e.g. acid violet 17, acid black 1 and acid blue 29; hydrophobic dyes (dyes which do not contain any charged water solubilising group; generally selected from the groups of disperse and solvent dyes, in particular blue and violet anthraquinone and mono-azo dyes, e.g. solvent violet 13, disperse violet 27 disperse violet 26, disperse violet 28, disperse violet 63 and disperse violet 77; basic dyes (organic dyes which carry a net positive charge and deposit onto cotton), e.g. triarylmethane basic dyes, methane basic dye, anthraquinone basic dyes, basic blue 16, basic blue 65, basic blue 66, basic blue 67, basic blue 71, basic blue 159, basic violet 19, basic violet 35, basic violet 38, basic violet 48; basic blue 3, basic blue 75, basic blue 95, basic blue 122, basic blue 124, basic blue 141; reactive dyes (dyes which contain an organic group capable of reacting with cellulose and linking the dye to cellulose with a covalent bond, and deposit onto cotton), e.g. reactive blue 19, reactive blue 163, reactive blue 182 and reactive blue, reactive blue 96; and dye conjugates (formed by binding direct, acid or basic dyes to polymers or particles via physical forces).

Fragrances can be of natural or synthetic origin; their nature is in general not critical. Just by way of example, natural aromatic substances are, for instance, extracts from blossom (lilies, lavender, roses, jasmine, neroli, ylang-ylang), from stems and leaves (geranium, patchouli, petitgrain), from fruit (aniseed, coriander, carraway, juniper), from fruit peel (bergamot, lemons, oranges), from roots (mace, angelica, celery, cardamom, costus, iris, calmus), from wood (pinewood, sandalwood, guaiacum wood, cedarwood, rosewood), from herbs and grasses (tarragon, lemon grass, sage, thyme),

from needles and twigs (spruce, pine, Scots pine, mountain pine), from resins and balsams (galbanum, elemi, benzoin, myrrh, olibanum, opoponax). Animal raw materials also come into consideration, for example civet and castoreum. Also just by way of example, synthetic aromatic substances are, for instance, products of the ester, ether, aldehyde, ketone, alcohol or hydrocarbon type. Aromatic substance compounds of the ester type are, for example, benzyl acetate, phenoxyethyl isobutyrate, p-tert-butylcyclohexyl acetate, linalyl acetate, dimethylbenzylcarbinyl acetate, phenylethyl acetate, linalyl benzoate, benzyl formate, ethylmethylphenyl glycinate, allylcyclohexyl propionate, styrallyl propionate and ben¬zyl salicylate. The ethers include, for example, benzyl ethyl ether; the aldehydes include, for example, the linear alkanals having from 8 to 18 hydrocarbon atoms, citral, citronellal, citronellyl oxyacetaldehyde, cyclamen aldehyde, hydroxycitronellal, lilial and bourgeonal; the ketones include, for example, the ionones, isomethylionone and methyl cedryl ketone; the alcohols include, for example, anethol, citronellol, eugenol, isoeugenol, geraniol, linalool, phenyl ethyl alcohol and terpinol; and the hydrocarbons include mainly the terpenes and balsams. It is preferable, however, to use mixtures of various aromatic substances that together produce an attractive scent. Ethereal oils of relatively low volatility, which are chiefly used as aroma components, are also suitable as perfume oils, e.g. sage oil, chamomile oil, clove oil, melissa oil, oil of cinnamon leaves, lime blossom oil, juniper berry oil, vetiver oil, olibanum oil, galbanum oil, labolanum oil and lavandin oil. Preference is given to the use of bergamot oil, dihydromyrcenol, lilial, lyral, citronellol, phenyl ethyl alcohol, hexyl cinnamaldehyde, geraniol, benzyl acetone, cyclamen aldehyde, linalool, boisambrene forte, ambroxan, indole, hedione, sandelice, lemon oil, tangerine oil, orange oil, allyl amyl glycolate, cyclovertal, lavandin oil, muscatel sage oil, damascone, bourbon geranium oil, cyclohexyl salicylate, vertofix coeur, iso-E-Super, Fixolide NP, evernyl, iraldein gamma, phenylacetic acid, geranyl acetate, benzyl acetate, rose oxide, romillat, irotyl and floramat alone or in admixture with one another.

Further examples are alpha-hexylcinnamaldehyde, 2-phenoxyethyl isobutyrate (Phenirat[1]), dihydromyrcenol (2,6-dimethyl-7-octen-2-ol), methyl dihydrojasmonate (preferably having a cis-isomer content of more than 60 wt.%) (Hedione[9], Hedione HC[9]), 4,6,6,7,8,8-hexamethyl-1,3,4,6,7,8- hexahydrocyclopenta[g]benzopyran (Galaxolide[3]), tetrahydrolinalool (3,7-dimethyloctan-3-ol), ethyl linalool, benzyl salicylate, 2-methyl-3-(4-tertbutylphenyl)propanal (Lilial[2]), cinnamyl alcohol, 4,7-methano-3a,4,5,6,7,7a-hexahydro-5-indenyl acetate and/or 4,7-methano-3a,4,5,6,7,7a hexahydro-6-indenyl acetate (Herbaflorat[1]), citronellol, citronellyl acetate, tetrahydrogeraniol, vanillin, linalyl acetate, styralyl acetate (1-phenylethyl acetate), octahydro-2,3,8,8-tetramethyl-2-acetonaphthone and/or 2-acetyl-1,2,3,4,6,7,8-octahydro-2,3,8,8-tetramethylnaphthalene (Iso E Super[3]), hexyl salicylate, 4-tert-butylcyclohexyl acetate (Oryclone[1]), 2-tert-butylcyclohexyl acetate (Agrumex HC[1]), alpha-ionone (4-(2,2,6-trimethyl-2-cyclohexen-1-yl)-3-buten-2-one), nalpha-methylionone, alpha-isomethylionone, coumarin, terpinyl acetate, 2-phenylethyl alcohol, 4-(4-hydroxy-4-methylpentyl)-3-cyclohexenecarboxaldehyde (Lyral[3]), alphaamylcinnamaldehyde, thylene brassylate, (E)- and/or (Z)-3-methylcyclopentadec-5-enone (Muscenone[9]), 15-pentadec-11-enolide and/or 15-pentadec-12-enolide (Globalide[1]), 15-cyclopentadecanolide (Macrolide[1]), 1-(5,6,7,8-tetrahydro-3,5,5,6,8,8-hexamethyl-2-naphthalenyl)ethanone (Tonalide[10]), 2-isobutyl-4-methyltetrahydro-2H-pyran-4-ol (Florol9), 2-ethyl-4-(2,2,3-trimethyl-3-cyclopenten-1-yl)-2-buten-1-ol (Sandolene[1]), cis-3-hexenyl acetate, trans-3-hexenyl acetate, trans-2-cis--6-nonadienol, 2,4-dimethyl-3-cyclohexenecarboxaldehyde (Vertocitral[1]), 2,4,4,7-tetramethyl-oct-6-en-3-one (Claritone[1]), 2,6-dimethyl-5-hepten-1-al (Melonal[2]), borneol, 3-(3-isopropylphenyl)butanal (Florhydral2), 2-methyl-3-(3,4-methylenedioxyphenyl)propanal (Helional[3]), 3-(4-ethylphenyl)-2,2-dimethylpropanal (Florazon[1]), 7-methyl-2H-1,5-benzodioxepin-3(4H)-one (Calone19515), 3,3,5-trimethylcyclohexyl acetate (preferably with a content of cis-isomers of 70 wt.%) or more and 2,5,5-trimethyl-1 ,2,3,4,4a,5,6,7-octahydronaphthalen-2-ol (Ambrinol S[1]).

If trade names are specified above, these refer to the following sources:

1 Trade name of Symrise GmbH, Germany;
2 Trade name of Givaudan AG, Switzerland;
3 Trade name of International Flavors & Fragrances Inc., USA;
5 Trade name of Danisco Seillans S.A., France;
9 Trade name of Firmenich S.A., Switzerland;
10 Trade name of PFW Aroma Chemicals B.V., The Netherlands.

The fragrances may optionally be incorporated in encapsulated form.

The thickeners serve to impart the desired viscosity to the composition of the invention.

Any known thickener (rheology modifier) is suitable in principle, provided that it does not exert any adverse effect on the efficacy of the composition. Suitable thickeners may either be of natural origin or of synthetic nature.

Thickeners of natural origin are mostly derived from polysaccharides. Examples are xanthan, gellan gum, carob flour, guar flour or gum, carrageenan, agar, tragacanth, gum arabic, alginates, modified starches such as hydroxyethyl starch, starch phosphate esters or starch acetates, dextrins, pectins and cellulose derivatives, such as carboxymethylcellulose, hydroxyethylcellulose, hydrophobically modified hydroxyethyl cellulose, hydroxypropylcellulose, hydroxypropylmethylcellulose, methylcellulose and the like. Further examples are bacterial cellulose, meaning any type of cellulose

produced via fermentation of a bacteria of the genus *Acetobacter* such as CELLULON® (CPKelco U.S.) and including materials referred to as microfibrillated cellulose or reticulated bacterial cellulose; and non-bacterial cellulose, e.g. cellulosic fibers extracted from vegetables, fruits or wood, e.g. Avicel® from FMC, Citri-Fi from Fiberstar or Beta-fib from Cosun.

Thickeners of natural origin are also inorganic thickeners, such as polysilicic acids and clay minerals, for example sheet silicates, and also the silicates mentioned for the builders. More specific examples are listed in the following table. Most are derived from smectite clays and silica derivatives.

Examples of synthetic thickeners are polyacrylic and polymethacrylic compounds, such as (partly) crosslinked homopolymers of acrylic acid, for example homopolymers of acrylic acid which have been crosslinked with an allyl ether of sucrose or pentaerythritol, or with propylene (carbomers), for example the Carbopol® brands from BF Goodrich (e.g. Carbopol® 676, 940, 941, 934 and the like) or the Polygel® brands from 3V Sigma (e.g. Polygel® DA), copolymers of ethylenically unsaturated mono- or dicarboxylic acids, for example terpolymers of acrylic acid, methacrylic acid or maleic acid with methyl acrylate or ethyl acrylate and a (meth)acrylate which derives from long-chain ethoxylated alcohols, for example the Acusol® brands from Rohm & Haas (e.g. Acusol® 820 or 1206A), copolymers of two or more monomers which are selected from acrylic acid, methacrylic acid and the $C_1$-$C_4$-alkyl esters thereof, for example copolymers of methacrylic acid, butyl acrylate and methyl methacrylate or of butyl acrylate and methyl methacrylate, for example the Aculyn® and Acusol® brands from Rohm & Haas (e.g. Aculyn® 22, 28 or 33 and Acusol® 810, 823 and 830), or crosslinked high molecular weight acrylic acid copolymers, for example copolymers of $C_{10}$-$C_{30}$-alkyl acrylates with one or more comonomers selected from acrylic acid, methacrylic acid and the $C_1$-$C_4$-alkyl esters thereof, said copolymers having been crosslinked with an allyl ether of sucrose or pentaerythritol (e.g. Carbopol® ETD 2623, Carbopol® 1382 or Carbopol® AQUA 30 from Rohm & Haas).

Suitable thickeners are moreover phospholipids, such as alkylated phosphatidyl choline, phosphobetaines or alkyl phosphate quaternary compounds.

Examples of synthetic thickeners are also reaction products of maleic acid polymers with ethoxylated long-chain alcohols, for example the Surfonic L series from Texaco Chemical Co. or Gantrez AN-119 from ISP; polyethylene glycols, polyamides, polyimines and polycarboxylic acids.

Examples of synthetic thickeners are moreover dibenzylidene polyol acetal derivatives (DBPA derivative). These may comprise a dibenzylidene sorbitol acetal derivative (DBS). Said DBS derivative may be selected from the group consisting of: 1,3:2,4-dibenzylidene sorbitol; 1,3:2,4-di(p-methylbenzylidene) sorbitol; 1,3:2,4-di(p-chlorobenzylidene) sorbitol; 1,3:2,4-di(2,4-dimethyldibenzylidene) sorbitol; 1,3:2,4-di (p-ethyl-benzylidene) sorbitol; 1,3:2,4-di(3,4-dimethyldibenzylidene) sorbitol; and mixtures thereof.

Suitable thickeners are moreover di-amido gellants, e.g. selected from those having a molecular weight from about 150g/mol to about 1,500g/mol, or even from about 500g/mol to about 900 g/mol. Such di-amido gellants may comprise at least two nitrogen atoms, wherein at least two of said nitrogen atoms form amido functional substitution groups. The amido groups may be different or identical. Examples are compounds of the formula $R^a$-C(=O)-NH-L-C(=O)-$R^b$, where $R^a$ and $R^a$ are amino functional endgroups or amido functional end groups, and L is a linking moiety of molecular weight from 14 to 500 g/mol. $R^a$ and $R^b$ may comprise a pH-tunable group, wherein the pH-tunable amido-gellant may have a pKa of from about 1 to about 30, or even from about 2 to about 10. The pH tunable group may comprise a pyridine. L may comprise a carbon chain comprising between 2 and 20 carbon atoms. L may comprise a pH-tunable group. The pH-tunable group may be a secondary amine.

Examples of synthetic thickeners are also non-polymeric crystalline, hydroxyl functional structurants . Said compound may comprise a crystallizable glyceride which can be pre-emulsified to aid dispersion into the final liquid detergent formulation. The crystallizable glycerides may comprise hydrogenated castor oil or "HCO" or derivatives thereof, provided that it is capable of crystallizing in the liquid formulation.

Also suitable are mixtures of the abovementioned thickeners.

Suitable activity enhancers different from component (b) are in particular PEI.

PEI are polymers of ethylenediamine and can be characterized by repeating groups of the empirical formula $-[CH_2-CH_2-NH]_n-$ wherein n ranges from approximately from 10 to 100,000, e.g. from 10 to 15000. PEI can be linear or branched (branched forms are not correctly reflected in the above formula; nevertheless the formula should also symbolize branched forms), where branching can result in dendrimers, star-like polymers, hyperbranched polymers and other branched forms. Branched polyethylenimines can be characterized by their degree of branching (DB). DB may be determined, for example, by $^{13}$C-NMR spectrometry and is defined as follows:

$$DB = D + T/D + T + L$$

wherein D stands for the fraction of tertiary amino groups, L (linear) stands for the fraction of secondary amino groups, and T (terminal) stands for the fraction of primary amino groups. Preferably, DB ranges from 0.1 to 0.95, more preferably

from 0.25 to 0.90, in particular from 0.30 to 0.80, and specifically from 0.5-0.8.

Preferably, the PEIs used in the present compositions have weight average molecular weight $M_w$ of from 500 to 1,000,000 g/mol, more preferably from 600 to 75,000 g/mol, and in particular from 800 to 25000 g/mol, as determined by gel permeation chromatography (GPC with PEG or PMMA standard; specifically with multi angle light scattering (MALS) detector of the intermediate respective polyalkylenimine, with 1.5% by weight aqueous formic acid as eluent and cross-linked poly-hydroxyethyl methacrylate as stationary phase).

In a specific embodiment, the PEIs used in the present compositions are grafted with ethylene oxide (EO) and/or propylene oxide (PO). Typically, the PEI is grafted with 5 to 100 mol of alkylene oxide per mol of PEI.

If present, the PEI is typically contained in the homecare or I&I composition in an amount of from 0.001 to 10% by weight, preferably from 0.001 to 1% by weight, relative to the total weight of the composition.

Suitable PEIs are commercially available, e.g. under the Lupasol® and Sokolan® HP brands from BASF.

Suitable inorganic salts are for example sodium chloride and calcium chloride.

In a particular embodiment, the composition (A or B) of the invention is a dishwashing composition. Dishwashing compositions preferably comprise:

(a) 0.001 to 7% by weight, relative to the total weight of the composition, of an antimicrobial agent as defined above;
(b) 0.001 to 7% by weight, relative to the total weight of the composition, of an α-hydroxyketone of the formula (I) or a mixture of different α-hydroxyketones of the formula (I) as defined above;
(c) 0.1 to 40% by weight, relative to the total weight of the composition, of one or more surfactants;
(d) 0 to 15% by weight, relative to the total weight of the composition, of at least one organic solvent, preferably as defined above;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of a further additive; and
(i) 10 to 99.898% by weight, relative to the total weight of the composition, of water;

where components (a) to (i) add to 100% by weight.

Such dishwashing compositions are in liquid or gel form and are suitable both for machine washing as well as for manual dishwashing. As a matter of course, manual dishwashing compositions have to be adapted so as not to present any hazard for the user. For instance, the amount of optionally present acids and/or bases is such that the resulting pH does not harm the user's skin.

Suitable and preferred components (a) to (h) are those listed above.

Dishwashing compositions may further comprise as component (h) anti-greying polymers and scale inhibitor or scale dispersing agents.

More particularly, the composition (A or B) of the invention is a dishwashing composition comprising:

(a) 0.001 to 5% by weight, relative to the total weight of the composition, of at least one antimicrobial agent as defined above;
(b) 0.01 to 7% by weight, relative to the total weight of the composition, of an α-hydroxyketone of the formula (I) or a mixture of different α-hydroxyketones of the formula (I) as defined above;
(c) 5 to 25% by weight, relative to the total weight of the composition, of one or more surfactants;
(d) 0 to 5% by weight, relative to the total weight of the composition, of at least one organic solvent, preferably as defined above;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of a further additive; and
(i) 10 to 94.989% by weight, relative to the total weight of the composition, of water;

where components (a) to (i) add to 100% by weight.

In a specific embodiment, the antimicrobial agent (a) is 2-phenoxyethanol, and this is contained in an amount of from 0.1 to 5% by weight, e.g. 0.1 to 2% by weight, relative to the total weight of the composition; and the α-hydroxyketone (b) is contained in an amount of from 0.1 to 7% by weight.

In another particular embodiment, the composition (A or B) of the invention is a laundry composition. Laundry compositions preferably comprise:

(a) 0.001 to 7% by weight, relative to the total weight of the composition, of at least one antimicrobial agent as

defined above;

(b) 0.001 to 7% by weight, relative to the total weight of the composition, of at least one α-hydroxyketone of the formula (I) or a mixture of different α-hydroxyketones of the formula (I) as defined above;

(c) 0.1 to 40% by weight, relative to the total weight of the composition, of one or more surfactants;

(d) 0 to 15% by weight, relative to the total weight of the composition, of at least one organic solvent, preferably as defined above;

(e) 0 to 6% by weight, relative to the total weight of the composition, of at least one enzyme;

(f) 0 to 20% by weight, relative to the total weight of the composition, of at least one sequestrant;

(g) 0 to 8% by weight, relative to the total weight of the composition, of at least one defoamer and/or foam stabilizer;

(h) 0 to 50% by weight, relative to the total weight of the composition, of at least one further additive; and

(i) 10 to 99.898% by weight, relative to the total weight of the composition, of water;

where components (a) to (i) add to 100% by weight.

Such laundry compositions are in liquid or gel form and are suitable both for machine washing as well as for manual laundry washing. As a matter of course, manual laundry compositions have to be adapted so as not to present any hazard for the user. For instance, the amount of optionally present acids and/or bases is such that the resulting pH does not harm the user's skin.

Suitable and preferred components (a) to (h) are those listed above.

Examples for laundry compositions are laundry detergents, fabric softeners, rinsing compositions, bleacher compositions, and stain remover compositions.

Laundry detergents may further comprise as component (h) dye transfer inhibitors, anti-greying polymers, soil release polymers, anti-redeposition agents, anti-shrinking agents, anti-wrinkle agents, ironing aids, skin benefit agents, antistatic agents, processing aids, such as electrolyts, pearlisers, opacifiers, sunscreens, and/or antioxidants.

The terms anti-greying and anti-redeposition agents are often used interchangeably. Suitable examples for such agents are the aforementioned PEIs in grafted (alkoxylated) or ungrafted form, other alkyleneimine polymers, such as polypropyleneimine (PPI), also in grafted or ungrafted form, further ethoxylated hexamethylene diamine polymers which are quaternized and - optionally but preferably - sulfated, and graft polymer GP comprising as a graft base a polyether and as grafted side chains copolymers comprising at least one comonomer (CM) as described below.

The ethoxylated hexamethylene diamine polymers preferably contain in average 10 to 50, more preferably 15 to 40 and even more preferably 20 to 30 EO (ethoxylate) groups per NH group, resulting in an average molecular weight Mw in the range from 2,000 to 10,000 g/mol, more preferably 3,000-8,000, most preferably 4,000-6,000. In a preferred embodiment the ethoxylated hexamethylene diamine is quaternized and also sulfated, preferably bearing 2 cationic ammonium groups and 2 anionic sulfate groups.

In the graft polymer GP, the side chains comprise at least one comonomer (CM) selected from

$CH_2$=CH-O-C(O)-$R^a$ (CM-Ia)

$CH_2$=CH-$CH_2$-O-C(O)-$R^a$ (CM-Ib)

$CH_2$=CZ-CO-$OR^b$ (CM-Ic)

wherein $R^a$ is selected from $C_1$-$C_{21}$-alkyl, for example methyl, n-propyl, n-pentyl, n-heptyl, n-nonyl, iso-nonyl, n-undecyl, n-tridecyl, n-pentadecyl, n-heptadecyl, or n-nonadecyl, $R^b$ is selected from $C_2$-$C_{20}$-alkyl, preferably with an even number of carbon atoms, for example ethyl, n- and iso propyl, n-hexyl, isohexyl, sec-hexyl, n-heptyl, n-octyl, 2-ethylhexyl, n-nonyl, n-decyl or isodecyl, n-$C_{12}H_{25}$, n-$C_{14}H_{29}$, n-$C_{16}H_{33}$ or n-$C_{18}H_{37}$, and Z is selected from hydrogen and methyl, hydrogen bring preferred.

In the graft polymer GP, the polyethers bear at least 5 ether groups per mole and - if at all - only hydroxyl groups, for example one, two or three hydroxyl groups per molecule. Such hydroxyl groups may be primary or secondary hydroxyl groups, primary hydroxyl groups being preferred. The polyethers are preferably polyethylene glycols, for example with an average molecular weight $M_n$ in the range of from 500 to 25,000 g/mol, preferably 1,000 to 15,000 g/mole and even more preferably 1,500 to 10,000 g/mol, e.g. 1,500 to 4,000 g/mol or 4,000 to 6,000 g/mol or 5,000 to 8,000 g/mol. Alternatively, the polyethers are preferably polypropylene glycols, for example with an average molecular weight $M_n$ in the range of from 500 to 20,000 g/mol, preferably 2,000 to 10,000 g/mol and even more preferably 4,000 to 9,000 g/mol Alternatively, the polyethers are copolymers of ethylene glycol and propylene glycol units, for example random copolymers and preferably block copolymers, for example di-block copolymers and tri-block copolymers. Preferably, copolymers of ethylene glycol and propylene glycol are block copolymers. The polyethylene glycols, polypropylene glycols and EO-PO block copolymers can be non-capped or end-capped with $C_1$-$C_{20}$-alkyl or $C_3$-$C_{20}$-2-hydroxyalkyl.

Other examples for anti-greying agents are carboxymethyl cellulose (CMC), ether sulfonic acid salts of starch,

ether sulfonic acid salts of cellulose, acidic sulfuric acid ester salts of cellulose, acidic sulfuric acid ester salts of starch, methyl cellulose, ethyl cellulose, hydroxyethyl cellulose, hydroxypropyl cellulose methyl hydroxyethyl cellulose, methyl carboxymethyl cellulose, ethyl hydroxyethyl cellulose and mixtures thereof.

Further examples for anti-greying agents are polyalkylene oxide polymers (ethylene oxide, propylene oxide and/or butylene oxide polymers) grafted with methyl acrylate, ethyl acrylate, methyl methacrylate and/or ethyl methacrylate.

In fabric softeners, at least a part of the detergent (c) described above is replaced by a softening agent.

Suitable softening agents are quaternary ammonium salts, especially quats or ester quats. Quats are compounds $[NR^1R^2R^3R^4]^+X^-$, wherein $R^1$, $R^2$, $R^3$ and $R^4$ are alkyl groups, where at least one, generally two is/are long-chained alkyl and the others are generally methyl or ethyl, and $X^-$ is a counter anion, such as chloride. Examples are DSDMAC (distearyl dimethyl ammonium chloride, also termed DODMAC (dioctadecyl dimethyl ammonium chloride)), TDMAC (ditallow di-methyl ammonium chloride), DHTDMAC (di(hydrogenated tallow alkyl) dimethyl ammonium chloride) and DDAC-C10 (didecyldimethylammonium chloride. Esterquats are derived from alkanolamines in which at least one alkanol group is esterified with a fatty acid. Typically, esterquats are derived from methyl-triethanol-ammmonium salts, where 1, 2 or 3 of the OH groups are esterified with a fatty acid, and from dimethyl-diethanol-ammonium salts, where 1 or 2 OH groups are esterified with a fatty acid. Preference is given to esterquats.

More particularly, the composition (A or B) of the invention is a laundry composition comprising:

(a) 0.001 to 5% by weight, relative to the total weight of the composition, of at least one antimicrobial agent as defined above;
(b) 0.01 to 7% by weight, relative to the total weight of the composition, of an $\alpha$-hydroxyketone of the formula (I) or a mixture of different $\alpha$-hydroxyketones of the formula (I) as defined above;
(c) 4 to 30% by weight, relative to the total weight of the composition, of one or more surfactants;
(d) 0 to 5% by weight, relative to the total weight of the composition, of at least one organic solvent, preferably as defined above;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of at least one further additive; and
(i) 10 to 95.989% by weight, relative to the total weight of the composition, of water;

where components (a) to (i) add to 100% by weight.

In a specific embodiment, the antimicrobial agent (a) is 2-phenoxyethanol, and this is contained in an amount of from 0.1 to 5% by weight, e.g. 0.1 to 2% by weight, relative to the total weight of the composition; and the $\alpha$-hydroxyketone (b) is contained in an amount of from 0.1 to 7% by weight.

In a particular embodiment, the composition (A or B) of the invention is a surface cleaning composition. Surface cleaning compositions preferably comprise:

(a) 0.001 to 7% by weight, relative to the total weight of the composition, of at least one antimicrobial agent as defined above;
(b) 0.001 to 7% by weight, relative to the total weight of the composition, of an $\alpha$-hydroxyketone of the formula (I) or a mixture of different $\alpha$-hydroxyketones of the formula (I) as defined above;
(c) 0.1 to 40% by weight, relative to the total weight of the composition, of one or more surfactants;
(d) 0 to 15% by weight, relative to the total weight of the composition, of at least one organic solvent, preferably as defined above;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of at least one further additive; and
(i) 10 to 99.898% by weight, relative to the total weight of the composition, of water;

where components (a) to (i) add to 100% by weight.

Such surface cleaning compositions are in liquid or gel form and are suitable for manual use. As a matter of course, surface cleaning compositions for household use have to be adapted so as not to present any hazard for the user. For instance, the amount of optionally present acids and/or bases is such that the resulting pH does not harm the user's skin.

Suitable and preferred components (a) to (h) are those listed above.

Surface cleaning compositions may further comprise as component (h) anti-greying polymers and scale inhibitor

or scale dispersing agents.

More particularly, the composition (A or B) of the invention is a surface cleaning composition. Surface cleaning compositions preferably comprise:

(a) 0.001 to 5% by weight, relative to the total weight of the composition, of at least one antimicrobial agent as defined above;
(b) 0.001 to 5% by weight, relative to the total weight of the composition, of an α-hydroxyketone of the formula (I) or a mixture of different α-hydroxyketones of the formula (I) as defined above;
(c) 0.1 to 30% by weight, relative to the total weight of the composition, of one or more surfactants;
(d) 0 to 8% by weight, relative to the total weight of the composition, of at least one organic solvent, preferably as defined above;
(e) 0 to 3% by weight, relative to the total weight of the composition, of at least one enzyme;
(f) 0 to 10% by weight, relative to the total weight of the composition, of at least one sequestrant;
(g) 0 to 4% by weight, relative to the total weight of the composition, of at least one defoamer and/or foam stabilizer;
(h) 0 to 25% by weight, relative to the total weight of the composition, of at least one further additive; and
(i) 10 to 99.898% by weight, relative to the total weight of the composition, of water;

where components (a) to (i) add to 100% by weight.

Even more particularly, the composition (A or B) of the invention is a surface cleaning composition comprising:

(a) 0.001 to 5% by weight, relative to the total weight of the composition, of at least one antimicrobial agent as defined above;
(b) 0.01 to 5% by weight, relative to the total weight of the composition, of an α-hydroxyketone of the formula (I) or a mixture of different α-hydroxyketones of the formula (I) as defined above;
(c) 0.1 to 25% by weight, relative to the total weight of the composition, of one or more surfactants;
(d) 0 to 5% by weight, relative to the total weight of the composition, of at least one organic solvent, preferably as defined above;
(e) 0 to 3% by weight, relative to the total weight of the composition, of at least one enzyme;
(f) 0 to 10% by weight, relative to the total weight of the composition, of at least one sequestrant;
(g) 0 to 4% by weight, relative to the total weight of the composition, of at least one defoamer and/or foam stabilizer;
(h) 0 to 25% by weight, relative to the total weight of the composition, of at least one further additive; and
(i) 10 to 99.739% by weight, relative to the total weight of the composition, of water;

where components (a) to (i) add to 100% by weight.

In a specific embodiment, the antimicrobial agent (a) is 2-phenoxyethanol, and this is contained in an amount of from 0.1 to 5% by weight, e.g. 0.1 to 2% by weight, relative to the total weight of the composition; and the α-hydroxyketone (b) is contained in an amount of from 0.1 to 7% by weight.

In a particular embodiment, the homecare or I&I composition (A or B) is a refill concentrate. Refill concentrates contain all ingredients of the final ready-to-use product, but for water which is either essentially absent ("essentially" taking account of the fact that some of the ingredients may contain some residual water) or contained in amounts far below those of the final ready-to-use product. The end user has just to fill the refill concentrate into a suitable container and add the indicated amount of water.

Such refill concentrates preferably comprise:

(a) 0.01 to 10% by weight, relative to the total weight of the composition, of at least one antimicrobial agent as defined in above;
(b) 0.01 to 10% by weight, relative to the total weight of the composition, of an α-hydroxyketone of the formula (I) or a mixture of different α-hydroxyketones of the formula (I) as defined above;
(c) 1 to 60% by weight, relative to the total weight of the composition, of one or more surfactants;
(d) 0 to 30% by weight, relative to the total weight of the composition, of at least one organic solvent [different from component (b) (and of course also from said antimicrobial agent)];
(e) 0 to 10% by weight, relative to the total weight of the composition, of at least one enzyme;
(f) 0 to 10% by weight, relative to the total weight of the composition, of at least one sequestrant;
(g) 0 to 10% by weight, relative to the total weight of the composition, of at least one defoamer and/or foam stabilizer;
(h) 0 to 50% by weight, relative to the total weight of the composition, of at least one further additive; and
(i) 0 to 20% by weight, relative to the total weight of the composition, of water; where components (a) to (i) add to 100% by weight.

Crop protection compositions

The combination of the antimicrobial agent and the compound (I) in crop protection compositions generally serves for preserving said composition. Crop protection compositions needing preservation generally contain water.

Examples for such compositions are e. g. solutions, emulsions, suspensions, pastes, capsules, and mixtures thereof. Examples for composition types are suspensions (e.g. SC, OD, FS), emulsifiable concentrates (e.g. EC), emul¬sions (e.g. EW, EO, ES, ME), capsules (e.g. CS, ZC), pastes, as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, surfactants, dispersants, emulsifiers, wetters, adjuvants, solubilizers, penetration enhancers, protective colloids, adhesion agents, thickeners, humectants, repellents, attractants, feeding stimulants, compatibilizers, anti-freezing agents, anti-foaming agents, colorants, tackifiers and binders. Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclo¬hexanol; glycols; DMSO; ketones, e.g. cyclo¬hexanone; esters, e.g. lactates, carbonates, fatty acid esters, gamma-butyrolactone; fatty acids; phosphonates; amines; amides, e.g. fatty acid di¬methylamides; and mixtures thereof. Suitable surfactants are surface-active compounds, such as anionic, cationic, nonionic and amphoteric surfactants, block polymers, polyelectrolytes, and mixtures there-of. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulf¬onates, sulfates, phosphates, carboxylates, and mixtures thereof. Examples of sulf¬onates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulf-onates of dodecyl- and tridecylbenzenes, sulfonates of naphthalenes and alkyl¬naphtha¬lenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsitituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinyl-alcohols, or vinylacetate.

Suitable cationic surfactants are quaternary surfactants, for example quaternary am¬monium compounds with one or two hydrophobic groups, or salts of long-chain primary amines. Suitable amphoteric surfactants are alkylbetains and imidazolines. Suitable block polymers are block polymers of the A-B or A-B-A type comprising blocks of poly¬ethylene oxide and polypropylene oxide, or of the A-B-C type comprising alkanol, poly¬ethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds which have a neglectable or even no pesticidal activity themselves, and which improve the biological performance of the polymeric, ionic compound comprising imidazolium groups on the target. Examples are surfactants, mineral or vegetable oils, and other auxilaries. Further examples are listed by Knowles, Adjuvants and additives, Agrow Reports DS256, T&F Informa UK, 2006, chapter 5. Suitable thickeners are polysaccharides (e.g. xanthan gum, carboxymethylcellu¬lose), anorganic clays (organically modified or unmodified), polycarboxylates, and silicates. Suitable bactericides are bronopol and isothiazolinone derivatives such as alkyli-so¬thiazolinones and benzisothiazolinones.

Suitable anti-freezing agents are ethylene glycol, propylene glycol, urea and glycerin. Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

The crop protection compositions contain of course at least one active agent suitable for combating harmul microorganisms, invertebrate pests or weeds, e.g. at least one fungicide, insecticide, acaricide, nematicide, moluscicide and/or herbicide; or for regulating the growth of plants.

Examples of fungicidally active substances comprise:

- acylalanines, such as benalaxyl, metalaxyl, ofurace or oxadixyl;
- amine derivatives, such as aldimorph, dodine, dodemorph, fenpropimorph, fenpropidin, guazatine, iminoctadine, spiroxamine or tridemorph;
- anilinopyrimidines, such as pyrimethanil, mepanipyrim or cyprodinil;
- antibiotics, such as cycloheximide, griseofulvin, kasugamycin, natamycin, polyoxin and streptomycin;
- azoles, such as bitertanol, bromoconazole, cyproconazole, difenoconazole, diniconazole, epoxiconazole, fenbuconazole, fluquinconazole, flusilazole, flutriafol, hexaconazole, imazalil, ipconazole, metconazole, myclobutanil, penconazole, propiconazole, prochloraz, prothioconazole, tebuconazole, tetraconazole, triadimefon, triadimenol, triflumizole or triticonazole;
- 2-methoxybenzophenones, such as those disclosed in EP-A 897 904 by the general formula (I), e.g. metrafenone;
- dicarboximides, such as iprodione, myclozolin, procymidone or vinclozolin;
- dithiocarbamates, such as ferbam, nabam, maneb, mancozeb, metam, metiram, propineb, polycarbamate, thiram, ziram or zineb;
- heterocyclic compounds, such as anilazine, benomyl, boscalid, carbendazim, carboxin, oxycarboxin, cyazofamid, dazomet, dithianon, famoxadone, fenamidone, fenarimol, fuberidazole, flutolanil, furametpyr, isoprothiolane, mepronil, nuarimol, picobenzamid, probenazole, proquinazid, pyrifenox, pyroquilon, quinoxyfen, silthiofam, thiabendazole, thifluzamide, thiophanate-methyl, tiadinil, tricyclazole or triforine;
- nitrophenyl derivatives, such as binapacryl, dinocap, dinobuton or nitrothalisopropyl;
- phenylpyrroles, such as fenpiclonil or fludioxonil;
- unclassified fungicides, such as acibenzolar-S-methyl, benthiavalicarb, carpropamid, chlorothalonil, cyflufenamid, cymoxanil, diclomezine, diclocymet, diethofencarb, edifenphos, ethaboxam, fenhexamid, fentin acetate, fenoxanil, ferimzone, fluazinam, fosetyl, fosetyl-aluminum, iprovalicarb, hexachlorobenzene, metrafenone, pencycuron, propamocarb, phthalide, tolclofos-methyl, quintozene or zoxamide;
- strobilurins, such as those disclosed in WO 03/075663 by the general formula (I), for example azoxystrobin, dimoxystrobin, fluoxastrobin, kresoxim-methyl, metominostrobin, orysastrobin, picoxystrobin, pyraclostrobin and trifloxystrobin;
- sulfenic acid derivatives, such as captafol, captan, dichlofluanid, folpet or tolylfluanid;
- cinnamamides and analogous compounds, such as dimethomorph, flumetover or flumorph;
- 6-aryl-[1,2,4]triazolo[1,5-a]pyrimidines, such as those disclosed, e.g., in WO 98/46608, WO 99/41255 or WO 03/004465, in each case by the general formula (I);
- amide fungicides, such as cyflufenamid and (Z)-N-[$\alpha$-(cyclopropylmethoxyimino)-2,3-difluoro-6-(difluoromethoxy)benzyl]-2-phenylacetamide.

Examples of herbicides comprise:

- 1,3,4-thiadiazoles, such as buthidazole and cyprazole;
- amides, such as allidochlor, benzoylprop-ethyl, bromobutide, chlorthiamid, dimepiperate, dimethenamid, diphenamid, etobenzanid, flamprop-methyl, fosamine, isoxaben, metazachlor, monalide, naptalam, pronamide or propanil;
- aminophosphoric acids, such as bilanafos, buminafos, glufosinate-ammonium, glyphosate or sulfosate;
- aminotriazoles, such as amitrole, or anilides, such as anilofos or mefenacet;
- aryloxyalkanoic acid, such as 2,4-D, 2,4-DB, clomeprop, dichlorprop, dichlorprop-P, fenoprop, fluroxypyr, MCPA, MCPB, mecoprop, mecoprop-P, napropamide, naproanilide or triclopyr;
- benzoic acids, such as chloramben or dicamba;
- benzothiadiazinones, such as bentazon;
- bleachers, such as clomazone, diflufenican, fluorochloridone, flupoxam, fluridone, pyrazolate or sulcotrione;
- carbamates, such as carbetamide, clorbufam, chlorpropham, desmedipham, phenmedipham or vernolate;
- quinolinecarboxylic acids, such as quinclorac or quinmerac;
- dichloropropionic acids, such as dalapon;
- dihydrobenzofurans, such as ethofumesate;
- dhydrofuran-3-ones, such as flurtamone;
- dinitroanilines, such as benefin, butralin, dinitramine, ethalfluralin, fluchloralin, iso-propalin, nitralin, oryzalin,

pendimethalin, prodiamine, profluralin, trifluralin;

- dinitrophenols, such as bromofenoxim, dinoseb, dinoseb acetate, dinoterb, DNOC or minoterb acetate;
- diphenyl ethers, such as acifluorfen-sodium, aclonifen, bifenox, chlornitrofen, difenoxuron, ethoxyfen, fluorodifen, fluoroglycofen-ethyl, fomesafen, furyloxyfen, lactofen, nitrofen, nitrofluorfen or oxyfluorfen;
- dipyridyls, such as cyperquat, difenzoquat metilsulfate, diquat or paraquat dichloride;
- imidazoles, such as isocarbamid;
- imidazolinones, such as imazamethapyr, imazapyr, imazaquin, imazethabenzme-thyl, imazethapyr, imazapic or imazamox;
- oxadiazoles, such as methazole, oxadiargyl or oxadiazone;
- oxiranes, such as tridiphane;
- phenols, such as bromoxynil or ioxynil;
- phenoxyphenoxypropionic acid esters, such as clodinafop, cyhalofop-butyl, diclo-fop-methyl, fenoxaprop-ethyl, fenoxaprop-P-ethyl, fenthiaprop-ethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-P-tefuryl;
- phenylacetic acids, such as chlorfenac;
- phenylpropionic acids, such as chlorphenprop-methyl;
- ppi-active substances (ppi = preplant incorporated), such as benzofenap, flumiclorac-pentyl, flumioxazin, flumipropyn, flupropacil, pyrazoxyfen, sulfentrazone or thidiazimin;
- pyrazoles, such as nipyraclofen;
- pyridazines, such as chloridazon, maleic hydrazide, norflurazon or pyridate;
- pyridinecarboxylic acids, such as clopyralid, dithiopyr, picloram or thiazopyr;
- pyrimidyl ethers, such as pyrithiobac acid, pyrithiobac-sodium, KIH-2023 or KIH-6127;
- sulfonamides, such as flumetsulam or metosulam;
- triazolecarboxamides, such as triazofenamide;
- uracils, such as bromacil, lenacil or terbacil;
- furthermore benazolin, benfuresate, bensulide, benzofluor, bentazon, butamifos, cafenstrole, chlorthal-dimethyl, cinmethylin, dichlobenil, endothall, fluorbentranil, mefluidide, perfluidone, piperophos, topramezone and prohexadione-calcium;
- sulfonylureas, such as amidosulfuron, azimsulfuron, bensulfuron-methyl, chlo-rimuron-ethyl, chlorsulfuron, cinosulfuron, cyclosulfamuron, ethametsulfuron-methyl, flazasulfuron, halosulfuron-methyl, imazosulfuron, metsulfuron-methyl, nicosulfuron, primisulfuron, prosulfuron, pyrazosulfuron-ethyl, rimsulfuron, sulfome-turon-methyl, thifensulfuron-methyl, triasulfuron, tribenuron-methyl, triflusulfuron-methyl or tritosulfuron;
- plant protection active substances of the cyclohexenone type, such as alloxydim, clethodim, cloproxydim, cycloxydim, sethoxydim and tralkoxydim. Very particularly preferred herbicidal active substances of the cyclohexenone type are: tepraloxydim (cf. AGROW, No. 243, 11.3.95, page 21, caloxydim) and 2-(1-[2-{4-chlorphenoxy}-propyloxyimino]butyl)-3-hydroxy-5-(2H-tetrahydrothiopyran-3-yl)-2-cyclohexen-1-one, and of the sulfonylurea type is: N-(((4-methoxy-6-[trifluoromethyl]-1,3,5-triazin-2-yl)amino)carbonyl)-2-(trifluoromethyl)benzenesulfonamide.

Examples of insecticides comprise:

- organophosphates, such as acephate, azinphos-methyl, chlorpyrifos, chlorfenvinphos, diazinon, dichlorvos, dimethylvinphos, dioxabenzofos, dicrotophos, dimethoate, disulfoton, ethion, EPN, fenitrothion, fenthion, isoxathion, malathion, methamidophos, methidathion, methyl parathion, mevinphos, monocrotophos, ox-ydemeton-methyl, paraoxon, parathion, phenthoate, phosalone, phosmet, phosphamidon, phorate, phoxim, pirimiphos-methyl, profenofos, prothiofos, pirimiphos-ethyl, pyraclofos, pyridaphenthion, sulprophos, triazophos, trichlorfon, tetrachlorvinphos or vamidothion;
- carbamates, such as alanycarb, benfuracarb, bendiocarb, carbaryl, carbofuran, carbosulfan, fenoxycarb, furathiocarb, indoxacarb, methiocarb, methomyl, oxamyl, pirimicarb, propoxur, thiodicarb or triazamate;

pyrethroids, such as bifenthrin, cyfluthrin, cycloprothrin, cypermethrin, deltamethrin, esfenvalerate, etofenprox, fenpropathrin, fenvalerate, cyhalothrin, lambda-cyhalothrin, permethrin, silafluofen, tau-fluvalinate, tefluthrin, tralomethrin, alpha-cypermethrin or zeta-cypermethrin;

arthropodal growth regulators: a) chitin synthesis inhibitors, e.g. benzoylureas, such as chlorfluazuron, diflubenzuron, flucycloxuron, flufenoxuron, hexaflumuron, lufenuron, novaluron, teflubenzuron, triflumuron, buprofezin, diofenolan, hexythiazox, etoxazole or clofentezine; b) ecdysone antagonists, such as halofenozide, methoxyfenozide or tebufenozide; c) juvenile hormone mimics, such as pyriproxyfen, methoprene or fenoxycarb; d) lipid biosynthesis inhibitors such as spirodiclofen;

neonicotinoids, such as flonicamid, clothianidin, dinotefuran, imidacloprid, thiamethoxam, nitenpyram, nithiazine, acetamiprid or thiacloprid;
additional unclassified insecticides, such as abamectin, acequinocyl, acetamiprid, amitraz, azadirachtin, bensultap, bifenazate, cartap, chlorfenapyr, chlordimeform, cyromazine, diafenthiuron, dinotefuran, diofenolan, emamectin, endosulfan, ethiprole, fenazaquin, fipronil, formetanate, formetanate hydrochloride, gamma-HCH, hydramethylnon, imidacloprid, indoxacarb, isoprocarb, metolcarb, pyridaben, pymetrozine, spinosad, tebufenpyrad, thiamethoxam, thiocyclam, XMC and xylylcarb;

- N-phenylsemicarbazones, such as those disclosed in EP-A 462 456 by the general formula (I), especially compounds of the general formula (A)

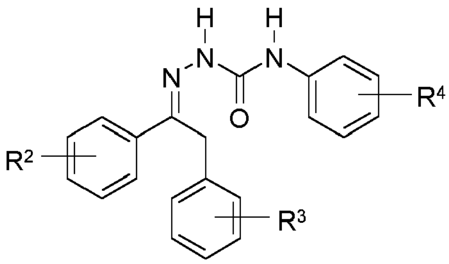

(A)

in which $R^2$ and $R^3$ represent, independently of one another, hydrogen, halogen, CN, $C_1$-$C_4$ alkyl, $C_1$-$C_4$ alkoxy, $C_1$-$C_4$ haloalkyl or $C_1$-$C_4$ haloalkoxy and $R^4$ represents $C_1$-$C_4$ alkoxy, $C_1$-$C_4$ haloalkyl or $C_1$-$C_4$ haloalkoxy, e.g. compound IV, in which $R^2$ represents 3-$CF_3$, $R^3$ represents 4-CN and $R^4$ represents 4-$OCF_3$.

Examples for plant growth regulators comprise chlormequat chloride, mepiquat chloride, prohexadione-calcium, trinexapac ethyl or the group of the gibberellins. These include, e.g. the gibberellin $GA_1$, $GA_3$, $GA_4$, $GA_5$ and $GA_7$, and the like, and the corresponding exo-16,17-dihydrogibberellins, and also the derivatives thereof, e.g. the esters with $C_1$-$C_4$ carboxylic acids.

Water-soluble concentrates (SL, LS) comprise for example:

(a) 0.01 to 3% by weight, relative to the total weight of the composition, of at least one antimicrobial agent as defined above;
(b) 0.01 to 5% by weight, relative to the total weight of the composition, of an $\alpha$-hydroxyketone of the formula (I) or a mixture of different $\alpha$-hydroxyketones of the formula (I) as defined above;
(c) 5 to 60% by weight, relative to the total weight of the composition, of the active substances;
(d) 5 to 15% by weight, relative to the total weight of the composition, of at least one wetting agent (e.g. alcohol alkoxylates);
(e) 3 to 15% by weight, relative to the total weight of the composition, of at least one antifreezing agent;
(f) water or a mixture of water and at least one water-soluble solvent (e.g. an alcohol) ad 100% by weight.

Emulsions (EW, EO, ES) comprise for example:

(a) 0.01 to 3% by weight, relative to the total weight of the composition, of at least one antimicrobial agent as defined above;
(b) 0.01 to 5% by weight, relative to the total weight of the composition, of at least one $\alpha$-hydroxyketone of the formula (I) or a mixture of different $\alpha$-hydroxyketones of the formula (I) as defined above;
(c) 5 to 40% by weight, relative to the total weight of the composition, of the active substance;
(d) 1 to 10% by weight, relative to the total weight of the composition, of one or more emulsifiers (e.g. calcium dodecylbenzenesulfonate and castor oil ethoxylate);
(e) 3 to 15% by weight, relative to the total weight of the composition, of at least one antifreezing agent;
(f) 20 to 40% by weight, relative to the total weight of the composition, of at least one water-insoluble organic solvent (e.g. aromatic hydrocarbon);
(g) water ad 100% by weight.

Suspensions (SC, OD, FS) comprise for example:

(a) 0.01 to 3% by weight, relative to the total weight of the composition, of at least one antimicrobial agent as defined above;

(b) 0.01 to 5% by weight, relative to the total weight of the composition, of at least one α-hydroxyketone of the formula (I) or a mixture of different α-hydroxyketones of the formula (I) as defined above;
(c) 5 to 60% by weight, relative to the total weight of the composition, of the active substance;
(d) 2 to 10% by weight, relative to the total weight of the composition, of dispersants and/or wetting agents (e.g. sodium lignosulfonate and alcohol ethoxylate);
(e) 0.1 to 2% by weight, relative to the total weight of the composition, of at least one thickener (e.g. xanthan gum);
(f) 3 to 15% by weight, relative to the total weight of the composition, of at least one antifreezing agent;
(g) water ad 100% by weight.

For FS type composition up to 40 wt% binder (e.g. polyvinylalcohol) is contained.
Gels (GW, GF) comprise for example:

(a) 0.01 to 3% by weight, relative to the total weight of the composition, of at least one antimicrobial agent as defined above;
(b) 0.01 to 5% by weight, relative to the total weight of the composition, of at least one α-hydroxyketone of the formula (I) or a mixture of different α-hydroxyketones of the formula (I) as defined above;
(c) 5 to 50% by weight, relative to the total weight of the composition, of the active substance;
(d) 3 to 10% by weight, relative to the total weight of the composition, of one or more dispersants (e.g. sodium lignosulfonate);
(e) 1 to 5% by weight, relative to the total weight of the composition, of at least one thickener (e.g. carboxy¬methylcellulose);
(f) 3 to 15% by weight, relative to the total weight of the composition, of at least one antifreezing agent;
(g) water ad 100% by weight.

Microemulsions (ME) comprise for example:

(a) 0.01 to 3% by weight, relative to the total weight of the composition, of at least one antimicrobial agent as defined above;
(b) 0.01 to 5% by weight, relative to the total weight of the composition, of at least one α-hydroxyketone of the formula (I) or a mixture of different α-hydroxyketones of the formula (I) as defined above;
(c) 5 to 50% by weight, relative to the total weight of the composition, of the active substance;
(d) 5 to 30% by weight, relative to the total weight of the composition, of at least one organic solvent blend (e.g. fatty acid dimethylamide and cyclohexanone);
(e) 10 to 25% by weight, relative to the total weight of the composition, of a surfactant blend (e.g. alcohol ethoxylate and arylphenol ethoxylate);
(f) 3 to 15% by weight, relative to the total weight of the composition, of at least one antifreezing agent;
(g) water ad 100% by weight.

The above crop protection compositions may optionally comprise further auxiliaries, such as 0.1-1 wt% other bactericides, 0.1-1 wt% anti-foaming agents, and 0.1-1 wt% colorants.

Pharmaceutical compositions

Suitable pharmaceutical compositions may exist in a wide variety of forms, for example in the form of liquid preparations as a W/O, O/W, O/W/O, W/O/W or PIT emulsion and all kinds of microemulsions; in the form of a non-emulsified, water-based liquid, in the form of a gel, in the form of an oil, a cream, milk or lotion, in the form of a spray (spray with propellant gas or pump-action spray) or an aerosol, in the form of a foam, in the form of a paste, in the form of a wet wipe (such as for cleaning the nappy area).
The pharmaceutical compositions may be, for example, creams, gels, lotions, alcoholic and aqueous/alcoholic solutions, emulsions, wax/fat compositions, or ointments.

Personal care compositions

Preserving personal care products from microbial degradation is imperative and simultaneously challenging, since most topical cosmetics and dermatological products contain significant amounts of water, thus providing a very hospitable environment for microbial growth. Many other ingredients in personal care products can also be a good source of nutrients to microbes. Moreover, shelf-life and pot life of personal care products are rather long as compared to, for example, food products. Generally, personal care products are neither sterilized and nor packed in hermetic conditions,

and thus the presence of preservatives can hardly be dispensed with. On the other hand, the public regards preservatives in personal care products as problematic. The consumers expect the preservatives to be not only effective, but extremely mild during the whole shelf and pot life. Public opinion makes it very difficult to use formaldehyde donors, halogenated organic molecules and recently also parabens in personal care products. It is at least expected that the amounts of these preservatives is reduced to a minimum. Antimicrobials which are not or at least less hazardous, like 2-phenoxyethanol, are often not very effective and need to be used in rather high concentrations to achieve an acceptable antimicrobial effect. In personal care applications, high concentrations are however not acceptable. The present combination of antimicrobials (a) and $\alpha$-hydroxyketones of formula (I) allows to reduce the amount of antimicrobial substantially, without compromising the desired antimicrobial effect.

This notwithstanding, in personal care compositions, the antimicrobial is preferably 2-phenoxyethanol.

Personal care compositions can be such for hygienic or cosmetic use. Examples for suitable personal care compositions are given above.

Suitable personal care compositions may exist in a wide variety of forms, for example in the form of liquid preparations as a W/O, O/W, O/W/O, W/O/W or PIT emulsion and all kinds of microemulsions; in the form of a non-emulsified, water-based liquid, in the form of a gel, in the form of an oil, a cream, milk or lotion, in the form of a spray (spray with propellant gas or pump-action spray) or an aerosol, in the form of a foam, in the form of a paste, in the form of a wet wipe (such as for cleaning the nappy area).

The personal care compositions may be, for example, creams, gels, lotions, alcoholic and aqueous/alcoholic solutions, emulsions, wax/fat compositions, or ointments.

Ingredients typically present in such personal care compositions and their amounts vary according to the specific formulation. Examples for such ingredients are solvents, surfactants, emulsifiers, rheology modifiers (generally thickeners), conditioners, emollients, skin caring ingredients, lubricants, fillers, antioxidants, dermatologically active ingredients, fragrances and water.

For instance, in form of water- and oil-containing emulsions (e.g. W/O, O/W, O/W/O and W/O/W emulsions or microemulsions) the preparations generally contain at least one oil component, at least one emulsifier, water and optionally at least one further cosmetically acceptable adjuvants; for example, from 0.1 to 30% by weight, preferably from 0.1 to 15% by weight and especially from 0.5 to 10% by weight, based on the total weight of the composition, from 1 to 60% by weight, especially from 5 to 50% by weight and preferably from 10 to 35% by weight, based on the total weight of the composition, of at least one oil component, from 0 to 30% by weight, especially from 1 to 30% by weight und preferably from 4 to 20% by weight, based on the total weight of the composition, of at least one emulsifier, from 10 to 90% by weight, especially from 30 to 90% by weight, based on the total weight of the composition, of water, and from 0 to 88.9% by weight, especially from 1 to 50% by weight, of further cosmetically acceptable adjuvants.

Preparation intended mainly for cleaning, such as soaps, shower gels and shampoos, contain at least one or more surfactants, often of the anionic type, optionally in combination with such of the zwitterionic type; and water. Furthermore, they generally contain at least one of following components: emulsifier, sequestrant, fragrance, pH modifier (generally an organic acid and/or an inorganic base), inorganic salt (mostly NaCl), dye,

Of special importance are cosmetic preparations for the hair, especially with the purpose of antidandruff treatment, especially hair-washing preparations in the form of shampoos, hair conditioners, hair-care preparations, e.g. pre-treatment preparations, hair tonics, styling creams, styling gels, pomades, hair rinses, treatment packs, intensive hair treatments, hair-straightening preparations, liquid hair-setting preparations, hair foams and hairsprays. Of special interest are hair-washing preparations in the form of shampoos. Of special interest are moreover shower gels.

Shampoos as well as shower gels generally contain water and at least one anionic surfactant.

Suitable anionic surfactants are principally all those described above in context with homecare and I&I compositions which are cosmetically acceptable. In shampoos and in shower gels, it is useful to use surfactants which are good foam-formers.

Examples of suitable anionic surfactants in this context are alkyl sulfates, alkyl ether sulphates, alkaryl sulfonates, alkanoyl isethionates, alkyl succinates, alkyl sulfosuccinates, alkyl ether sulfosuccinates, N-alkyl sarcosinates, alkyl phosphates, alkyl ether phosphates, and alkyl ether carboxylic acids and salts thereof, especially sodium, magnesium, ammonium and mono-, di- and triethanolamine salts. The alkyl and acyl groups generally contain from 8 to 18, preferably from 10 to 16 carbon atoms and may be unsaturated. The alkyl ether sulfates, alkyl ether sulfosuccinates, alkyl ether phosphates and alkyl ether carboxylic acids and salts thereof may contain from 1 to 20 ethylene oxide or propylene oxide units per molecule. Typical surfactants for use in shampoo compositions include sodium oleyl succinate, ammonium lauryl sulfosuccinate, sodium lauryl sulfate, sodium lauryl ether sulfate (sodium laureth sulfate), sodium lauryl ether sulfosuccinate, ammonium lauryl sulfate, ammonium lauryl ether sulfate, sodium dodecylbenzene sulfonate, triethanolamine dodecylbenzene sulfonate, sodium cocoyl isethionate, sodium lauryl isethionate, lauryl ether carboxylic acid and sodium N-lauryl sarcosinate. Mixtures of any of the foregoing anionic surfactants are also suitable.

The overall amount of anionic surfactant in the shampoo compositions of the invention generally ranges from 0.5 to 45% by weight, e.g. from 1.5 to 35% by weight, based on the total weight of the composition.

The shampoo or shower gel composition can moreover include non-ionic, amphoteric and/or cationic co-surfactants, which help impart aesthetic, haptic, combing, physical or cleansing properties to the composition.

Suitable non-ionic surfactants are those listed above, e.g. ethoxylated fatty alcohols, mono- or di-alkyl alkanolamides, such as coco mono- or di-ethanolamide and coco monoisopropanolamide; or alkyl polyglycosides (APGs) such as Oramix NS10 ex Seppic; Plantaren 1200 and Plantaren 2000 ex Henkel. The overall amount of non-ionic surfactant in the shampoo or shower gel compositions of the invention generally ranges from 0.5 to 8% by weight, preferably from 2 to 5% by weight, based on the total weight of the composition.

Suitable amphoteric or zwitterionic surfactants are those listed above, e.g. alkyl amine oxides, alkyl betaines, alkyl amidopropyl betaines, alkyl sulfobetaines (sultaines), alkyl glycinates, alkyl carboxyglycinates, alkyl amphoacetates, alkyl amphopropionates, al-kylamphoglycinates, alkyl amidopropyl hydroxysultaines, acyl taurates and acyl glutamates, wherein the alkyl and acyl groups have from 8 to 19 carbon atoms. Specific examples are lauryl amine oxide, cocodimethyl sulfopropyl betaine, lauryl betaine, cocamidopropyl betaine and sodium cocoamphoacetate. Mixtures of the foregoing amphoteric or zwitterionic surfactants are also suitable. The overall amount of amphoteric or zwitterionic surfactant in the shampoo or shower gel compositions of the invention generally ranges from 0.5 to 8% by weight, preferably from 1 to 4% by weight, based on the total weight of the composition.

Suitable cationic polymers are those listed above. Examples are copolymers of vinyl monomers having cationic amine or quaternary ammonium functionalities with water soluble spacer monomers such as (meth)acrylamide, alkyl and dialkyl (meth)acrylamides, alkyl (meth)acrylate, vinyl caprolactone and vinyl pyrrolidine. The alkyl and dialkyl substituted monomers preferably have $C_1$-$C_7$-alkyl groups, more preferably $C_1$-$C_3$-alkyl groups. Other suitable spacers include vinyl esters, vinyl alcohol, maleic anhydride, propylene glycol and ethylene glycol. The cationic amines can be primary, secondary or tertiary amines, depending upon the particular species and the pH of the composition. In general secondary and tertiary amines, especially tertiary, are preferred. Other examples are cationic polysaccharide polymers, such as cationic cellulose derivatives, cationic starch derivatives, and cationic guar gum derivatives. The overall amount of cationic surfactant in the shampoo or shower gel compositions of the invention generally ranges from 0.05 to 1 % by weight, more preferably from 0.08 to 0.5% by weight, based on the total weight of the composition.

The total amount of surfactant (including any co-surfactant and/or any emulsifier) in a shampoo or shower gel composition is generally from 1 to 50% by weight, preferably from 2 to 40% by weight, more preferably from 10 to 25% by weight, based on the total weight of the composition.

Other components which may be present in the shampoo or shower gel are for example suspending agents, such as polyacrylic acids, cross-linked polymers of acrylic acid, copolymers of acrylic acid with a hydrophobic monomer, copolymers of carboxylic acid-containing monomers and acrylic esters, cross-linked copolymers of acrylic acid and acrylate esters, heteropolysaccharide gums and crystalline long chain acyl derivatives, the latter being preferably selected from ethylene glycol stearate, alkanolamides of fatty acids having from 16 to 22 carbon atoms and mixtures thereof; fragrances, dyes and pigments, pH adjusting agents, pearlescers or opacifiers, viscosity modifiers, and salts, such as as NaCl; in shampoos moreover natural hair nutrients or dermatologically active ingredients, such as botanicals, fruit extracts, caffeine, panthenol, sugar derivatives, amino acids, such as hydrolized keratine or glycine, vegetable or hydrogenated vegetable oils.

In ready-to-use compositions in which the antimicrobial agent (in combination with the $\alpha$-hydroxyketone of the formula (I)) is to exert a preservative effect, the antimicrobial agent and the $\alpha$-hydroxyketone of the formula (I) are of course contained in a preservative effective amount denotes. This is an amount that is sufficient to reduce the cell population of an unwanted microorganism under a predetermined threshold value to obtain shelf-stability over a certain period of time.

Thus, a "preservative-effective amount" can be e.g. defined as an amount sufficient to reduce the cell population by, for example, at least one, preferably at least two, in particular at least three log orders of the at least one of following microorganisms: *Alcaligeneses faecalis*, *Aspergillus niger, Burkholderia cepacia, Candida albicans, Escherichia coli, Pseudomonas aeruginosa, Pseudomonas putida* and *Staphylococcus aureus,* and in particular at least one of following microorganisms: *Alcaligeneses faecalis*, *Burkholderia cepacia, Escherichia coli, Pseudomonas aeruginosa, Pseudomonas putida* and *Staphylococcus aureus.*

Alternatively or additionally, a "preservative-effective amount" can be e.g. defined as an amount sufficient to reduce the cell population by, for example, at least one, preferably at least two, in particular at least three log orders of the at least one of following microorganisms: *Aspergillus brasiliensis, Rhodotorula mucilaginosa* and *Yarrowia lipolytica.*

The composition of the invention has a pH of preferably from 2 to 11, more preferably from 4 to 10, and in particular from 4 to 9.

Mixtures

The invention relates moreover to a mixture consisting of

(a) at least one antimicrobial agent as defined above;
(b) at least one $\alpha$-hydroxyketone of the formula (I) as defined above; and
(c) optionally a solvent.

"Consisting of" means that the mixture contains no other components apart from (a), (b) and optionally (c), except for impurities as present in the components (a), (b) and (c) and stemming, for example from their production process or their storage conditions. The amount of such impurities is generally at most 10% by weight, preferably at most 5% by weight, relative to the total weight of the mixture.

Preferred antimicrobial agents and $\alpha$-hydroxyketones as well as suitable and preferred weight ratios in which these are present in the mixture correspond to those described above.

In particular, the antimicrobial agent selected from the group consisting of 2-phenoxyethanol, 4,4'-dichloro 2'-hydroxydiphenylether and 1,2-benzisothiazol-3(2H)one (BIT) and is more preferably 2-phenoxyethanol; the $\alpha$-hydroxyketone is one of those defined above as preferred; the antimicrobial agent and the $\alpha$-hydroxyketone of the formula (I) are present in an overall weight ratio of from 20:1 to 1:20, preferably from 10:1 to 1:10, more preferably from 5:1 to 1:10, even more preferably from 4:1 to 1:8, in particular from 3:1 to 1:7, and specifically from 2:1 to 1:6; and the solvent, if present, is one of those defined above as preferred.

The solvents are of course different from $\alpha$-hydroxyketones (I) and of course also from the antimicrobial agent. Suitable and preferred solvents are also those described above. Thus, like above, the organic solvent is preferably selected from the group consisting of $C_1$-$C_8$-alkanols, $C_2$-$C_8$-alkanediols, $C_1$-$C_8$-alkylmonoethers of $C_2$-$C_8$-alkanediols, polyetherpolyols, $C_1$-$C_8$-alkylmonoethers of polyetherpolyols, 5-, 6- or 7-membered lactones which may be substituted by one or more $C_1$-$C_{12}$-alkyl groups; 5-, 6- or 7-membered cyclic carbonates which may be substituted by one or more $C_1$-$C_{12}$-alkyl groups; aliphatic esters, carboxamides, lactams, aliphatic or alicyclic amine-N-oxides and mixtures of the afore-mentioned solvents. Examples for such solvents have already been given above.

In this context, too, the solvent is more preferably selected from the group consisting of $C_1$-$C_8$-alkylmonoethers of $C_2$-$C_8$-alkanediols (among which preference is given to $C_1$-$C_4$-alkylmonoethers of a $C_2$-$C_3$-alkanediol, such as the $C_1$-$C_4$-alkylmonoethers of ethylene glycol or propylene glycol, specific examples being ethylene glycol mono-n-propyl ether, ethylene glycol mono-n-butyl ether (also termed butylglyol), propylene glycol mono-n-propyl ether, propylene glycol mono-n-butyl ether and mixtures thereof,

In another preferred embodiment the solvent is a $C_2$-$C_8$-alkanediol, more preferably a $C_2$-$C_4$-alkanediol, in particular a $C_2$-$C_3$-alkanediol, such as ethylene glycol, 1,2-propanediol and 1,3-propanediol, and specifically 1,2-propanediol (propylene glycol).

In another preferred embodiment the solvent is a $C_1$-$C_8$-alkanol, more preferably a $C_1$-$C_4$-alkanol, in particular a $C_2$-$C_3$-alkanol, i.e. ethanol, n-propanol or isopropanol, and specifically n-propanol.

In particular, in the mixture according to the invention, component (a) is 2-phenoxyethanol and component (b) is an $\alpha$-hydroxyketone of the formula (I) selected from the group consisting of 1-hydroxypropan-2-one (hydroxyacetone; $R^1$ is methyl; $R^2$ and $R^3$ are hydrogen), 1-hydroxy-butan-2-one ($R^1$ is ethyl; $R^2$ and $R^3$ are hydrogen), 4-hydroxyhexan-3-one (propioin; $R^1$ and $R^2$ are ethyl, $R^3$ is hydrogen), 2-hydroxy-1-phenylethan-1-one ($R^1$ is phenyl; $R^2$ and $R^3$ are hydrogen) and mixtures thereof, and preferably from 1-hydroxypropan-2-one (hydroxyacetone; $R^1$ is methyl; $R^2$ and $R^3$ are hydrogen), 2-hydroxy-1-phenylethan-1-one ($R^1$ is phenyl; $R^2$ and $R^3$ are hydrogen) and mixtures thereof.

In the following, some exemplary formulations of the invention are listed to illustrate typical compositions.

(I) All Purpose Cleaner 1

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Plurafac LF 400 (BASF( | Alkoxylated Alcohol | 10.00 | 10.00 | 10.00 | 10.00 | 10.00 | 10.00 | 10.00 | 10.00 | 10.00 | 10.00 |
| Hostapur SAS 60 (Clariant) | Sodium C14-17 Alkyl Sec Sulfonate | 14.00 | 14.00 | 14.00 | 14.00 | 14.00 | 14.00 | 14.00 | 14.00 | 14.00 | 14.00 |
| Texapon® LS 35 (BASF) | Lauryl-myristyl sulfate Na-salt | 5.00 | 5.00 | 5.00 | 5.00 | 5.00 | 5.00 | 5.00 | 5.00 | 5.00 | 5.00 |
| Citric Acid (Merck) | Citric Acid | ad pH 6.5 | ad pH 6.5 | ad pH 6.5 | ad pH 6.5 | ad pH 6.5 | ad pH 6.5 | ad pH 6.5 | ad pH 6.5 | ad pH 6.5 | ad pH 6.5 |
| IRAGON® Blue ABL 9 sol. 1% (BASF) | Acid Blue | 0.01 | 0.01 | 0.01 | 0.01 | 0.01 | 0.01 | 0.01 | 0.01 | 0.01 | 0.01 |
| Cibafast® H Liquid (BASF) | Sodium Benzotriazolyl Butylphenol Sulfonate (and) Buteth-3 (and) Tributyl Citrate | 0.05 | 0.05 | 0.05 | 0.05 | 0.05 | 0.05 | 0.05 | 0.05 | 0.05 | 0.05 |
| Water and Perfume | Aqua | qs to 100 | qs to 100 | qs to 100 | qs to 100 | qs to 100 | qs to 100 | qs to 100 | qs to 100 | qs to 100 | qs to 100 |

(II) All Purpose Cleaner 2

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Plurafac PE 6800 (BASF) | Alkoxylated Alcohol | 2.5 | 2.5 | 2.5 | 2.5 | 2.5 | 2.5 | 2.5 | 2.5 | 2.5 | 2.5 |
| Plurafac LF 901 (BASF) | Alkoxylated Alcohol | 5.0 | 5.0 | 5.0 | 5.0 | 5.0 | 5.0 | 5.0 | 5.0 | 5.0 | 5.0 |
| Citric Acid (Merck) | Citric Acid | ad pH 6.5 | ad pH 6.5 | ad pH 6.5 | ad pH 6.5 | ad pH 6.5 | ad pH 6.5 | ad pH 6.5 | ad pH 6.5 | ad pH 6.5 | ad pH 6.5 |
| IRAGON® Blue ABL 9 sol. 1% (BASF) | Acid Blue | 0.01 | 0.01 | 0.01 | 0.01 | 0.01 | 0.01 | 0.01 | 0.01 | 0.01 | 0.01 |
| Cibafast® H Liquid (BASF) | Sodium Benzotriazolyl Butylphenol Sulfonate (and) Buteth-3 (and) Tributyl Citrate | 0.05 | 0.05 | 0.05 | 0.05 | 0.05 | 0.05 | 0.05 | 0.05 | 0.05 | 0.05 |
| Water and Perfume | Aqua | qs to 100 | qs to 100 | qs to 100 | qs to 100 | qs to 100 | qs to 100 | qs to 100 | qs to 100 | qs to 100 | qs to 100 |

(III) All Purpose Cleaner 3

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Texapon® LS 35 (BASF) | Lauryl-myristyl sulfate Na-salt | 10.00 | 10.00 | 10.00 | 10.00 | 10.00 | 10.00 | 10.00 | 10.00 | 10.00 | 10.00 |
| Glucopon® 215 CS UP (BASF) | Alkyl Polyglycoside | 3.00 | 3.00 | 3.00 | 3.00 | 3.00 | 3.00 | 3.00 | 3.00 | 3.00 | 3.00 |
| Perfume | | qs | qs | qs | qs | qs | qs | qs | qs | qs | qs |
| Citric Acid (Merck ) | Citric Acid | ad pH 3.0 | ad pH 3.0 | ad pH 3.0 | ad pH 3.0 | ad pH 3.0 | ad pH 3.0 | ad pH 3.0 | ad pH 3.0 | ad pH 3.0 | ad pH 3.0 |
| Water | Aqua | qs to 100 | qs to 100 | qs to 100 | qs to 100 | qs to 100 | qs to 100 | qs to 100 | qs to 100 | qs to 100 | qs to 100 |

(IV) All Purpose Cleaner 4

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Plurafac LF 400 (BASF) | Alkoxylated Alcohol | 2.00 | 2.00 | 2.00 | 2.00 | 2.00 | 2.00 | 2.00 | 2.00 | 2.00 | 2.00 |
| Sodium Cumene Sulfonate (Hickson Manro) | Sodium Cume-ne Sulfonate | 5.00 | 5.00 | 5.00 | 5.00 | 5.00 | 5.00 | 5.00 | 5.00 | 5.00 | 5.00 |
| Marlon PS 65 (Sasol) | Sodium C13-17 Alkane Sulfonate | 10.0 | 10.0 | 10.0 | 10.0 | 10.0 | 10.0 | 10.0 | 10.0 | 10.0 | 10.0 |
| Perfume | | qs | qs | qs | qs | qs | qs | qs | qs | qs | qs |
| Trisodium Citrate Dihydrate (Fluka) | Trisodium Citrate Dihyd-rate | 5.00 | 5.00 | 5.00 | 5.00 | 5.00 | 5.00 | 5.00 | 5.00 | 5.00 | 5.00 |
| Water | Aqua | qs to 100 | qs to 100 | qs to 100 | qs to 100 | qs to 100 | qs to 100 | qs to 100 | qs to 100 | qs to 100 | qs to 100 |

(V) All Purpose cleaner 5

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | - | - | - | - | - | - | 3 | 3 | 3 | 3 | 3 |
| Glucopon® 215 CS UP (BASF) | Alkyl Polygly-coside | 3.00 | 3.00 | 3.00 | 3.00 | 3.00 | 3.00 | 3.00 | 3.00 | 3.00 | 3.00 |
| Texapon® LS 35 (BASF) | Lauryl-myristyl sulfate Na-salt | 10.00 | 10.00 | 10.00 | 10.00 | 10.00 | 10.00 | 10.00 | 10.00 | 10.00 | 10.00 |
| Perfume | | qs | qs | qs | qs | qs | qs | qs | qs | qs | qs |
| Trisodium Citrate Dihydrate (Fluka) | Trisodium Citrate Dihyd-rate | 5.00 | 5.00 | 5.00 | 5.00 | 5.00 | 5.00 | 5.00 | 5.00 | 5.00 | 5.00 |
| Water | Aqua | qs to 100 | qs to 100 | qs to 100 | qs to 100 | qs to 100 | qs to 100 | qs to 100 | qs to 100 | qs to 100 | qs to 100 |

(VI) All Purpose Cleaner 6

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Texapon® LS 35 (BASF) | Lauryl-myristyl sulfate Na-salt | 10.00 | 10.00 | 10.00 | 10.00 | 10.00 | 10.00 | 10.00 | 10.00 | 10.00 | 10.00 |
| Glucopon® 215 CS UP (BASF) | Alkyl Polygly-coside | 3.00 | 3.00 | 3.00 | 3.00 | 3.00 | 3.00 | 3.00 | 3.00 | 3.00 | 3.00 |
| Sodium Cumene Sulfonate (Hickson Manro ) | Sodium Cume-ne Sulfonate | 5.00 | 5.00 | 5.00 | 5.00 | 5.00 | 5.00 | 5.00 | 5.00 | 5.00 | 5.00 |
| Perfume | | qs | qs | qs | qs | qs | qs | qs | qs | qs | qs |
| Citric Acid (Merck) | Citric Acid | ad pH 3 | ad pH 3 | ad pH 3 | ad pH 3 | ad pH 3 | ad pH 3 | ad pH 3 | ad pH 3 | ad pH 3 | ad pH 3 |
| Water | Aqua | qs to 100 | qs to 100 | qs to 100 | qs to 100 | qs to 100 | qs to 100 | qs to 100 | qs to 100 | qs to 100 | qs to 100 |

(VII) Hard Surface Cleaner 1

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Texapon® K12 (BASF) | Sodium Lauryl Sulfate | 1.00 | 1.00 | 1.00 | 1.00 | 1.00 | 1.00 | 1.00 | 1.00 | 1.00 | 1.00 |
| Citric Acid (Merck) | Citric Acid | 3.00 | 3.00 | 3.00 | 3.00 | 3.00 | 3.00 | 3.00 | 3.00 | 3.00 | 3.00 |
| Perfume | | qs | qs | qs | qs | qs | qs | qs | qs | qs | qs |
| Sodium Hydroxi-de (10% solution) (Fluka) | Water (and) Sodium Hydro-xide | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 |
| Water | Aqua | qs to 100 | qs to 100 | qs to 100 | qs to 100 | qs to 100 | qs to 100 | qs to 100 | qs to 100 | qs to 100 | qs to 100 |

(VIII) Hard Surface Cleaner 2

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Lutensol AO 5 (BASF) | Nonionic surfactant 5EO | 2 | 2 | 2 | 2 | 2 | 2 | 2 | 2 | 2 | 2 |
| Citric Acid (Merck) | Citric Acid | 1 | 1 | 1 | 1 | 1 | 1 | 1 | 1 | 1 | 1 |
| Sodium hydrogene carbonate (Fluka) | $NaHCO_3$ | 0.5 | 0.5 | 0.5 | 0.5 | 0.5 | 0.5 | 0.5 | 0.5 | 0.5 | 0.5 |
| Sodium Hydroxide (10% solution) (Fluka) | Water (and) Sodium Hydroxide | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 |
| Water | | Add to 100 | Add to 100 | Add to 100 | Add to 100 | Add to 100 | Add to 100 | Add to 100 | Add to 100 | Add to 100 | Add to 100 |

(IX) Surface cleaner spray 1

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Glucopon® 215 CS UP (BASF) | Alkyl Polyglycoside | 3.50 | 3.50 | 3.50 | 3.50 | 3.50 | 3.50 | 3.50 | 3.50 | 3.50 | 3.50 |
| Dehydol® 04 Deo (BASF) | Capryleth-4 | 1.70 | 1.70 | 1.70 | 1.70 | 1.70 | 1.70 | 1.70 | 1.70 | 1.70 | 1.70 |
| Perfume | | qs | qs | qs | qs | qs | qs | qs | qs | qs | qs |
| Citric Acid (Merck ) | Citric Acid | 9.00 | 9.00 | 9.00 | 9.00 | 9.00 | 9.00 | 9.00 | 9.00 | 9.00 | 9.00 |
| Water | Aqua | qs to 100 | qs to 100 | qs to 100 | qs to 100 | qs to 100 | qs to 100 | qs to 100 | qs to 100 | qs to 100 | qs to 100 |

(X) Surface cleaner spray 2

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 3 | 3 | 3 | 3 | 3 |
| Glucopon® 215 CS UP (BASF) | Alkyl Polyglycoside | 3.50 | 3.50 | 3.50 | 3.50 | 3.50 | 3.50 | 3.50 | 3.50 | 3.50 | 3.50 |
| Dehydol® 04 Deo (BASF) | Capryleth-4 | 1.70 | 1.70 | 1.70 | 1.70 | 1.70 | 1.70 | 1.70 | 1.70 | 1.70 | 1.70 |
| Texapon® K12 (BASF) | Sodium Lauryl Sulfate | 2 | 2 | 2 | 2 | 2 | 2 | 2 | 2 | 2 | 2 |
| Citric Acid (Merck ) | Citric Acid | ad pH 6.0 | ad pH 6.0 | ad pH 6.0 | ad pH 6.0 | ad pH 6.0 | ad pH 6.0 | ad pH 6.0 | ad pH 6.0 | ad pH 6.0 | ad pH 6.0 |
| Water | Aqua | qs to 100 | qs to 100 | qs to 100 | qs to 100 | qs to 100 | qs to 100 | qs to 100 | qs to 100 | qs to 100 | qs to 100 |

(XI) Surface cleaner spray 3

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Texapon® K12 (BASF) | Sodium Lauryl Sulfate | 1.00 | 1.00 | 1.00 | 1.00 | 1.00 | 1.00 | 1.00 | 1.00 | 1.00 | 1.00 |
| Citric Acid (Merck) | Citric Acid | 3.00 | 3.00 | 3.00 | 3.00 | 3.00 | 3.00 | 3.00 | 3.00 | 3.00 | 3.00 |
| Dowanol DPM (Dow) | PPG-2 Methyl Ether | 10.00 | 10.00 | 10.00 | 10.00 | 10.00 | 10.00 | 10.00 | 10.00 | 10.00 | 10.00 |
| Sodium Hydroxide (10% solution) | Water (and) Sodium Hydroxide | ad pH 7.0 | ad pH 7.0 | ad pH 7.0 | ad pH 7.0 | ad pH 7.0 | ad pH 7.0 | ad pH 7.0 | ad pH 7.0 | ad pH 7.0 | ad pH 7.0 |

(XII) Surface cleaner spray 4

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | **% w/w** | **% w/w** | **% w/w** | **% w/w** | **% w/w** | **% w/w** | **% w/w** | **% w/w** | **% w/w** | **% w/w** |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Texapon® K12 (BASF) | Sodium Lauryl Sulfate | 2.00 | 2.00 | 2.00 | 2.00 | 2.00 | 2.00 | 2.00 | 2.00 | 2.00 | 2.00 |
| Propyleneglycol | 1,2-Propane-diol | 10.00 | 10.00 | 10.00 | 10.00 | 10.00 | 10.00 | 10.00 | 10.00 | 10.00 | 10.00 |
| Citric Acid sol. 20% | Citric Acid | ad pH 3.0 | ad pH 3.0 | ad pH 3.0 | ad pH 3.0 | ad pH 3.0 | ad pH 3.0 | ad pH 3.0 | ad pH 3.0 | ad pH 3.0 | ad pH 3.0 |
| Water | Aqua | qs to 100 | qs to 100 | qs to 100 | qs to 100 | qs to 100 | qs to 100 | qs to 100 | qs to 100 | qs to 100 | qs to 100 |

(XIII) Surface cleaner spray 5

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | **% w/w** | **% w/w** | **% w/w** | **% w/w** | **% w/w** | **% w/w** | **% w/w** | **% w/w** | **% w/w** | **% w/w** |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Propyleneglycol | 1,2-Propane-diol | 10.00 | 10.00 | 10.00 | 10.00 | 10.00 | 10.00 | 10.00 | 10.00 | 10.00 | 10.00 |
| Glucopon® 215 CS UP (BASF) | Alkyl Polygly-coside | 2.00 | 2.00 | 2.00 | 2.00 | 2.00 | 2.00 | 2.00 | 2.00 | 2.00 | 2.00 |
| Perfume | | qs | qs | qs | qs | qs | qs | qs | qs | qs | qs |
| Citric Acid | Citric Acid | 1.00 | 1.00 | 1.00 | 1.00 | 1.00 | 1.00 | 1.00 | 1.00 | 1.00 | 1.00 |
| Sodium Hydroxi-de (10% solution) | Water (and) Sodium Hydro-xide | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 |
| Water | Aqua | qs to 100 | qs to 100 | qs to 100 | qs to 100 | qs to 100 | qs to 100 | qs to 100 | qs to 100 | qs to 100 | qs to 100 |

(XIV) Wet wipes 1

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Propyleneglycol | 1,2-Propandiol | 10.00 | 10.00 | 10.00 | 10.00 | 10.00 | 10.00 | 10.00 | 10.00 | 10.00 | 10.00 |
| Texapon® K12 (BASF) | Sodium Lauryl Sulfate | 1.00 | 1.00 | 1.00 | 1.00 | 1.00 | 1.00 | 1.00 | 1.00 | 1.00 | 1.00 |
| Citric Acid | Citric Acid | 3.00 | 3.00 | 3.00 | 3.00 | 3.00 | 3.00 | 3.00 | 3.00 | 3.00 | 3.00 |
| Perfume | | qs | qs | qs | qs | qs | qs | qs | qs | qs | qs |
| Sodium Hydroxide (10% solution) | Water (and) Sodium Hydroxide | ad pH 5.5 | ad pH 5.5 | ad pH 5.5 | ad pH 5.5 | ad pH 5.5 | ad pH 5.5 | ad pH 5.5 | ad pH 5.5 | ad pH 5.5 | ad pH 5.5 |
| Water | Aqua | qs to 100 | qs to 100 | qs to 100 | qs to 100 | qs to 100 | qs to 100 | qs to 100 | qs to 100 | qs to 100 | qs to 100 |

(XV) Wet wipes 2

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Propylen glycol | 1,2-Propanediol | 10.00 | 10.00 | 10.00 | 10.00 | 10.00 | 10.00 | 10.00 | 10.00 | 10.00 | 10.00 |
| Glucopon® 215 CS UP (BASF) | Alkyl Polyglycoside | 2.00 | 2.00 | 2.00 | 2.00 | 2.00 | 2.00 | 2.00 | 2.00 | 2.00 | 2.00 |
| Water | Aqua | qs to 100 | qs to 100 | qs to 100 | qs to 100 | qs to 100 | qs to 100 | qs to 100 | qs to 100 | qs to 100 | qs to 100 |
| Citric Acid | Citric Acid | 1.00 | 1.00 | 1.00 | 1.00 | 1.00 | 1.00 | 1.00 | 1.00 | 1.00 | 1.00 |
| Sodium Hydroxide (10% solution) | Water (and) Sodium Hydroxide | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 |

(XVI) Wet Wipes 3 (for personal care)

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Glycerine | Glycerine | 0.5 | 0.5 | 0.5 | 0.5 | 0.5 | 0.5 | 0.5 | 0.5 | 0.5 | 0.5 |
| Tween 20 | Polysorbate 20 | 0.6 | 0.6 | 0.6 | 0.6 | 0.6 | 0.6 | 0.6 | 0.6 | 0.6 | 0.6 |
| Miranol C2M | $Na_2$-cocoam-phodiacetate | 0.2 | 0.2 | 0.2 | 0.2 | 0.2 | 0.2 | 0.2 | 0.2 | 0.2 | 0.2 |
| Vitamin E | Tocopherol | 0.05 | 0.05 | 0.05 | 0.05 | 0.05 | 0.05 | 0.05 | 0.05 | 0.05 | 0.05 |
| Panthenol | Panthenol | 0.05 | 0.05 | 0.05 | 0.05 | 0.05 | 0.05 | 0.05 | 0.05 | 0.05 | 0.05 |
| Water | Aqua | qs to 100 | qs to 100 | qs to 100 | qs to 100 | qs to 100 | qs to 100 | qs to 100 | qs to 100 | qs to 100 | qs to 100 |
| Sodium citrate | Sodium citrate | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 |

(XVII) Window Cleaner

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Ethanol | Ethylalcohol Alcohol | 10.00 | 10.00 | 10.00 | 10.00 | 10.00 | 10.00 | 10.00 | 10.00 | 10.00 | 10.00 |
| Glucopon® 215 CS UP (BASF) | Alkyl Polygly-coside | 2.00 | 2.00 | 2.00 | 2.00 | 2.00 | 2.00 | 2.00 | 2.00 | 2.00 | 2.00 |
| Perfume | | qs | qs | qs | qs | qs | qs | qs | qs | qs | qs |
| Water | Aqua | qs to 100 | qs to 100 | qs to 100 | qs to 100 | qs to 100 | qs to 100 | qs to 100 | qs to 100 | qs to 100 | qs to 100 |
| Citric Acid | Citric Acid | 1.00 | 1.00 | 1.00 | 1.00 | 1.00 | 1.00 | 1.00 | 1.00 | 1.00 | 1.00 |
| Sodium Hydroxi-de (10% solution) | Water (and) Sodium Hydro-xide | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 |

(XVIII) Toilet cleaner

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Glucopon® 215 CS UP (BASF) | Alkyl Polygly-coside | 3.50 | 3.50 | 3.50 | 3.50 | 3.50 | 3.50 | 3.50 | 3.50 | 3.50 | 3.50 |
| Neodol 91-8E | C9-11 pareth-8 | 1.70 | 1.70 | 1.70 | 1.70 | 1.70 | 1.70 | 1.70 | 1.70 | 1.70 | 1.70 |
| RHEOVIS® CSP (BASF) | Cationic Poly-mer | 1.30 | 1.30 | 1.30 | 1.30 | 1.30 | 1.30 | 1.30 | 1.30 | 1.30 | 1.30 |
| Acetic Acid conc. | Acetic Acid | 2.40 | 2.40 | 2.40 | 2.40 | 2.40 | 2.40 | 2.40 | 2.40 | 2.40 | 2.40 |
| Citric Acid | Citric Acid | 9.00 | 9.00 | 9.00 | 9.00 | 9.00 | 9.00 | 9.00 | 9.00 | 9.00 | 9.00 |
| IRAGON®Blue ABL80 sol. 1% (BASF) | Acid blue 80 | 0.50 | 0.50 | 0.50 | 0.50 | 0.50 | 0.50 | 0.50 | 0.50 | 0.50 | 0.50 |
| Water | Aqua | qs to 100 | qs to 100 | qs to 100 | qs to 100 | qs to 100 | qs to 100 | qs to 100 | qs to 100 | qs to 100 | qs to 100 |

(XIX) Shoe deodorant

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Ethanol absolut. | ethanol | 10 | 10 | 10 | 10 | 10 | 10 | 10 | 10 | 10 | 10 |
| Propylene Glycol | 1,2-Propanediol | 15 | 15 | 15 | 15 | 15 | 15 | 15 | 15 | 15 | 15 |
| Marlipal 24/99 (Sasol) | Laureth-9 | 1.00 | 1.00 | 1.00 | 1.00 | 1.00 | 1.00 | 1.00 | 1.00 | 1.00 | 1.00 |
| Glycerine | Glycerine | 1.00 | 1.00 | 1.00 | 1.00 | 1.00 | 1.00 | 1.00 | 1.00 | 1.00 | 1.00 |
| Perfume | | qs | qs | qs | qs | qs | qs | qs | qs | qs | qs |
| Water | Aqua | qs to 100 | qs to 100 | qs to 100 | qs to 100 | qs to 100 | qs to 100 | qs to 100 | qs to 100 | qs to 100 | qs to 100 |

(XX) Dishwashing liquid 1

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Texapon K 14 Special (BASF) | Sodium Myreth Sulfate | 2.5 | 2.5 | 2.5 | 2.5 | 2.5 | 2.5 | 2.5 | 2.5 | 2.5 | 2.5 |
| Texapon® LS 35 (BASF) | Lauryl-myristyl sulfate Na-salt | 3 | 3 | 3 | 3 | 3 | 3 | 3 | 3 | 3 | 3 |
| Dehyton AB 30 (BASF) | Coco Betaine | 0.9 | 0.9 | 0.9 | 0.9 | 0.9 | 0.9 | 0.9 | 0.9 | 0.9 | 0.9 |
| Plantacare 1200 UP (BASF) | Lauryl Glycoside | 1.5 | 1.5 | 1.5 | 1.5 | 1.5 | 1.5 | 1.5 | 1.5 | 1.5 | 1.5 |
| SD Alcohol 39-C (Berkel) | alcohol | 1 | 1 | 1 | 1 | 1 | 1 | 1 | 1 | 1 | 1 |
| Sodium Chloride | Sodium Chloride | 0.6 | 0.6 | 0.6 | 0.6 | 0.6 | 0.6 | 0.6 | 0.6 | 0.6 | 0.6 |
| Perfume | | qs | qs | qs | qs | qs | qs | qs | qs | qs | qs |
| Trisodium Citrate Dihydrate | Trisodium Citrate Dihydrate | To pH 6 | To pH 6 | To pH 6 | To pH 6 | To pH 6 | To pH 6 | To pH 6 | To pH 6 | To pH 6 | To pH 6 |
| Water | Aqua | qs to 100 | qs to 100 | qs to 100 | qs to 100 | qs to 100 | qs to 100 | qs to 100 | qs to 100 | qs to 100 | qs to 100 |

(XXI) Dishwashing Liquid 2

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Marlon A 375 (Sasol) | Sodium Dodecylbenzenesulfonate | 7.00 | 7.00 | 7.00 | 7.00 | 7.00 | 7.00 | 7.00 | 7.00 | 7.00 | 7.00 |
| Plantacare 1200 UP (BASF) | Lauryl Glycoside | 3 | 3 | 3 | 3 | 3 | 3 | 3 | 3 | 3 | 3 |
| Citric Acid | Citric Acid | 3.00 | 3.00 | 3.00 | 3.00 | 3.00 | 3.00 | 3.00 | 3.00 | 3.00 | 3.00 |
| Sodium Chloride | Sodium Chloride | 1.00 | 1.00 | 1.00 | 1.00 | 1.00 | 1.00 | 1.00 | 1.00 | 1.00 | 1.00 |
| Sodium Sulfate | Sodium Sulfate | 3.50 | 3.50 | 3.50 | 3.50 | 3.50 | 3.50 | 3.50 | 3.50 | 3.50 | 3.50 |
| Sodium Hydroxide (30% solution) | Water (and) Sodium Hydroxide | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 |
| Water | Aqua | qs to 100 | qs to 100 | qs to 100 | qs to 100 | qs to 100 | qs to 100 | qs to 100 | qs to 100 | qs to 100 | qs to 100 |

(XXII) Dish washing liquid 3

| | | 1 | 2 | 3 | 4 | 5 | 6 | 7 | 8 | 9 |
|---|---|---|---|---|---|---|---|---|---|---|
| **Trade name** | **INCI Name /Chemical name** | **% w/w** | **% w/w** | **% w/w** | **% w/w** | **% w/w** | **% w/w** | **% w/w** | **% w/w** | **% w/w** |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Marlon A 375 (Sasol) | Sodium Dodecylbenzenesulfonate | 7.00 | 7.00 | 7.00 | 7.00 | 7.00 | 7.00 | 7.00 | 7.00 | 7.00 | 7.00 |
| Texapon NSO (BASF) | Sodium Laureth Sulfate | 5.00 | 5.00 | 5.00 | 5.00 | 5.00 | 5.00 | 5.00 | 5.00 | 5.00 | 5.00 |
| Citric Acid | Citric Acid | 3.00 | 3.00 | 3.00 | 3.00 | 3.00 | 3.00 | 3.00 | 3.00 | 3.00 | 3.00 |
| Sodium Hydroxide (30% solution) | Water (and) Sodium Hydroxide | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 | ad pH 5.0 |
| Water | Aqua | qs to 100 | qs to 100 | qs to 100 | qs to 100 | qs to 100 | qs to 100 | qs to 100 | qs to 100 | qs to 100 | qs to 100 |

(XXIII) Dishwashing liquid 4

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | **% w/w** | **% w/w** | **% w/w** | **% w/w** | **% w/w** | **% w/w** | **% w/w** | **% w/w** | **% w/w** | **% w/w** |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Texapon® LS 35 (BASF) | Lauryl-myristyl sulfate Na-salt | 7.00 | 7.00 | 7.00 | 7.00 | 7.00 | 7.00 | 7.00 | 7.00 | 7.00 | 7.00 |
| Texapon® K14 Special (BASF) | Sodium Myreth Sulfate | 7.00 | 7.00 | 7.00 | 7.00 | 7.00 | 7.00 | 7.00 | 7.00 | 7.00 | 7.00 |
| Plantacare® 1200 UP (BASF) | Lauryl Glucoside | 4.00 | 4.00 | 4.00 | 4.00 | 4.00 | 4.00 | 4.00 | 4.00 | 4.00 | 4.00 |
| Dehyton® AB 30 (BASF) | Coco Betaine | 1.1 | 1.1 | 1.1 | 1.1 | 1.1 | 1.1 | 1.1 | 1.1 | 1.1 | 1.1 |
| SD Alcohol 39-C (Berkel) | Alcohol | 5.00 | 5.00 | 5.00 | 5.00 | 5.00 | 5.00 | 5.00 | 5.00 | 5.00 | 5.00 |
| Sodium Chloride | Sodium Chloride | 1.00 | 1.00 | 1.00 | 1.00 | 1.00 | 1.00 | 1.00 | 1.00 | 1.00 | 1.00 |
| Citric Acid | Citric Acid | ad pH 6.5 | ad pH 6.5 | ad pH 6.5 | ad pH 6.5 | ad pH 6.5 | ad pH 6.5 | ad pH 6.5 | ad pH 6.5 | ad pH 6.5 | ad pH 6.5 |
| Water | Aqua | qs to 100 | qs to 100 | qs to 100 | qs to 100 | qs to 100 | qs to 100 | qs to 100 | qs to 100 | qs to 100 | qs to 100 |

(XXIV) Liquid Laundry Detergent 1

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Marlon A 375 (Sasol) | Sodium Dodecylbenzenesulfonate | 10 | 10 | 10 | 10 | 10 | 10 | 10 | 10 | 10 | 10 |
| Neodol 45-7 E (Shell Chemicals) | C14-15 Pareth-7 | 7 | 7 | 7 | 7 | 7 | 7 | 7 | 7 | 7 | 7 |
| SD Alcohol 39-C (Berkel) | Alcohol | 9.00 | 9.00 | 9.00 | 9.00 | 9.00 | 9.00 | 9.00 | 9.00 | 9.00 | 9.00 |
| Soap Base (Mettler) | Sodium Tallowate (and) Sodium Cocoate | 5 | 5 | 5 | 5 | 5 | 5 | 5 | 5 | 5 | 5 |
| Trisodium Citrate Dihydrate | Trisodium Citrate Dihydrate | 4.00 | 4.00 | 4.00 | 4.00 | 4.00 | 4.00 | 4.00 | 4.00 | 4.00 | 4.00 |
| Triethanolamine | Triethanolamine | 5.00 | 5.00 | 5.00 | 5.00 | 5.00 | 5.00 | 5.00 | 5.00 | 5.00 | 5.00 |
| Tinopal® CBS-X (BASF) | Fluorescent Whitening Agent (FWA) | 0.10 | 0.10 | 0.10 | 0.10 | 0.10 | 0.10 | 0.10 | 0.10 | 0.10 | 0.10 |
| Perfume | | qs | qs | qs | qs | qs | qs | qs | qs | qs | qs |
| Water | Aqua | qs to 100 | qs to 100 | qs to 100 | qs to 100 | qs to 100 | qs to 100 | qs to 100 | qs to 100 | qs to 100 | qs to 100 |

(XXV) Liquid Detergent 2

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Nansa SSA/A (Albright & Wilson/Rhodia) | Dodecylbenzene Sulfonic Acid | 8 | 8 | 8 | 8 | 8 | 8 | 8 | 8 | 8 | 8 |
| Edenor® K12-18 (BASF) | Coconut Fatty Acid | 3 | 3 | 3 | 3 | 3 | 3 | 3 | 3 | 3 | 3 |
| Neodol 23-6, 5 E (Shell Chemicals) | C12-13 Pareth-7 | 2 | 2 | 2 | 2 | 2 | 2 | 2 | 2 | 2 | 2 |
| Elfan NS 243 S (Akzo Nobel) | Sodium Laureth Sulfate 3 EO | 4- | 4 | 4 | 4 | 4 | 4 | 4 | 4 | 4 | 4 |
| Trisodium Citrate Dihydrate | Trisodium Citrate Dihydrate | 2 | 2 | 2 | 2 | 2 | 2 | 2 | 2 | 2 | 2 |
| Sodium Hydroxide (30% solution) | Water (and) Sodium Hydroxide | To pH 8 | To pH 8 | To pH 8 | To pH 8 | To pH 8 | To pH 8 | To pH 8 | To pH 8 | To pH 8 | To pH 8 |
| Water and Perfüme | Aqua | qs to 100 | qs to 100 | qs to 100 | qs to 100 | qs to 100 | qs to 100 | qs to 100 | qs to 100 | qs to 100 | qs to 100 |

(XXVI) Liquid Laundry Detergent 3

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Marlon A 375 (Sasol) | Sodium Dodecylbenzenesulfonate | 7 | 7 | 7 | 7 | 7 | 7 | 7 | 7 | 7 | 7 |
| Marlipal O 13/129 (Sasol) | Trideceth-12 | 5 | 5 | 5 | 5 | 5 | 5 | 5 | 5 | 5 | 5 |
| Penta Sodium Triphosphate | Penta Sodium Triphosphate | 10 | 10 | 10 | 10 | 10 | 10 | 10 | 10 | 10 | 10 |
| Sodium Sulfate | Sodium Sulfate | 1 | 1 | 1 | 1 | 1 | 1 | 1 | 1 | 1 | 1 |
| Sodium Hydroxide (10% solution) | Water (and) Sodium Hydroxide | To pH 9 | To pH 9 | To pH 9 | To pH 9 | To pH 9 | To pH 9 | To pH 9 | To pH 9 | To pH 9 | To pH 9 |
| Glycerin | Glycerin | 2 | 2 | 2 | 2 | 2 | 2 | 2 | 2 | 2 | 2 |
| Oleic Acid | Oleic Acid | 1 | 1 | 1 | 1 | 1 | 1 | 1 | 1 | 1 | 1 |
| Tylose C 10000 (Clariant) | Cellulose Gum | 0.1 | 0.1 | 0.1 | 0.1 | 0.1 | 0.1 | 0.1 | 0.1 | 0.1 | 0.1 |
| Water and Perfüme | Aqua | qs to 100 | qs to 100 | qs to 100 | qs to 100 | qs to 100 | qs to 100 | qs to 100 | qs to 100 | qs to 100 | qs to 100 |

(XXVII) Liquid Laundry Detergent 4

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Wilfarin DK-1218 (Wilmar Ltd.) | Soap | 5 | 5 | 5 | 5 | 5 | 5 | 5 | 5 | 5 | 5 |
| Monoethanoamine | | To pH 8 | To pH 8 | To pH 8 | To pH 8 | To pH 8 | To pH 8 | To pH 8 | To pH 8 | To pH 8 | To pH 7.5-9.0 |
| Maranil DBS/LC (BASF) | LABS | 11 | 11 | 11 | 11 | 11 | 11 | 11 | 11 | 11 | 11 |
| Texapon N705 (BASF) | Ethersulfate | 4 | 4 | 4 | 4 | 4 | 4 | 4 | 4 | 4 | 4 |
| Lutensol AO 7 (BASF) | Nonionic Surfactant | 2 | 2 | 2 | 2 | 2 | 2 | 2 | 2 | 2 | 2 |
| Sodium-Citrate | | 1 | 1 | 1 | 1 | 1 | 1 | 1 | 1 | 1 | 1 |
| Lavergy Pro 104 LS (BASF) | Enzyme | 0.1 | 0.1 | 0.1 | 0.1 | 0.1 | 0.1 | 0.1 | 0.1 | 0.1 | 0.1 |
| Cublen NCD 732 (Zimmer&Schwarz) | Phosphonate | 0.1 | 0.1 | 0.1 | 0.1 | 0.1 | 0.1 | 0.1 | 0.1 | 0.1 | 0.1 |
| Water and Perfüme | Aqua | qs to 100 | qs to 100 | qs to 100 | qs to 100 | qs to 100 | qs to 100 | qs to 100 | qs to 100 | qs to 100 | qs to 100 |

(XXVIII) Fabric Softener 1

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Neodol 25-7 E (Shell Chemicals) | C12-15 Pareth-7 | 0.50 | 0.50 | 0.50 | 0.50 | 0.50 | 0.50 | 0.50 | 0.50 | 0.50 | 0.50 |
| Arquad 2HT-75 (Akzo Nobel) | Quaternium 18 (and) Isopropyl Alcohol | 4.00 | 4.00 | 4.00 | 4.00 | 4.00 | 4.00 | 4.00 | 4.00 | 4.00 | 4.00 |
| Perfume + dye | | qs | qs | qs | qs | qs | qs | qs | qs | qs | qs |
| Water | Aqua | qs to 100 | qs to 100 | qs to 100 | qs to 100 | qs to 100 | qs to 100 | qs to 100 | qs to 100 | qs to 100 | qs to 100 |

(XXIX) Fabric Softener 2

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Rewoquat WE 18 (Evonic) | Dihydrogena-ted Tallowethyl Hydroxyethyl-amonium | 4.00 | 4.00 | 4.00 | 4.00 | 4.00 | 4.00 | 4.00 | 4.00 | 4.00 | 4.00 |
| Neodol 25-7 E (Shell Chemicals) | C12-15 Pareth-7 | 0.50 | 0.50 | 0.50 | 0.50 | 0.50 | 0.50 | 0.50 | 0.50 | 0.50 | 0.50 |
| Antifoam DB 31 (Dow Corning) | | 0.10 | 0.10 | qs | qs | qs | qs | qs | qs | qs | qs |
| Perfume + dye | | qs | qs | qs | qs | qs | qs | qs | qs | qs | qs |
| Water | Aqua | qs to 100 | qs to 100 | qs to 100 | qs to 100 | qs to 100 | qs to 100 | qs to 100 | qs to 100 | qs to 100 | qs to 100 |

(XXX) Fabric Softener 3

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Genapol O 100 (Clariant) | Oleth-10 | 2.00 | 2.00 | 2.00 | 2.00 | 2.00 | 2.00 | 2.00 | 2.00 | 2.00 | 2.00 |
| Arquad 2HT-75 (Akzo Nobel) | Quaternium 18 (and) Isopropyl Alcohol | 15.00 | 15.00 | 15.00 | 15.00 | 15.00 | 15.00 | 15.00 | 15.00 | 15.00 | 15.00 |
| Magnesium Chloride satura-ted solution | Magnesium Chloride | 1.00 | 1.00 | 1.00 | 1.00 | 1.00 | 1.00 | 1.00 | 1.00 | 1.00 | 1.00 |
| Perfume dye | | qs | qs | qs | qs | qs | qs | qs | qs | qs | qs |
| Water | Aqua | qs to 100 | qs to 100 | qs to 100 | qs to 100 | qs to 100 | qs to 100 | qs to 100 | qs to 100 | qs to 100 | qs to 100 |

(XXXI) Fabric Softener 4

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Rewoquat WE 18 (Evonik) | Dihydrogenated Tallowethyl Hydroxyethyl-amonium | 15.00 | 15.00 | 15.00 | 15.00 | 15.00 | 15.00 | 15.00 | 15.00 | 15.00 | 15.00 |
| Genapol O 100 (Clariant) | Oleth-10 | 2.00 | 2.00 | 2.00 | 2.00 | 2.00 | 2.00 | 2.00 | 2.00 | 2.00 | 2.00 |
| Antifoam DB 31 (Dow Corning) | | 0.50 | 0.50 | 0.50 | 0.50 | 0.50 | 0.50 | 0.50 | 0.50 | 0.50 | 0.50 |
| Magnesium Chloride saturated solution | Magnesium Chloride | 1.00 | 1.00 | 1.00 | 1.00 | 1.00 | 1.00 | 1.00 | 1.00 | 1.00 | 1.00 |
| Perfume + dye | | qs | qs | qs | qs | qs | qs | qs | qs | qs | qs |
| Water | Aqua | qs to 100 | qs to 100 | qs to 100 | qs to 100 | qs to 100 | qs to 100 | qs to 100 | qs to 100 | qs to 100 | qs to 100 |

(XXXII) Polymer emulsion

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Polyethylene wax | | 30.00 | 30.00 | 30.00 | 30.00 | 30.00 | 30.00 | 30.00 | 30.00 | 30.00 | 30.00 |
| Lutensol TO 10 (BASF) | Alcoholethoxy-late | 8.5 | 8.5 | 8.5 | 8.5 | 8.5 | 8.5 | 8.5 | 8.5 | 8.5 | 8.5 |
| KOH | KOH | 0.5 | 0.5 | 0.5 | 0.5 | 0.5 | 0.5 | 0.5 | 0.5 | 0.5 | 0.5 |
| Water | Aqua | qs to 100 | qs to 100 | qs to 100 | qs to 100 | qs to 100 | qs to 100 | qs to 100 | qs to 100 | qs to 100 | qs to 100 |
| pH | | 9.2 | 9.2 | 9.2 | 9.2 | 9.2 | 9.2 | 9.2 | 9.2 | 9.2 | 9.2 |

(XXXIII) Cellulose pulp

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Cellulose (Eifeltor Mühle) | Cellulose | 2.0 | 2.0 | 2.0 | 2.0 | 2.0 | 2.0 | 2.0 | 2.0 | 2.0 | 2.0 |
| Water | Aqua | qs to 100 | qs to 100 | qs to 100 | qs to 100 | qs to 100 | qs to 100 | qs to 100 | qs to 100 | qs to 100 | qs to 100 |
| pH | | 7.2 | 7.2 | 7.2 | 7.2 | 7.2 | 7.2 | 7.2 | 7.2 | 7.2 | 7.2 |

(XXXIV) $CaCO_3$ Slurry

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| | $CaCO_3$ | 50.0 | 50.0 | 50.0 | 50.0 | 50.0 | 50.0 | 50.0 | 50.0 | 50.0 | 50.0 |
| Dispex AA 4140 (BASF) | Polyacrylate | 0.5 | 0.5 | 0.5 | 0.5 | 0.5 | 0.5 | 0.5 | 0.5 | 0.5 | 0.5 |
| Water | Aqua | qs to 100 | qs to 100 | qs to 100 | qs to 100 | qs to 100 | qs to 100 | qs to 100 | qs to 100 | qs to 100 | qs to 100 |

(XXXV) Kaolin Slurry

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Kaolin DSK 50 (Dorfner GmbH) | Kaolin | 50.0 | 50.0 | 50.0 | 50.0 | 50.0 | 50.0 | 50.0 | 50.0 | 50.0 | 50.0 |
| Sokalan CP 10 (BASF) | Polyacrylate | 0.1 | 0.1 | 0.1 | 0.1 | 0.1 | 0.1 | 0.1 | 0.1 | 0.1 | 0.1 |
| Water | Aqua | qs to 100 | qs to 100 | qs to 100 | qs to 100 | qs to 100 | qs to 100 | qs to 100 | qs to 100 | qs to 100 | qs to 100 |

(XXXVI) Starch solution

| | | 1 | 2 | 3 | 4 | 5 | 6 | 7 | 8 | 9 | 10 |
|---|---|---|---|---|---|---|---|---|---|---|---|
| Trade name | INCI Name /Chemical name | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Starch | CAS 9005-25-8 | 2.0 | 2.0 | 2.0 | 2.0 | 2.0 | 2.0 | 2.0 | 2.0 | 2.0 | 2.0 |
| Water | Aqua | qs to 100 | qs to 100 | qs to 100 | qs to 100 | qs to 100 | qs to 100 | qs to 100 | qs to 100 | qs to 100 | qs to 100 |

(XXXVII) Pigment Slurry

| | | 1 | 2 | 3 | 4 | 5 | 6 | 7 | 8 | 9 | 10 |
|---|---|---|---|---|---|---|---|---|---|---|---|
| Trade name | INCI Name /Chemical name | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Pigment Blue 015 | P BL 015 | 20.0 | 20.0 | 20.0 | 20.0 | 20.0 | 20.0 | 20.0 | 20.0 | 20.0 | 20.0 |
| Dispergator CC | | 0.5-4 | 0.5-4 | 0.5-4 | 0.5-4 | 0.5-4 | 0.5-4 | 0.5-4 | 0.5-4 | 0.5-4 | 0.5-4 |
| Water | Aqua | qs to 100 | qs to 100 | qs to 100 | qs to 100 | qs to 100 | qs to 100 | qs to 100 | qs to 100 | qs to 100 | qs to 100 |

(XXXVIII) Paint

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Natrosol 250HHR (Brenntag) | Hydroxyethylcel-lulose | 0.3 | 0.3 | 0.3 | 0.3 | 0.3 | 0.3 | 0.3 | 0.3 | 0.3 | 0.3 |
| Rheovis PE 133 (BASF)0 | Polyether | 1.0 | 1.0 | 1.0 | 1.0 | 1.0 | 1.0 | 1.0 | 1.0 | 1.0 | 1.0 |
| Na-polyphosphate | $(NaPO3)_n$ | 0.1 | 0.1 | 0.1 | 0.1 | 0.1 | 0.1 | 0.1 | 0.1 | 0.1 | 0.1 |
| NaOH | NaOH | 0.04 | 0.04 | 0.04 | 0.04 | 0.04 | 0.04 | 0.04 | 0.04 | 0.04 | 0.04 |
| Texamol (Alpha Chemistry) | Sodium Alkyl EthoxySulphate | 0.6 | 0.6 | 0.6 | 0.6 | 0.6 | 0.6 | 0.6 | 0.6 | 0.6 | 0.6 |
| Foammaster MO 2114 (BASF) | | 0.5 | 0.5 | 0.5 | 0.5 | 0.5 | 0.5 | 0.5 | 0.5 | 0.5 | 0.5 |
| Omyacarb 5 EU (Omya) | $CaCO_3$ | 19.8 | 19.8 | 19.8 | 19.8 | 19.8 | 19.8 | 19.8 | 19.8 | 19.8 | 19.8 |
| Socal P2 (Sol-vay) | $CaCO_3$ | 11.0 | 11.0 | 11.0 | 11.0 | 11.0 | 11.0 | 11.0 | 11.0 | 11.0 | 11.0 |
| Finntalc M 30 (Elementis) | Talc | 5.5 | 5.5 | 5.5 | 5.5 | 5.5 | 5.5 | 5.5 | 5.5 | 5.5 | 5.5 |
| Kronos 2119 (Kronos) | $TiO_2$ | 10.0 | 10.0 | 10.0 | 10.0 | 10.0 | 10.0 | 10.0 | 10.0 | 10.0 | 10.0 |
| Acronal EDGE 6205 (BASF) | p-Acrylate | 23.0 | 23.0 | 23.0 | 23.0 | 23.0 | 23.0 | 23.0 | 23.0 | 23.0 | 23.0 |
| Water | Aqua | qs to 100 | qs to 100 | qs to 100 | qs to 100 | qs to 100 | qs to 100 | qs to 100 | qs to 100 | qs to 100 | qs to 100 |

PERSONAL CARE FORMULATIONS

(XXXIX) O/W Emulsion for skin care

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Cremophor A 6 (Sigma) | Ceteareth-6, Stearylal-cohol | 2 | 2 | 2 | 2 | 2 | 2 | 2 | 2 | 2 | 2 |
| Cremophor A 25 (Sigma) | | 2 | 2 | 2 | 2 | 2 | 2 | 2 | 2 | 2 | 2 |
| Tegosoft liquid (Evonik) | Cetearyl Ethylhexa-noate | 5 | 5 | 5 | 5 | 5 | 5 | 5 | 5 | 5 | 5 |
| Paraffinoil | Minearal oil | 5 | 5 | 5 | 5 | 5 | 5 | 5 | 5 | 5 | 5 |
| Lanette 16 (BASF) | Cetyl Alcohol | 2.5 | 2.5 | 2.5 | 2.5 | 2.5 | 2.5 | 2.5 | 2.5 | 2.5 | 2.5 |
| Water | Aqua | qs to 100 | qs to 100 | qs to 100 | qs to 100 | qs to 100 | qs to 100 | qs to 100 | qs to 100 | qs to 100 | qs to 100 |

(XL) W/O Lotion

| | | | 1 | 2 | 3 | 4 | 5 | 6 | 7 | 8 | 9 | 10 |
|---|---|---|---|---|---|---|---|---|---|---|---|---|
| | **Trade name** | **INCI Name /Chemical name** | % w/w | % w/w | % w/w | % w/w | % w/w | % w/w | % w/w | % w/w | % w/w | % w/w |
| Part A | Antimicrobial agent | | 0.001 | 0.01 | 0.1 | 1 | 2 | 0.001 | 0.01 | 0.1 | 1 | 2 |
| | Compound of formula (I) | | 1 | 1 | 1 | 1 | 1 | 1 | 1 | 1 | 1 | 1 |
| | Solvent | | - | - | - | - | - | 2 | 2 | 2 | 2 | 2 |
| Part B | Dehymuls PGPH | Polyglyceryl-Dipolyhydro-xystearate | 2.0 | 2.0 | 2.0 | 2.0 | 2.0 | 2.0 | 2.0 | 2.0 | 2.0 | 2.0 |
| | Lameform TGI | Polyglyceryl-3-Diisostearate | 2.0 | 2.0 | 2.0 | 2.0 | 2.0 | 2.0 | 2.0 | 2.0 | 2.0 | 2.0 |
| | Zinc Stearate | Zinc Stearate | 1.0 | 1.0 | 1.0 | 1.0 | 1.0 | 1.0 | 1.0 | 1.0 | 1.0 | 1.0 |
| | Cosmedia Gel CC | Dicaprylyl Carbonate, Staealkonium Hectorite, Propylene Carbonate | 2.0 | 2.0 | 2.0 | 2.0 | 2.0 | 2.0 | 2.0 | 2.0 | 2.0 | 2.0 |
| | Cetiol Sen-soft | Propylheptyl Caprylate | 5.0 | 5.0 | 5.0 | 5.0 | 5.0 | 5.0 | 5.0 | 5.0 | 5.0 | 5.0 |
| | Cetiol CC | Dicaprylyl Carbonate | 4.0 | 4.0 | 4.0 | 4.0 | 4.0 | 4.0 | 4.0 | 4.0 | 4.0 | 4.0 |
| | Cetiol C 5C | Coco-Capry-late/Caprate | 5.0 | 5.0 | 5.0 | 5.0 | 5.0 | 5.0 | 5.0 | 5.0 | 5.0 | 5.0 |
| | Glycerin | Glycerin | 10.0 | 10.0 | 10.0 | 10.0 | 10.0 | 10.0 | 10.0 | 10.0 | 10.0 | 10.0 |
| | Mg2SO4 x 7H2O | Magnesi-umsulfate | 1.0 | 1.0 | 1.0 | 1.0 | 1.0 | 1.0 | 1.0 | 1.0 | 1.0 | 1.0 |
| | Perfume | | q.s. | q.s. | q.s. | q.s. | q.s. | q.s. | q.s. | q.s. | q.s. | q.s. |
| Part C | Water | | q. s. to 100 | q. s. to 100 | q. s. to 100 | q. s. to 100 | q. s. to 100 | q. s. to 100 | q. s. to 100 | q. s. to 100 | q. s. to 100 | q. s. to 100 |

(XLI) Roll-on Deodorant

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Arlanol HD (Croda) | Isohexadecane | 8.0 | 8.0 | 8.0 | 8.0 | 8.0 | 8.0 | 8.0 | 8.0 | 8.0 | 8.0 |
| Tegosoft CT (Evonik) | Caprylic/Capric Triglyceride | 5.0 | 5.0 | 5.0 | 5.0 | 5.0 | 5.0 | 5.0 | 5.0 | 5.0 | 5.0 |
| Cetiol OE (BASF) | Stearylether | 3.0 | 3.0 | 3.0 | 3.0 | 3.0 | 3.0 | 3.0 | 3.0 | 3.0 | 3.0 |
| Arlatone 983 (Croda) | PEG5_Glyceryl Stearate | 2.0 | 2.0 | 2.0 | 2.0 | 2.0 | 2.0 | 2.0 | 2.0 | 2.0 | 2.0 |
| Brij 76 NENA (Sigma) | Steareth-10 | 2.0 | 2.0 | 2.0 | 2.0 | 2.0 | 2.0 | 2.0 | 2.0 | 2.0 | 2.0 |
| Lanette 16 (BASF) | Cetylalcohol | 0.5 | 0.5 | 0.5 | 0.5 | 0.5 | 0.5 | 0.5 | 0.5 | 0.5 | 0.5 |
| Atlas G-2330 (Croda) | Sorbeth-30 | 1.0 | 1.0 | 1.0 | 1.0 | 1.0 | 1.0 | 1.0 | 1.0 | 1.0 | 1.0 |
| Water | Aqua | qs to 100 | qs to 100 | qs to 100 | qs to 100 | qs to 100 | qs to 100 | qs to 100 | qs to 100 | qs to 100 | qs to 100 |
| NaOH (1%) | | Add to pH 5.7 | Add to pH 5.7 | Add to pH 5.7 | Add to pH 5.7 | Add to pH 5.7 | Add to pH 5.7 | Add to pH 5.7 | Add to pH 5.7 | Add to pH 5.7 | Add to pH 5.7 |

(XLII) Shower Gel

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Texapon N 70 | Sodium Laureth Sulfate | 8.5 | 8.5 | 8.5 | 8.5 | 8.5 | 8.5 | 8.5 | 8.5 | 8.5 | 8.5 |
| Plantacare 818 UP | Coco-Glucoside | 3.8 | 3.8 | 3.8 | 3.8 | 3.8 | 3.8 | 3.8 | 3.8 | 3.8 | 3.8 |
| Lamesoft PO 65 | Coco-Glucoside, Glycerol Oleate | 1.0 | 1.0 | 1.0 | 1.0 | 1.0 | 1.0 | 1.0 | 1.0 | 1.0 | 1.0 |
| Dehyquart CC7 BZ | Polyquternium-7 | 1.0 | 1.0 | 1.0 | 1.0 | 1.0 | 1.0 | 1.0 | 1.0 | 1.0 | 1.0 |
| Citic Acid 50% | Citric Acid | Add to pH 5-7 | Add to pH 5-7 | Add to pH 5-7 | Add to pH 5-7 | Add to pH 5-7 | Add to pH 5-7 | Add to pH 5-7 | Add to pH 5-7 | Add to pH 5-7 | Add to pH 5-7 |
| Sodium Chloride | Sodium Chloride | q. s. | q. s. | q. s. | q. s. | q. s. | q. s. | q. s. | q. s. | q. s. | q. s. |
| Water and Perfume | Aqua | qs to 100 | qs to 100 | qs to 100 | qs to 100 | qs to 100 | qs to 100 | qs to 100 | qs to 100 | qs to 100 | qs to 100 |

(XLIII) Shampoo

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 1 | 2 | 0.001 | 0.01 | 0.1 | 1 | 2 |
| Compound of formula (I) | | 1 | 1 | 1 | 1 | 1 | 1 | 1 | 1 | 1 | 1 |
| Solvent | | - | - | - | - | - | 2 | 2 | 2 | 2 | 2 |
| Texapon N 70 | Sodium Laureth Sulfate | 14.0 | 14.0 | 14.0 | 14.0 | 14.0 | 14.0 | 14.0 | 14.0 | 14.0 | 14.0 |
| Dehyton PK 45 | Cocoamidopropyl Betaine | 5.0 | 5.0 | 5.0 | 5.0 | 5.0 | 5.0 | 5.0 | 5.0 | 5.0 | 5.0 |
| Cetiol LDO | Dicapryl Ether, Lauryl Alcohol | 0.7 | 0.7 | 0.7 | 0.7 | 0.7 | 0.7 | 0.7 | 0.7 | 0.7 | 0.7 |
| Euperlan PK 710 Benz | Glycol Distearate, Sodium Laureth Sulfate, Cocoamide MEA | 3.0 | 3.0 | 3.0 | 3.0 | 3.0 | 3.0 | 3.0 | 3.0 | 3.0 | 3.0 |
| Perfume | | q. s. | q. s. | q. s. | q. s. | q. s. | q. s. | q. s. | q. s. | q. s. | q. s. |
| Dehyquart Guar N | Guar Hydroxypropyltirmonuim Chliride | 0.2 | 0.2 | 0.2 | 0.2 | 0.2 | 0.2 | 0.2 | 0.2 | 0.2 | 0.2 |
| | Citric Acid | Add to pH 5-7 | Add to pH 5-7 | Add to pH 5-7 | Add to pH 5-7 | Add to pH 5-7 | Add to pH 5-7 | Add to pH 5-7 | Add to pH 5-7 | Add to pH 5-7 | Add to pH 5-7 |
| Sodium Chloride | Sodium Chloride | q. s. | q. s. | q. s. | q. s. | q. s. | q. s. | q. s. | q. s. | q. s. | q. s. |
| Water and Perfume | Aqua | qs to 100 | qs to 100 | qs to 100 | qs to 100 | qs to 100 | qs to 100 | qs to 100 | qs to 100 | qs to 100 | qs to 100 |

INDUSTRIAL LIQUIDS

(XLIV) Metal Working Fluid (in use)

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Monoethanolamine | | 0.08 | 0.08 | 0.08 | 0.08 | 0.08 | 0.08 | 0.08 | 0.08 | 0.08 | 0.08 |
| Triethanolamine | | 0.08 | 0.08 | 0.08 | 0.08 | 0.08 | 0.08 | 0.08 | 0.08 | 0.08 | 0.08 |
| Amino-methylpropanol | | 0.08 | 0.08 | 0.08 | 0.08 | 0.08 | 0.08 | 0.08 | 0.08 | 0.08 | 0.08 |
| Pluronic RPE 1720 (BASF) | Nonionic Surfactant | 0.25 | 0.25 | 0.25 | 0.25 | 0.25 | 0.25 | 0.25 | 0.25 | 0.25 | 0.25 |
| Pluronic RPE 1740 (BASF) | Nonionic Surfactant | 0.25 | 0.25 | 0.25 | 0.25 | 0.25 | 0.25 | 0.25 | 0.25 | 0.25 | 0.25 |
| Korantin LUB (BASF) | Poly[oxy(methyl-1,2-ethandiyl)],α-phosphono-ω-hydroxy- | 0.15 | 0.15 | 0.15 | 0.15 | 0.15 | 0.15 | 0.15 | 0.15 | 0.15 | 0.15 |
| Oleic Acid | | 0.08 | 0.08 | 0.08 | 0.08 | 0.08 | 0.08 | 0.08 | 0.08 | 0.08 | 0.08 |
| Erucic Acid | | 0.08 | 0.08 | 0.08 | 0.08 | 0.08 | 0.08 | 0.08 | 0.08 | 0.08 | 0.08 |
| Water | | qs to 100 | qs to 100 | qs to 100 | qs to 100 | qs to 100 | qs to 100 | qs to 100 | qs to 100 | qs to 100 | qs to 100 |

(XLV) Drilling Mud 1

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Potassium Chloride | KCl | 11.3 | 11.3 | 11.3 | 11.3 | 11.3 | 11.3 | 11.3 | 11.3 | 11.3 | 11.3 |
| Polysaccharide | | 1.3 | 1.3 | 1.3 | 1.3 | 1.3 | 1.3 | 1.3 | 1.3 | 1.3 | 1.3 |
| Xantan Gum | | 0.5 | 0.5 | 0.5 | 0.5 | 0.5 | 0.5 | 0.5 | 0.5 | 0.5 | 0.5 |
| Calcium Carbonate | $CaCO_3$ | 10.0 | 10.0 | 10.0 | 10.0 | 10.0 | 10.0 | 10.0 | 10.0 | 10.0 | 10.0 |
| Water | Aqua | qs to 100 | qs to 100 | qs to 100 | qs to 100 | qs to 100 | qs to 100 | qs to 100 | qs to 100 | qs to 100 | qs to 100 |

(XLVI) Drilling Mud 2

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Potassium Chloride | KCl | 11.3 | 11.3 | 11.3 | 11.3 | 11.3 | 11.3 | 11.3 | 11.3 | 11.3 | 11.3 |
| Polyanionic Cellulose | | 1.3 | 1.3 | 1.3 | 1.3 | 1.3 | 1.3 | 1.3 | 1.3 | 1.3 | 1.3 |
| Biopolymer | | 0.5 | 0.5 | 0.5 | 0.5 | 0.5 | 0.5 | 0.5 | 0.5 | 0.5 | 0.5 |
| Calcium Carbonate | $CaCO_3$ | 10.0 | 10.0 | 10.0 | 10.0 | 10.0 | 10.0 | 10.0 | 10.0 | 10.0 | 10.0 |
| Disodium Carbonate | $Na_2CO_3$ | 0.2 | 0.2 | 0.2 | 0.2 | 0.2 | 0.2 | 0.2 | 0.2 | 0.2 | 0.2 |
| Water | Aqua | qs to 100 | qs to 100 | qs to 100 | qs to 100 | qs to 100 | qs to 100 | qs to 100 | qs to 100 | qs to 100 | qs to 100 |

(XLVII) Workover Fluid used in Oilfield

| | | 1 | 2 | 3 | 4 | 5 | 6 | 7 | 8 | 9 | 10 |
|---|---|---|---|---|---|---|---|---|---|---|---|
| **Trade name** | **INCI Name /Chemical name** | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| Bentonite | | 2.5 | 2.5 | 2.5 | 2.5 | 2.5 | 2.5 | 2.5 | 2.5 | 2.5 | 2.5 |
| Xantan Gum | | 0.4 | 0.4 | 0.4 | 0.4 | 0.4 | 0.4 | 0.4 | 0.4 | 0.4 | 0.4 |
| Modified Starch | | 1.5 | 1.5 | 1.5 | 1.5 | 1.5 | 1.5 | 1.5 | 1.5 | 1.5 | 1.5 |
| Barium Sulfate | | 11.2 | 11.2 | 11.2 | 11.2 | 11.2 | 11.2 | 11.2 | 11.2 | 11.2 | 11.2 |
| Disodium Carbonate | | 0.1 | 0.1 | 0.1 | 0.1 | 0.1 | 0.1 | 0.1 | 0.1 | 0.1 | 0.1 |
| Sea Water | | qs to 100 | qs to 100 | qs to 100 | qs to 100 | qs to 100 | qs to 100 | qs to 100 | qs to 100 | qs to 100 | qs to 100 |

(XLVIII) Cooling water

| | | 1 | 2 | 3 | 4 | 5 | 6 | 7 | 8 | 9 | 10 |
|---|---|---|---|---|---|---|---|---|---|---|---|
| Trade name | INCI Name /Chemical name | % w/w | % w/w | % w/w | % w/w | % w/w | % w/w | % w/w | % w/w | % w/w | % w/w |
| Antimicrobial agent | | 0.001 | 0.01 | 0.1 | 0.5 | 1 | 0.001 | 0.01 | 0.1 | 0.5 | 1 |
| Compound of formula (I) | | 0.05 | 0.05 | 0.05 | 0.05 | 0.05 | 0.05 | 0.05 | 0.05 | 0.05 | 0.05 |
| Solvent | | - | - | - | - | - | 3 | 3 | 3 | 3 | 3 |
| $Ca^{2+}$ | | 0-0.05 | 0-0.05 | 0-0.05 | 0-0.05 | 0-0.05 | 0-0.05 | 0-0.05 | 0-0.05 | 0-0.05 | 0-0.05 |
| Plurafac LF 221 (BASF) | Non-ionic surfactant | 0.01-0.1 | 0.01-0.1 | 0.01-0.1 | 0.01-0.1 | 0.01-0.1 | 0.01-0.1 | 0.01-0.1 | 0.01-0.1 | 0.01-0.1 | 0.01-0.1 |
| Korantin PP (BASF) | 2-propyn-1-ol | 0.001-0.05 | 0.001-0.05 | 0.001-0.05 | 0.001-0.05 | 0.001-0.05 | 0.001-0.05 | 0.001-0.05 | 0.001-0.05 | 0.001-0.05 | 0.001-0.05 |
| | | pH 6-10 | pH 6-10 | pH 6-10 | pH 6-10 | pH 6-10 | pH 6-10 | pH 6-10 | pH 6-10 | pH 6-10 | pH 6-10 |
| Water | | qs to 100 | qs to 100 | qs to 100 | qs to 100 | qs to 100 | qs to 100 | qs to 100 | qs to 100 | qs to 100 | qs to 100 |

(XLIX) Plant protection Product 1

| | | | 1 | 2 | 3 | 4 | 5 | 6 | 7 | 8 | 9 | 10 |
|---|---|---|---|---|---|---|---|---|---|---|---|---|
| | Trade name | INCI Name /Chemical name | % w/w | % w/w | % w/w | % w/w | % w/w | % w/w | % w/w | % w/w | % w/w | % w/w |
| Part A | Antimicrobial agent | | 0.001 | 0.01 | 0.2 | 1 | 2 | 0.001 | 0.01 | 0.2 | 1 | 2 |
| | Compound of formula (I) | | 1 | 1 | 1 | 1 | 1 | 1 | 1 | 1 | 1 | 1 |
| | Solvent | | - | - | - | - | - | 2 | 2 | 2 | 2 | 2 |
| Part B | Azoxystrobin | | 25 | 25 | 25 | 25 | 25 | 25 | 25 | 25 | 25 | 25 |
| | Agnique CP 72 L (BASF) | | 2.5 | 2.5 | 2.5 | 2.5 | 2.5 | 2.5 | 2.5 | 2.5 | 2.5 | 2.5 |
| | Sokalan CP 10 (BASF) | | 1.6 | 1.6 | 1.6 | 1.6 | 1.6 | 1.6 | 1.6 | 1.6 | 1.6 | 1.6 |
| | 1,2-Propane-diol | | 5.0 | 5.0 | 5.0 | 5.0 | 5.0 | 5.0 | 5.0 | 5.0 | 5.0 | 5.0 |
| | Lutensol XP 80 (BASF) | | 15 | 15 | 15 | 15 | 15 | 15 | 15 | 15 | 15 | 15 |
| | Attagel 50 (BASF) | | 0.2 | 0.2 | 0.2 | 0.2 | 0.2 | 0.2 | 0.2 | 0.2 | 0.2 | 0.2 |
| | Agnique DFM 111 S (BASF) | | 0.2 | 0.2 | 0.2 | 0.2 | 0.2 | 0.2 | 0.2 | 0.2 | 0.2 | 0.2 |
| Part C | Water | | qs to 100 | qs to 100 | qs to 100 | qs to 100 | qs to 100 | qs to 100 | qs to 100 | qs to 100 | qs to 100 | qs to 100 |

(L) Plant protection Product 2

| | | | 1 | 2 | 3 | 4 | 5 | 6 | 7 | 8 | 9 | 10 |
|---|---|---|---|---|---|---|---|---|---|---|---|---|
| | **Trade name** | **INCI Name /Chemical name** | % w/w | % w/w | % w/w | % w/w | % w/w | % w/w | % w/w | % w/w | % w/w | % w/w |
| Part A | Antimicrobial agent | | 0.001 | 0.01 | 0.2 | 0.5 | 1 | 0.001 | 0.01 | 0.2 | 0.5 | 1 |
| | Compound of formula (I) | | 0.05 | 0.05 | 0.05 | 0.05 | 0.05 | 0.05 | 0.05 | 0.05 | 0.05 | 0.05 |
| | Solvent | | - | - | - | - | - | 2 | 2 | 2 | 2 | 2 |
| Part B | Azoxystrobin | | 25 | 25 | 25 | 25 | 25 | 25 | 25 | 25 | 25 | 25 |
| | Agnique CP 72 L (BASF) | | 2.5 | 2.5 | 2.5 | 2.5 | 2.5 | 2.5 | 2.5 | 2.5 | 2.5 | 2.5 |
| | Sokalan CP 10 (BASF) | | 1.6 | 1.6 | 1.6 | 1.6 | 1.6 | 1.6 | 1.6 | 1.6 | 1.6 | 1.6 |
| | 1,2-Propane-diol | | 5.0 | 5.0 | 5.0 | 5.0 | 5.0 | 5.0 | 5.0 | 5.0 | 5.0 | 5.0 |
| | Attagel 50 (BASF) | | 0.2 | 0.2 | 0.2 | 0.2 | 0.2 | 0.2 | 0.2 | 0.2 | 0.2 | 0.2 |
| | Agnique DFM 111 S (BASF) | | 0.2 | 0.2 | 0.2 | 0.2 | 0.2 | 0.2 | 0.2 | 0.2 | 0.2 | 0.2 |
| Part C | Water | | qs to 100 | qs to 100 | qs to 100 | qs to 100 | qs to 100 | qs to 100 | qs to 100 | qs to 100 | qs to 100 | qs to 100 |

In each of the above formulations 1 to 10 in each of the above tables I to L one of the following antimicrobial agents is used in each case: 2-phenoxyethanol, phenoxyisopro-panol, 4,4'-dichloro 2'-hydroxydiphenylether, 2-bromo-2-nitropropane-1,3-diol, glutaraldehyde, 2,4-dichlorobenzylalcohol, 1,3,5-tris-(2-hydroxyethyl)-1,3,5-hexahydrotriazine, formic acid and salts thereof, benzoic acid and salts thereof, sorbic acid and salts thereof, lactic acid and salts thereof, isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT), and 2-butyl-benzo[d]isothiazol-3-one (BBIT); 3-iodo-2-propynylbutylcarbamate (IPBC), benzyl alcohol, pyridine-2-thiol 1-oxide and salts thereof; 2,2-dibromo-2-cyanoacetamide (DBNPA), N-(3-aminopropyl)-N-dodecylpropane-1,3-diamine (Diamine), tetrakis(hydroxymethyl)phosphonium sulphate(2:1) (THPS), 2,2-dithiobis[N-methylbenzamide] (DTBMA) and 2-bromo-2-(bromomethyl)pentanedinitril (DBDCB). Specifically, 2-phenoxyethanol, 4,4'-dichloro 2'-hydroxydiphenylether (diclosan) or 1,2-benzisothiazol-3(2H)-one (BIT) is used. More specifically, 2-phenoxyethanol is used. Each of these antimicrobial agents is combined in each of the above formulations with one or more of the $\alpha$-hydroxyketones (I) as defined above. Specifically, one of the following $\alpha$-hydroxyketones (I) is used: 1-hydroxypropan-2-one (hydroxyacetone; $R^1$ is methyl; $R^2$ and $R^3$ are hydrogen), 1-hydroxy-butan-2-one ($R^1$ is ethyl; $R^2$ and $R^3$ are hydrogen), 4-hydroxyhexan-3-one (propioin; $R^1$ and $R^2$ are ethyl, $R^3$ is hydrogen), 2-hydroxy-1-phenylethan-1-one ($R^1$ is phenyl; $R^2$ and $R^3$ are hydrogen) and mixtures thereof. Specifically, hydroxyacetone or 2-hydroxy-1-phenylethan-1-one is used. Very specifically, in each of the above formulations 1 to 10 in each of the above tables I to L, the antimicrobial agents is 2-phenoxyethanol and the compound (I) is hydroxyacetone. In another very specific embodiment, in each of the above formulations 1 to 10 in each of the above tables I to L, the antimicrobial agents is 2-phenoxyethanol and the compound (I) is 1-hydroxy-butan-2-one. In another very specific embodiment, in each of the above formulations 1 to 10 in each of the above tables I to L, the antimicrobial agents is 2-phenoxyethanol and the compound (I) is 4-hydroxyhexan-3-one. In another very specific embodiment, in each of the above formulations 1 to 10 in each of the above tables I to L, the antimicrobial agents is 2-phenoxyethanol and the compound (I) is 2-hydroxy-1-phenylethan-1-one.

If a solvent is used in the above formulations, this is as defined above. Specifically, the solvent is ethanol, n-propanol, isopropanol, ethylene glycol, propylene glycol, propylene glycol mono-n-butylether (n-butoxy-2-propanol), or ethylene glycol mono-n-butylether (butyl glycol).

Very specifically, in each of the above formulations 1 to 10 in each of the above tables I to L, the antimicrobial agents is 2-phenoxyethanol, the compound (I) is hydroxyacetone ($R^1$ = methyl) and the solvent is n-propanol, propylene glycol mono-n-butylether or ethylene glycol mono-n-butylether. In another very specific embodiment, in each of the above formulations 1 to 10 in each of the above tables I to L, the antimicrobial agents is 2-phenoxyethanol, the compound (I) is 1-hydroxy-butan-2-one and the solvent is n-propanol, propylene glycol mono-n-butylether or ethylene glycol mono-n-butylether. In another very specific embodiment, in each of the above formulations 1 to 10 in each of the above tables I to L, the antimicrobial agents is 2-phenoxyethanol, the compound (I) is 4-hydroxyhexan-3-one and the solvent is n-propanol, propylene glycol mono-n-butylether or ethylene glycol mono-n-butylether. In another very specific embodiment, in each of the above formulations 1 to 10 in each of the above tables I to L, the antimicrobial agents is 2-phenoxyethanol, the compound (I) is 2-hydroxy-1-phenylethan-1-one and the solvent is n-propanol, propylene glycol mono-n-butylether or ethylene glycol mono-n-butylether.

In the above tables, the % w/w are relative to the overall weight of the respective composition.

The invention relates moreover to a kit of parts comprising at least two parts, where the first part comprises at least one antimicrobial agent as defined above; the second part comprises at least one $\alpha$-hydroxyketone of the formula (I) as defined above and optionally at least one organic solvent [different from the $\alpha$-hydroxyketones of the formula (I) (and of course also from said antimicrobial agent)], preferably as defined above; and an optional third part comprises at least one organic solvent [different from the $\alpha$-hydroxyketones of the formula (I) (and of course also from said antimicrobial agent)], preferably as defined above;

where the first part does not comprise any $\alpha$-hydroxyketone of the formula (I);
where the second part does not comprise any antimicrobial agent as defined above; where the optional third part does not comprise any antimicrobial agent as defined above nor any $\alpha$-hydroxyketone of the formula (I); and
where the first and second parts contain the at least one antimicrobial agent as defined above and the at least one $\alpha$-hydroxyketone of the formula (I) in such amounts that when the first and the second part are mixed the resulting overall weight ratio is as defined above.

While in the above-described compositions components (a) and (b) are present as a physical mixture, in a kit of parts they are formulated separately, but provided in such a form that they nevertheless form a functional unity. They form thus a true combination through a purpose-directed application. The functional unity is expressed for example in the fact that the parts contain the antimicrobial agent and the $\alpha$-hydroxyketone (I) in such amounts that when mixed, they result in the desired weight ratio. Another way to express functional unity may be a use instruction explaining the combined use of the two or more parts of the kit. Yet another way to express functional unity may be a physical connection. For instance, the different parts of the kit may be bond to each other via an adhesive tape or strap or any other type of tie, or may be assembled in a common container, such as a box, package, basket etc. or packed together in a plastic foil.

In a preferred embodiment, the kit of parts is a kit of two parts, where the first part comprises at least one antimicrobial agent as above; and the second part comprises at least one $\alpha$-hydroxyketone of the formula (I) as defined above and at least one organic solvent [different from the $\alpha$-hydroxyketone of the formula (I) (and of course also from said antimicrobial agent)], where the organic solvent has preferably one of the above preferred meanings.

In an alternatively preferred embodiment, the kit of parts is a kit of three parts, where the first part comprises at least one antimicrobial agent as defined above; the second part comprises at least one $\alpha$-hydroxyketone of the formula (I) as defined above; and the third part comprises at least one organic solvent [different from the $\alpha$-hydroxyketones of the formula (I) (and of course also from said antimicrobial agent)], where the organic solvent has preferably one of the above preferred meanings.

The invention is now illustrated by the following examples.

## EXAMPLES

### Example 1 Antimicrobial activity against bacteria

#### 1.1 Preservative activity in a manual dishwashing composition using 2-phenoxyethanol (PE) as antimicrobial agent

A manual dish wash detergent (MWD) of pH 7.1 containing the following components was used:

| | | |
|---|---|---|
| Texapon K 12 G | Sodium lauryl sulfate; anionic surfactant from BASF | 3.5% |
| Glucopon 600 CSUP | $C_{10-16}$-alkyl polyglycoside; non-ionic surfactant | 5% |
| Texapon N 701 | Sodium laureth sulfate; anionic surfactant from BASF | 5% |
| Dehyton PK 45 | 1-Propanaminium, 3-amino-N-(carboxymethyl)-N,N-dimethyl-, N-(C8-18 and C18-unsaturated acyl) derivatives, hydroxides, inner salts; amphoteric surfactant from BASF | 3% |

(continued)

| | | |
|---|---|---|
| Deionat | Deionized water | ad 100% |

The samples were contaminated with a bacterial mix consisting of:

*Escherichia coli DSM* 1576
*Alcaligenes faecalis* DSM 13644
*Pseudomonas aeruginosa* ATCC 15442
*Staphylococcus aureus* ATCC 6538
*Burkholderia cepacia* DSM 7288
*Pseudomonas putida* DSM 12735

The samples were inoculated with the bacterial mix at day 0 and 7 to obtain 10E+06 to 10E+07 CFU/ml inoculation in the test sample and stored at 25°C for 21 days. CFU was determined before re-inoculation at day 7 and on days 14 and 21.

Any CFU value at day 7 (d7), day 14 (d14) or day 21 (d21) obtained with a sample according to the invention containing 2-phenoxyethanol and α-hydroxyketone (MDW + 1.0% PE + x% α-hydroxyketone; in table 1.3 also 0.75% PE) lower than the respective value of the "comparative 2" example (MDW + 1.0% by weight of 2-phenoxyethanol) indicates a better performance.

Table 1.1: Hydroxyacetone as α-hydroxyketone

| | | d7 [CFU/ml] | d14 [CFU/ml] | d21 [CFU/ml] |
|---|---|---|---|---|
| MDW - Reference | | >100,000 | >100,000 | >100,000 |
| MDW + 4.0% Hydroxyacetone - Comparative 1a | | >100,000 | >100,000 | >100,000 |
| MDW + 6.0% Hydroxyacetone - Comparative 1b | | n.d. | >100,000 | >100,000 |
| MDW + 1.0% Phenoxyethanol (PE) - Comparative 2 | | >100,000 | >100,000 | >100,000 |
| MDW + 1.0% PE + x% of Hydroxyacetone | | | | |
| 4% Hydroxyacetone | 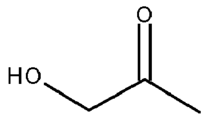 | <10 | <10 | <10 |
| 6% Hydroxyacetone | 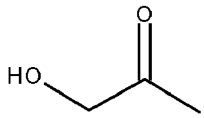 | <10 | <10 | <10 |

The results show that the combination of 2-phenoxyethanol and hydroxyacetone overadditively enhances the preservative activity of 2-phenoxyethanol alone.

Table 1.2: 4-Hydroxy-3-hexanone (propioin) as α-hydroxyketone

| | d7 [CFU/ml] | d14 [CFU/ml] | d21 [CFU/ml] |
|---|---|---|---|
| MDW - Reference | >100,000 | >100,000 | >100,000 |
| MDW + 2.0% 4-Hydroxy-3-hexanone - Comparative 1 | >100,000 | >100,000 | >100,000 |
| MDW + 1.0% Phenoxyethanol (PE) - Comparative 2 | >100,000 | >100,000 | >100,000 |

(continued)

| | | | | |
|---|---|---|---|---|
| MDW + 1.0% PE + x% of 4-Hydroxy-3-hexanone | | | | |
| 1.0% 4-Hydroxy-3-hexanone | 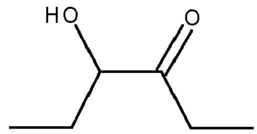 | 39,000 | 15,000 | 700 |
| 1.5% 4-Hydroxy-3-hexanone | 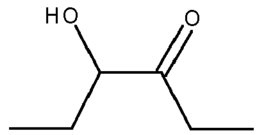 | 10,000 | 12,500 | 350 |
| 2.0% 4-Hydroxy-3-hexanone | 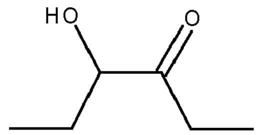 | <10 | 4,400 | 200 |

The results show that the combination of 2-phenoxyethanol and 4-hydroxy-3-hexanone (propioin) overadditively enhances the preservative activity of 2-phenoxyethanol alone.

Table 1.3: 2-Hydroxy-1-phenylethan-1-one as α-hydroxyketone

| | | d7 [CFU/ml] | d14 [CFU/ml] | d21 [CFU/ml] |
|---|---|---|---|---|
| MDW - Reference | | >100,000 | >100,000 | >100,000 |
| MDW + 1.0% 2-Hydroxy-1-phenylethan-1-one - Comparative 1 | | >100,000 | >100,000 | >100,000 |
| MDW + 1.0% Phenoxyethanol (PE) - Comparative 2 | | >100,000 | >100,000 | >100,000 |
| MDW + 1.0% PE + x% of 2-Hydroxy-1-phenylethan-1-one | | | | |
| 1.0% PE + 1.0% 2-Hydroxy-1-phenylethan-1-one | 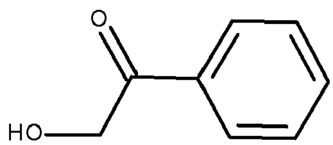 | <10 | <10 | <10 |
| 1.0% PE + 0.75% 2-Hydroxy-1-phenylethan-1-one | 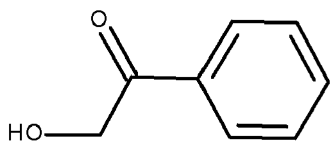 | 20 | 890 | 95 |
| 0.75% PE + 1.0% 2-Hydroxy-1-phenylethan-1-one | 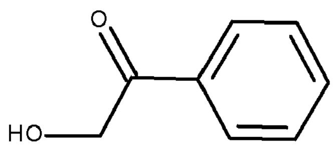 | <10 | 10 | <10 |

The results show that the combination of 2-phenoxyethanol and 2-hydroxy-1-phenylethan-1-one overadditively enhances the preservative activity of 2-phenoxyethanol alone.

Example 2 Antimicrobial activity against fungi

2.1 Preservative activity in a manual dishwashing composition using 2-phenoxyethanol (PE) as antimicrobial agent

A manual dish wash detergent (MWD) of pH 7.1 containing the following components was used:

| | | |
|---|---|---|
| Texapon K 12 G | Sodium lauryl sulfate; anionic surfactant from BASF | 3.5% |
| Glucopon 600 CSUP | $C_{10}$-$_{16}$-alkyl polyglycoside; non-ionic surfactant | 5% |
| Texapon N 701 | Sodium laureth sulfate; anionic surfactant from BASF | 5% |
| Dehyton PK 45 | 1-Propanaminium, 3-amino-N-(carboxymethyl)-N,N-dimethyl-, N-(C8-18 and C18-unsaturated acyl) derivatives, hydroxides, inner salts; amphoteric surfactant from BASF | 3% |
| Deionat | Deionized water | ad 100% |

The samples were contaminated with a fungal mix consisting of:

*Aspergillus brasiliensis* DSM 1988
*Rhodotorula mucilaginosa* DSM 13621
*Yarrowia lipolytica* DSM 8218

The samples were inoculated with the fungal mix at day 0 and 7 to obtain 1 - 3 ×10E+05 CFU/ml inoculation in the test sample consisting of the above-defined dish wash detergent MDW and stored at 25°C for 21 days. CFU was determined before re-inoculation at day 7, and on days 14 and 21.

Any CFU value at d7, d14 or d21 obtained with a MDW sample of the invention containing 2-phenoxyethanol and α-hydroxyketone (MDW + 1.0% PE + x% of α-hydroxyketone) lower than the respective value of the "comparative 2" example (MDW + 1.0% by weight of 2-Phenoxyethanol) indicates a better performance of the inventive combination of 2-phenoxyethanol with the α-hydroxyketone.

Table 2.1: 1-Hydroxy-butan-2-one as α-hydroxyketone

| | | d7 [CFU/ml] | d14 [CFU/ml] | d21 [CFU/ml] |
|---|---|---|---|---|
| MDW - Reference | | >100,000 | >100,000 | >100,000 |
| MDW +0.5% 1-Hydroxy-butan-2-one - Comparative 1a | | 40,000 | >100,000 | 81,000 |
| MDW + 1.0% 1-Hydroxy-butan-2-one - Comparative 1b | | 4,500 | 42,000 | 9,500 |
| MDW + 1.0% Phenoxyethanol (PE) - Comparative 2 | | >100,000 | >100,000 | >100,000 |
| MDW + 1.0% PE + x% of 1-Hydroxy-butan-2-one | | | | |
| 0.5% 1-Hydroxy-butan-2-one | 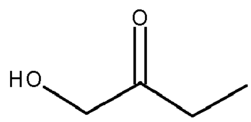 | 1,100 | 42,000 | 300 |
| 1 % 1-Hydroxy-butan-2-one | 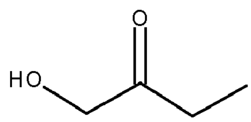 | <10 | <10 | <10 |

The results show that the combination of 2-phenoxyethanol and 1-hydroxy-butan-2-one overadditively enhances the preservative activity of any of these components when used alone.

## Claims

1. The use of an α-hydroxyketone of the formula (I)

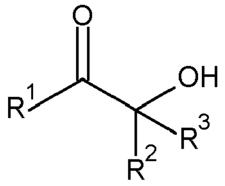

(I)

wherein

$R^1$ is $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy; and
$R^2$ and $R^3$, independently of each other, are hydrogen, $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy;

for enhancing the antimicrobial, preferably the preserving, activity of an antimicrobial agent selected from the group consisting of 2-phenoxyethanol, phenoxyisopropanol, 4,4'-dichloro 2'-hydroxydiphenylether, 2-bromo-2-nitropropane-1,3-diol, glutaraldehyde, 2,4-dichlorobenzylalcohol, 1,3,5-tris-(2-hydroxyethyl)-1,3,5-hexahydrotriazine, formic acid and salts thereof, benzoic acid and salts thereof, sorbic acid and salts thereof, lactic acid and salts thereof, isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT), and 2-butyl-benzo[d]isothiazol-3-one (BBIT); 3-iodo-2-propynylbutylcarbamate (IPBC), benzyl alcohol, pyridine-2-thiol 1-oxide and salts thereof; 2,2-dibromo-2-cyanoacetamide (DBNPA), N-(3-aminopropyl)-N-dodecylpropane-1,3-diamine (Diamine), tetrakis(hydroxymethyl)phosphonium sulphate(2:1) (THPS), 2,2-dithiobis[N-methylbenzamide] (DTBMA), 2-bromo-2-(bromomethyl)pentanedinitril (DBDCB); and mixtures thereof.

**2.** The use of a mixture comprising

(a) at least one antimicrobial agent selected from the group consisting of 2-phenoxyethanol, phenoxyisopropanol, 4,4'-dichloro 2'-hydroxydiphenylether, 2-bromo-2-nitropropane-1,3-diol, glutaraldehyde, 2,4-dichlorobenzylalcohol, 1,3,5-tris-(2-hydroxyethyl)-1,3,5-hexahydrotriazine, formic acid and salts thereof, benzoic acid and salts thereof, sorbic acid and salts thereof, lactic acid and salts thereof, isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT), and 2-butyl-benzo[d]isothiazol-3-one (BBIT); 3-iodo-2-propynylbutylcarbamate (IPBC), benzyl alcohol, pyridine-2-thiol 1-oxide and salts thereof; 2,2-dibromo-2-cyanoacetamide (DBNPA), N-(3-aminopropyl)-N-dodecylpropane-1,3-diamine (Diamine), tetrakis(hydroxymethyl)phosphonium sulphate(2:1) (THPS), 2,2-dithiobis[N-methylbenzamide] (DTBMA), 2-bromo-2-(bromomethyl)pentanedinitril (DBDCB); and mixtures thereof; and
(b) at least one $\alpha$-hydroxyketone of the formula (I)

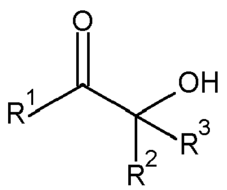

(I)

wherein

$R^1$ is $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy; and
$R^2$ and $R^3$, independently of each other, are hydrogen, $C_1$-$C_4$-alkyl or phenyl, where phenyl may carry 1, 2 or 3 substituents selected from the group consisting of halogen, $C_1$-$C_4$-alkyl, $C_1$-$C_4$-haloalkyl, $C_1$-$C_4$-alkoxy and $C_1$-$C_4$-haloalkoxy;

for combating microbes; preferably as a preservative.

**3.** The use according to any of the preceding claims, where the antimicrobial agent is selected from the group consisting

of 2-phenoxyethanol, phenoxyisopropanol, 4,4'-dichloro 2'-hydroxydiphenylether, 2-bromo-2-nitropropane-1,3-diol and isothiazolinones selected from the group consisting of 1,2-benzisothiazol-3(2H)-one (BIT), 2-methyl-2H-isothiazol-3-one (MIT), 2-octyl-2H-isothiazol-3-one (OIT), 5-chloro-2-methyl-2H-isothiazol-3-one (CMIT) and 2-butyl-benzo[d]isothiazol-3-one (BBIT); and preferably from the group consisting of 2-phenoxyethanol, phenoxyisopropanol, 4,4'-dichloro 2'-hydroxydiphenylether, 2-bromo-2-nitropropane-1,3-diol and 1,2-benzisothiazol-3(2H)one (BIT).

**4.** The use according to claim 3, where the antimicrobial agent is selected from the group consisting of 2-phenoxyethanol, 4,4'-dichloro 2'-hydroxydiphenylether and 1,2-benzisothiazol-3(2H)one (BIT).

**5.** The use according to claim 4, where the antimicrobial agent is 2-phenoxyethanol.

**6.** The use according to any of the preceding claims, where in the $\alpha$-hydroxyketone of the formula (I)

$R^1$ is $C_1$-$C_4$-alkyl or phenyl;
$R^2$ is hydrogen, $C_1$-$C_4$-alkyl or phenyl; and
$R^3$ is hydrogen or $C_1$-$C_4$-alkyl;

where preferably

$R^1$ is $C_1$-$C_4$-alkyl or phenyl;
$R^2$ is hydrogen or $C_1$-$C_4$-alkyl; and
$R^3$ is hydrogen or $C_1$-$C_4$-alkyl;

where more preferably

$R^1$ is $C_1$-$C_2$-alkyl or phenyl;
$R^2$ is hydrogen or $C_1$-$C_2$-alkyl; and
$R^3$ is hydrogen or $C_1$-$C_2$-alkyl.

**7.** The use according to claim 6, where

$R^1$ is $C_1$-$C_2$-alkyl or phenyl;
$R^2$ is hydrogen or $C_1$-$C_2$-alkyl; and
$R^3$ is hydrogen;

where preferably

$R^1$ is $C_1$-$C_2$-alkyl or phenyl;
$R^2$ is hydrogen or ethyl; and
$R^3$ is hydrogen.

**8.** The use according to any of the preceding claims, where the antimicrobial agent and the $\alpha$-hydroxyketone of the formula (I) are used in an overall weight ratio of from 50:1 to 1:50, preferably from 20:1 to 1:20, more preferably from 10:1 to 1:10, even more preferably from 5:1 to 1:10, in particular from 4:1 to 1:8, more particularly from 3:1 to 1:7, specifically from 2:1 to 1:6.

**9.** The use according to any of the preceding claims, in a composition selected from the group consisting of antimicrobial concentrates, homecare compositions, compositions for cleaning or disinfecting on an industrial scale, personal care compositions, process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide; compositions for treating leather; compositions for treating textiles during the manufacturing process thereof; compositions for treating lumber; compositions for treating paper or the precursor material during papermaking processes; crop protection compositions; paints, glues, adhesives, sealants, dyes, pigments and dispersions thereof, inks, and wet wipes, or as a preservative for said composition.

**10.** A composition comprising

(a) at least one antimicrobial agent as defined in any of claims 1 to 5; and
(b) at least one $\alpha$-hydroxyketone of the formula (I) as defined in any of claims 1 and 6 to 7;
except for hair dyeing, hair straightening and hair styling compositions which comprise 2-phenoxyethanol and hydroxyacetone; or which comprise 2-phenoxyethanol and 1-hydroxy-2-butanone; or which comprise benzyl alcohol and acetoine; or which comprise benzyl alcohol and benzoine;
in particular except for compositions which comprise 2-phenoxyethanol and hydroxyacetone; or which comprise 2-phenoxyethanol and 1-hydroxy-2-butanone; or which comprise benzyl alcohol and acetoine; or which comprise benzyl alcohol and benzoine.

**11.** The composition according to claim 10, where the antimicrobial agent and the $\alpha$-hydroxyketone of the formula (I) are present in an overall weight ratio of from 50:1 to 1:50, preferably from 20:1 to 1:20, more preferably from 10:1 to 1:10, even more preferably from 5:1 to 1:10, in particular from 4:1 to 1:8, more particularly from 3:1 to 1:7, specifically from 2:1 to 1:6.

**12.** The composition according to any of claims 10 to 11, which is selected from the group consisting of antimicrobial concentrates, homecare compositions, compositions for cleaning or disinfecting on an industrial scale, personal care compositions, process water, water in fish or shrimp ponds, water in drinking troughs, metal working fluids; water based raw materials, polymer solutions, polymer dispersions, polymer emulsions, inorganic slurries, organic slurries, surfactant compositions; compositions for treating animal hide; compositions for treating leather; compositions for treating textiles during the manufacturing process thereof; compositions for treating lumber; compositions for treating paper or the precursor material during papermaking processes; crop protection compositions; paints, glues, adhesives, sealants, dyes, pigments and dispersions thereof, inks, and wet wipes.

**13.** The composition according to claim 12, where the composition is an antimicrobial concentrate, comprising

(a) 0.1 to 99.9% by weight, relative to the total weight of the composition, of at least one antimicrobial agent as defined in any of claims 1 to 5;
(b) 0.1 to 99.9% by weight, relative to the total weight of the composition, of at least one $\alpha$-hydroxyketone of the formula (I) or a mixture of different $\alpha$-hydroxyketones of the formula (I) as defined in any of claims 1 and 6 to 7;
(c) 0 to 20% by weight, relative to the total weight of the composition, of at least one further additive;
(d) 0 to 99.8% by weight, relative to the total weight of the composition, of at least one organic solvent; and
(e) 0 to 99.8% by weight, relative to the total weight of the composition, of water;
where components (a) to (e) add to 100% by weight;
or where the composition is a homecare composition; preferably selected from the group consisting of dishwashing compositions, laundry compositions, surface cleaning compositions, non-cosmetic deodorants, disinfectants, surface protecting and/or polishing compositions, and rug shampoos; and in particular selected from the group consisting of dishwashing compositions, laundry compositions, surface cleaning compositions, and rug shampoos;
where the homecare composition preferably comprises

(a) 0.001 to 7% by weight, relative to the total weight of the composition, of at least one antimicrobial agent as defined in any of claims 1 to 5;
(b) 0.001 to 10% by weight, relative to the total weight of the composition, of at least one $\alpha$-hydroxyketone of the formula (I) or a mixture of different $\alpha$-hydroxyketone of the formula (I) as defined in any of claims 1 and 6 to 7;
(c) 0.1 to 40% by weight, relative to the total weight of the composition, of at least one surfactant;
(d) 0 to 15% by weight, relative to the total weight of the composition, of at least one organic solvent;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of a further additive; and
(i) 10 to 99.998% by weight, relative to the total weight of the composition, of water;

where components (a) to (i) add to 100% by weight.

**14.** A homecare composition or composition for cleaning or disinfecting on an industrial scale, comprising

(a) 0.001 to 7% by weight, relative to the total weight of the composition, of at least one antimicrobial agent as defined in any of claims 1 to 5;
(b) 0.001 to 10% by weight, relative to the total weight of the composition, of at least one $\alpha$-hydroxyketone of the formula (I) or a mixture of different $\alpha$-hydroxyketone of the formula (I) as defined in any of claims 1 and 6 to 7;
(c) 0.1 to 40% by weight, relative to the total weight of the composition, of at least one surfactant;
(d) 0 to 15% by weight, relative to the total weight of the composition, of at least one organic solvent;
(e) 0 to 6% by weight, relative to the total weight of the composition, of at least one enzyme;
(f) 0 to 20% by weight, relative to the total weight of the composition, of at least one sequestrant;
(g) 0 to 8% by weight, relative to the total weight of the composition, of at least one defoamer and/or foam stabilizer;
(h) 0 to 50% by weight, relative to the total weight of the composition, of at least one further additive; and
(i) 10 to 99.998% by weight, relative to the total weight of the composition, of water;

where components (a) to (i) add to 100% by weight.

**15.** A mixture consisting of

(a) at least one antimicrobial agent as defined in any of claims 1 to 5;
(b) at least one $\alpha$-hydroxyketone of the formula (I) as defined in any of claims 1 and 6 to 7; and
(c) optionally a solvent.

Europäisches Patentamt
European Patent Office
Office européen des brevets

# EUROPEAN SEARCH REPORT

Application Number
EP 22 21 3898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 349 509 A (TONGCHENG YUJIN PLASTIC PACKAGING CO LTD) 25 January 2017 (2017-01-25) * paragraphs [0001], [0004], [0010] - [0018] * * examples 1-4 * | 2,3,6, 8-13 | INV. A01N35/02 A01N35/04 A01N39/00 A01N31/16 A01N35/08 A01N31/04 A01N43/66 A01N37/10 A01N37/06 A01N47/12 A01N43/40 A01N37/34 A01N33/04 A01N57/20 A01N37/08 A01P1/00 A01P3/00 |
| X | CN 110 339 255 A (GUANGZHOU BANMU NETWORK TECH CO LTD) 18 October 2019 (2019-10-18) * abstract * * paragraphs [0002], [0004], [0014] - [0019] * * examples 1-4 * | 10-14 | |
| X | US 6 528 040 B1 (PEARSON MAURINE [US] ET AL) 4 March 2003 (2003-03-04) * abstract * * column 1, line 65 - column 2, line 27 * * column 7, lines 10-16 * * column 8, line 45 - column 9, line 28; claims 1, 11 * | 10-13 | TECHNICAL FIELDS SEARCHED (IPC) |
| X | DATABASE STN CHEMICAL ABSTRACT [Online] XP002107316, retrieved from STN CHEMICAL ABSTRACT Database accession no. 111:83876 * abstract * | 10-12 | A01N A01P |
| Y | US 2010/249166 A1 (NEAS EDWIN DEAN [US] ET AL) 30 September 2010 (2010-09-30) * abstract * * figure 4 * * paragraphs [0009], [0027], [0062] - [0063] * * claims 41-42 * | 1-15 | |

-/--

The present search report has been drawn up for all claims

1

| Place of search | Date of completion of the search | Examiner |
|---|---|---|
| Munich | 31 May 2023 | Hateley, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 21 3898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JAY JAMES M. ET AL: "ANTIMICROBIAL ACTIVITY OF SOME FOOD FLAVORING COMPOUNDS", JOURNAL OF FOOD SAFETY, vol. 6, no. 2, 1 June 1984 (1984-06-01), pages 129-139, XP093049596, United States ISSN: 0149-6085, DOI: 10.1111/j.1745-4565.1984.tb00609.x * abstract * * Acetoin; page 130; table 1 * * figure 1; tables 2-3 * ----- | 1-15 | |
| Y | MYRVIK QUENTIN N. ET AL: "COMPARATIVE STUDY OF THE ANTIBACTERIAL PROPERTIES OF ASCORBIC ACID AND REDUCTOGENIC COMPOUNDS", JOURNAL OF BACTERIOLOGY, vol. 68, no. 5, 1 November 1954 (1954-11-01), pages 622-626, XP093049663, US ISSN: 0021-9193, DOI: 10.1128/jb.68.5.622-626.1954 * abstract * * page 623; table 1 * ----- -/-- | 1-15 | TECHNICAL FIELDS SEARCHED (IPC) |

The present search report has been drawn up for all claims

1

| Place of search | Date of completion of the search | Examiner |
|---|---|---|
| Munich | 31 May 2023 | Hateley, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 21 3898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LIDÉN CAROLA ET AL: "Preservatives in non-cosmetic products: Increasing human exposure requires action for protection of health", CONTACT DERMATITIS: ENVIRONMENTAL AND OCCUPATIONAL DERMATITIS, vol. 87, no. 5, 18 July 2022 (2022-07-18), pages 389-405, XP093049906, US ISSN: 0105-1873, DOI: 10.1111/cod.14181 Retrieved from the Internet: URL:https://onlinelibrary.wiley.com/doi/full-xml/10.1111/cod.14181> * abstract * * page 391 - page 392; table 1 * ----- | 1-15 | |
| A | US 2001/001665 A1 (HARBECK MARIE [US]) 24 May 2001 (2001-05-24) * abstract * * paragraphs [0002], [0006], [0042], [0060], [0158]; claims 1,4 * ----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 31 May 2023 | Hateley, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 21 3898

This annex lists the patent family members relating to the patent documents cited in the above-mentioned European search report. The members are as contained in the European Patent Office EDP file on
The European Patent Office is in no way liable for these particulars which are merely given for the purpose of information.

31-05-2023

| Patent document cited in search report | Publication date | Patent family member(s) | Publication date |
|---|---|---|---|
| CN 106349509 A | 25-01-2017 | NONE | |
| CN 110339255 A | 18-10-2019 | NONE | |
| US 6528040 B1 | 04-03-2003 | AT 393572 T | 15-05-2008 |
| | | AU 2002324481 B2 | 06-03-2008 |
| | | CA 2459974 A1 | 06-03-2003 |
| | | EP 1425381 A2 | 09-06-2004 |
| | | JP 2005505543 A | 24-02-2005 |
| | | NZ 531880 A | 30-06-2006 |
| | | US 6528040 B1 | 04-03-2003 |
| | | WO 03018743 A2 | 06-03-2003 |
| US 2010249166 A1 | 30-09-2010 | US 2010249166 A1 | 30-09-2010 |
| | | US 2013309132 A1 | 21-11-2013 |
| US 2001001665 A1 | 24-05-2001 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2473152 A
- WO 2018017390 A
- WO 2017096015 A
- WO 2017096005 A
- FR 2949339
- FR 2949335
- FR 2949334
- FR 2949333
- EP 1921147 A
- WO 2016096711 A
- WO 2014183920 A
- WO 2014183921 A
- US 5869438 A
- WO 201501009 A
- WO 9117244 A
- WO 9502675 A
- WO 2004053039 A
- WO 2018184767 A
- WO 9324622 A
- WO 2008009673 A
- WO 2019081724 A
- WO 2019081721 A
- WO 2017060493 A
- EP 897904 A
- WO 03075663 A
- WO 9846608 A
- WO 9941255 A
- WO 03004465 A
- EP 462456 A


### Non-patent literature cited in the description


- **NEEDLEMAN ; WUNSCH.** *J. Mol. Biol.,* 1979, vol. 48, 443-453
- Catalogue of pesticide formulation types and international coding system. Technical Monograph. CropLife International, May 2008
- **MOLLET ; GRUBEMANN.** Formulation technology. Wiley VCH, 2001
- New developments in crop protection product formulation. **KNOWLES.** Agrow Reports DS243. T&F Informa, 2005
- **MCCUTCHEON.** Emulsifiers & Detergents. 2008, vol. 1
- Adjuvants and additives. **KNOWLES.** Agrow Reports DS256. T&F Informa UK, 2006